(19) Europäisches Patentamt
European Patent Office
Office européen des brevets

(11) EP 3 483 973 B1

(12) EUROPEAN PATENT SPECIFICATION

(45) Date of publication and mention of the grant of the patent:
**13.10.2021 Bulletin 2021/41**

(21) Application number: **17830765.8**

(22) Date of filing: **16.06.2017**

(51) Int Cl.:
***H01M 10/0567*** *(2010.01)* ***H01M 10/0525*** *(2010.01)*
***H01G 9/20*** *(2006.01)* ***H01G 11/60*** *(2013.01)*
***H01G 11/62*** *(2013.01)* ***H01G 11/64*** *(2013.01)*
*H01G 11/06 (2013.01)* *H01M 4/66 (2006.01)*
*H01M 10/0568 (2010.01)* *H01M 10/0569 (2010.01)*

(86) International application number:
**PCT/JP2017/022243**

(87) International publication number:
**WO 2018/016245 (25.01.2018 Gazette 2018/04)**

# (54) ELECTROLYTE SOLUTION, ELECTROCHEMICAL DEVICE, SECONDARY BATTERY, AND MODULE

ELEKTROLYTLÖSUNG, ELEKTROCHEMISCHE VORRICHTUNG, SEKUNDÄRBATTERIE UND MODUL

SOLUTION ÉLECTROLYTIQUE, DISPOSITIF ÉLECTROCHIMIQUE, BATTERIE SECONDAIRE, ET MODULE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.07.2016 JP 2016144389**

(43) Date of publication of application:
**15.05.2019 Bulletin 2019/20**

(60) Divisional application:
**21159886.7 / 3 849 009**

(73) Proprietor: **Daikin Industries, Ltd.**
**Osaka-shi, Osaka 530-8323 (JP)**

(72) Inventors:
- **SAKATA, Hideo**
  **Osaka-shi**
  **Osaka 530-8323 (JP)**
- **YAMAZAKI, Shigeaki**
  **Osaka-shi**
  **Osaka 530-8323 (JP)**
- **ARIMA, Hiroyuki**
  **Osaka-shi**
  **Osaka 530-8323 (JP)**
- **TAKAHASHI, Kenzou**
  **Osaka-shi**
  **Osaka 530-8323 (JP)**
- **KINOSHITA, Shinichi**
  **Osaka-shi**
  **Osaka 530-8323 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 926 172** **EP-A1- 2 312 685**
**EP-A1- 2 983 233** **WO-A1-2013/191475**
**WO-A1-2016/009923** **CN-A- 101 867 065**
**JP-A- 2004 087 459** **JP-A- 2007 173 113**
**JP-A- 2015 072 856** **JP-A- 2015 088 492**
**JP-A- 2016 035 820** **KR-A- 20160 002 313**
**US-A1- 2015 200 423**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 483 973 B1

## Description

TECHNICAL FIELD

The invention relates to electrolyte solutions, electrochemical devices, secondary batteries, and modules.

BACKGROUND ART

Current electric appliances demonstrate a tendency to have a reduced weight and a smaller size, which leads to development of lithium ion secondary batteries having a high energy density. Further, lithium ion secondary batteries are used in more various fields, and thus are desired to have improved battery performance. The battery performance of lithium ion secondary batteries will become a more and more important factor particularly when the batteries are put in use for automobiles.

EP-A-2 312 685 (JP-B-5274563) discloses a mixed-type non-aqueous electrolyte solution for lithium ion secondary batteries with a low initial battery resistance. This non-aqueous electrolyte solution for lithium ion secondary batteries contains 0.01-15 mass% of an organosilicon compound represented by the following formula [1] and 0.1-3 mol/l of a fluorine-containing alkali metal salt which serves as an electrolyte, wherein the content of a fluorinated organosilicon compound generated by reaction of the organosilicon compound and the fluorine-containing alkali metal salt is ≤ 0.2 mass%,

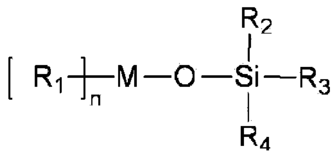

[1]

wherein M is a metal atom, P, B, or P=O; $R_1$ each independently is $C_{1-11}$-alkyloxy, a silyloxy group, or $C_{1-11}$-alkylsilyloxy; n is the number of $R_1$ that are bonded to M, and is equal to the oxidation number of (M-1) or the oxidation number of (M-3); and $R_2$-$R_4$ each independently are $C_{1-11}$-alkyl, $C_{1-11}$-alkenyl, $C_{1-11}$-alkyloxy, or $C_{6-11}$-aryl.

JP-B-4568920 discloses a non-aqueous electrolyte solution for non-aqueous electrolyte solution secondary batteries with good cycle performance. This non-aqueous electrolyte solution is used for non-aqueous electrolyte solution secondary batteries that include an electrode assembly of a negative electrode and a positive electrode capable of occluding and releasing lithium and facing each other via a separator, a non-aqueous electrolyte solution, and a housing containing the assembly and the electrolyte solution, wherein a positive electrode current collector and a portion in contact with the non-aqueous electrolyte solution among portions electrically coupled with the positive electrode current collector are formed from a valve metal or an alloy thereof. Also, this non-aqueous electrolyte solution is produced by dissolving $LiPF_6$ as a lithium salt in a non-aqueous solvent selected from the group consisting of cyclic carbonates, acyclic carbonates, lactone, acyclic carboxylates, cyclic ethers, acyclic ethers, and sulfur-containing compounds, the non-aqueous solvent containing 0.1-30 wt% of vinylene carbonate that is produced by dehydrochlorination of chloroethylene carbonate and contains 1 ppm to 50 wt% of an organic halide derived from the chloroethylene carbonate.

JP-A-2004-087459 discloses a non-aqueous electrolyte solution secondary battery satisfying high input/output performance and good high-temperature cycle performance and a non-aqueous electrolyte solution used therein. This non-aqueous electrolyte solution for lithium secondary batteries contains a silicon compound represented by the following formula (1):

$$SiF_xR^1{}_1R^2{}_mR^3{}_n \qquad (1)$$

wherein $R^1$-$R^3$ each independently are a $C_{1-12}$-organic group; x is 1-3; and 1, m, and n are each 0-3 with 1 ≤ (1 + m + n) ≤ 3.

KR-A-2016-0002313 discloses an electrolyte for a lithium secondary battery, which electrolyte comprises lithium alkyl sulfate, preferably those including a $C_{4-20}$-alkyl group, and more preferably a $C_{4-12}$-alkyl group, such as lithium hexyl sulfate or lithium dodecyl sulfate.

EP-A-2 983 233 relates to a nonaqueous electrolytic solution having an electrolyte salt dissolved in a nonaqueous solvent, and comprising a compound of the formula $L^1$-O-S(=O)$_2$-OLi (I) or $L^2$-[O-S(=O)$_2$-Oli]$_p$ (II), wherein $L^1$ is $C_{1-4}$-alkyl, $C_{2-12}$-alkoxyalkyl, $C_{6-12}$-aryl, $C_{2-7}$-alkenyl, $C_{3-8}$-alkynyl, linear or cyclic $C_{3-18}$-ester group, a S-containing $C_{1-6}$-organic group, a Si-containing $C_{4-10}$-organic group, a cyano group-containing $C_{2-7}$-organic group, a P-containing $C_{2-12}$-organic group, -P(=O)$F_2$, $C_{2-7}$-alkylcarbonyl or $C_{7-13}$-arylcarbonyl, $L^2$ is a p-valent hydrocarbon connecting group which may contain an ether bond, a thioether bond, or an -S(=O)$_2$ bond, and p is an integer of 2-4.

US-A-2015/200423 describes a secondary battery comprising a cathode; an anode; and a non-aqueous electrolytic solution, wherein the cathode includes an electrode compound which absorbs and releases an electrode reactant at a potential of ≥4.5 V (potential vs. Li), and the non-aqueous electrolytic solution includes a silyl compound wherein at least one group $SiR_3$—O— (R each being an optionally halogenated monovalent hydrocarbon group) is bonded with an atom other than silicon.

EP-A-1 926 172 addresses an electrolyte for a rechargeable lithium battery, comprising a compound of the formula $A[OSi(C_mH_{2m+1})_3]_3$ (1), wherein A is P or B, and m is an integer of 0-6; a lithium salt; and a non-aqueous organic solvent.

WO 2013/191475 is concerned with a non-aqueous electrolyte containing an organosilicon compound of the formula $R^1R^2R^3SiF$ (1) wherein $R^1$-$R^3$ each independently are $C_{1-4}$-alkyl.

JP-A-2015-088492 defines a non-aqueous electrolyte containing an electrolyte and a non-aqueous solvent, and comprising at least one compound of the formula $R^1R^2N\text{-}S(=O)_2\text{-}OR^3$ (1) wherein $R^1$-$R^3$ each independently are H or a $C_{1-12}$-hydrocarbon group optionally containing a hetero atom, and $R^1$-$R^3$ may be bonded to each other to form a ring.

JP-A-2007-173113 discloses a non-aqueous electrolyte secondary battery including a positive electrode, a negative electrode, and a non-aqueous electrolyte includes at least one sulfate ester compound and at least one phosphoric acid silyl ester compound, and the positive electrode active material contained in the positive electrode is a composite oxide $Li_xMn_aNi_bCo_cO_d$ having a layered $\alpha$-$NaFeO_2$-type crystal structure ($0 < x < 1.3$, $(a+b+c) = 1$, and $1.7 \leqq d \leqq 2.3$) .

CN-A-101 867 065 relates to a flame-retardant electrolyte solution , which is made up of (A) lithium salts, (B) carbonates and/or ether organic solvent, (C) flame-retardant additive and (D) other functional additives, wherein the flame-retardant additive (C) is at least one specified, silane group(s)-containing esters of phosphoric or phosphorous acid.

WO 2016/009923 describes an electrolytic solution comprising a solvent, an electrolyte salt, and at least one compound of the formula $R^{11}\text{-}X^{11}\text{-}SO_3M^{11}$ (1) or $R^{21}R^{22}N\text{-}SO_3M^{21}$ (2), wherein $R^{11}$, $R^{21}$ and $R^{22}$ each independently are $C_{1-6}$-alkyl, $C_{2-6}$-alkenyl, $C_{2-6}$-alkynyl, $C_{3-6}$-cycloalkyl, $C_{3-6}$-cycloalkenyl, or $C_{3-6}$-alkylsilyl optionally substituted by halogen; $X^{11}$ is O or S; $C_{1-6}$-alkyl, $C_{2-6}$-alkenyl, and $R^{21}$ and $R^{22}$ may be bonded to each other to form a ring; and $M^{11}$ and $M^{21}$ each are at least one of Li, Na, K and Cs.

JP-A-2015-072856 relates to a non-aqueous electrolyte comprising a non-aqueous solvent; a first lithium salt having a boron atom and being a compound of a specified formula (1) or (2); a second lithium salt having no boron atom; and a compound of the formula $SiFR^3R^4R^5$ (3) or $SiF_2R^6R^7$ (4), wherein $R^3$-$R^7$ each independently are optionally substituted $C_{1-10}$-hydrocarbon groups.

JP-A-2016-035820 discloses an electrolytic solution for nonaqueous electrolyte battery, comprising a non-aqueous solvent, a solute, at least one first compound containing B, P or Si and having structure of a specified general formula (1), and at least one second compound of the formula $SiR^3_xR^4_{4-x}$ (2) wherein $R^3$ each independently is a group having a carbon-carbon unsaturated bond, $R^4$ each independently is F, alkyl, alkoxy, alkenyl, alkenyloxy, alkynyl, alkynyloxy, aryl or aryloxy, and may contain F and/or O; and x is 2-4.

## SUMMARY OF INVENTION

### - Technical Problem

The invention provides an electrolyte solution that can provide an electrochemical device such as a lithium secondary battery or a module having a small IV resistance value (internal resistance) and excellent cycle performance.

The invention also provides an electrochemical device such as a lithium secondary battery or a module having a small IV resistance value (internal resistance) and excellent cycle performance.

### - Solution to Problem

The inventors found that combination of at least two compounds can achieve the above objects, completing the invention.

Specifically, the invention relates to an electrolyte solution comprising

(i) a solvent;
(ii) an electrolyte salt;
(iii) at least one compound (X) of formula (2):

$$R^{21}R^{22}N\text{-}SO_3M^{21} \qquad (2)$$

wherein

$M^{21}$ is at least one of Li, Na, K, and Cs; and
$R^{21}$ and $R^{22}$ each independently are $C_{1-6}$-alkyl, $C_{2-6}$-alkenyl, or $C_{2-6}$-alkynyl, each linear or branched; $C_{3-6}$-cycloalkyl; $C_{3-6}$-cycloalkenyl or $C_{3-6}$-alkylsilyl; and the alkyl, cycloalkyl and alkylsilyl group each optionally contain a halogen atom substituting a hydrogen atom binding to a carbon atom, and optionally have a cyclic structure; and $R^{21}$ and $R^{22}$ optionally bind to each other to form a cyclic structure; and

(iv) at least one organosilicon compound of any of the formulae (3) and (4)

$$(R^{31})_{n31}\text{-}M^{31}\text{-O-Si}R^{32}R^{33}R^{34} \quad (3)$$

$$R^{41}R^{42}R^{43}\text{-Si-F} \quad (4)$$

wherein

$M^{31}$ is a metal atom, P, B or P=O;
$R^{31}$ each independently is $C_{1-11}$-alkyloxy, silyloxy or $C_{1-11}$-alkylsilyloxy;
$_{n}31$ is the number of $R^{31}$s binding to $M^{31}$, and is the oxidation number of $M^{31}$ minus 1 or the oxidation number of $M^{31}$ minus 3;
$R^{32}$-$R^{34}$each independently are $C_{1-11}$-alkyl, $C_{2-11}$-alkenyl, $C_{1-11}$-alkyloxy or $C_{6-11}$-aryl, and
$R^{41}$-$R^{43}$each independently are $C_{1-11}$-alkyl, $C_{2-11}$-alkenyl, $C_{1-11}$-alkyloxy or $C_{6-11}$-aryl.

The invention further relates to an electrochemical device as well as to a secondary battery, each comprising the present electrolyte solution, and yet further to a module comprising the present electrochemical device or secondary battery.

Preferred embodiments of the invention are as defined in the appended dependent claims and/or in the following detailed description.

- Advantageous Effects of Invention

The electrolyte solution of the invention can provide an electrochemical device such as a lithium secondary battery or a module having a small IV resistance value (internal resistance) and excellent cycle performance.

The electrochemical device, the secondary battery, and the module of the invention each have a small IV resistance value (internal resistance) and excellent cycle performance.

DESCRIPTION OF EMBODIMENTS

The invention will be specifically described hereinbelow.

The electrolyte solution of the invention contains a solvent, an electrolyte salt, at least one compound (X) selected from a compound of formula (2), and at least one organosilicon compound selected from the compounds of formula (3) and (4).

The compound of formula (2) is represented by $R^{21}R^{22}N\text{-}SO_3M^{21}$ (2)
wherein $M^{21}$ is at least one of Li, Na, K, and Cs; and $R^{21}$ and $R^{22}$ each independently are $C_{1-6}$-alkyl, $C_{2-6}$-alkenyl, or $C_{2-6}$-alkynyl, each linear or branched; $C_{3-6}$-cycloalkyl; $C_{3-6}$-cycloalkenyl or $C_{3-6}$-alkylsilyl; and the alkyl, cycloalkyl and alkylsilyl group each optionally contain a halogen atom substituting a hydrogen atom binding to a carbon atom, and optionally have a cyclic structure; and $R^{21}$ and $R^{22}$ optionally bind to each other to form a cyclic structure.

In formula (2), preferably, $R^{21}$ and $R^{22}$ each independently are linear or branched $C_{1-6}$-alkyl or $C_{3-6}$-cycloalkyl, and $M^{21}$ is Li. Preferably, the alkyl group or the cycloalkyl group contains no halogen atom that substitutes for a hydrogen atom binding to a carbon atom, has no cyclic structure, and contains neither an ether bond nor a thioether bond.

In formula (2), $M^{21}$ is at least one of Li, Na, K, and Cs, and is preferably Li.

Examples of the compound of formula (2) include $(CH_3)_2NSO_3Li$, $(C_2H_5)_2NSO_3Li$, $(CH_3)(C_2H_5)NSO_3Li$, $(C_3H_7)_2NSO_3Li$, $(C_3H_7)(CH_3)NSO_3Li$, $(C_3H_7)(C_2H_5)NSO_3Li$, $(C_4H_9)_2NSO_3Li$, and $(C_5H_{11})_2NSO_3Li$. Preferred among these is at least one of $(CH_3)_2NSO_3Li$ and $(C_2H_5)_2NSO_3Li$.

To provide an electrochemical device having a much smaller IV resistance value and much better cycle performance, the electrolyte solution preferably contains 0.001-5 mass% of the compound (X) relative to the solvent. The amount of the compound (X) is more preferably 0.05-2 mass%.

The organosilicon compound is at least one compound of any of the formulae (3) and (4).

The following describes the compound of formula (3):

$$(R^{31})_{n31}\text{-}M^{31}O\text{-}SiR^{32}R^{33}R^{34} \quad (3)$$

wherein $M^{31}$ is a metal atom, P, B or P=O; $R^{31}$ each independently is $C_{1-11}$-alkyloxy, silyloxy or $C_{1-11}$-alkylsilyloxy; $n^{31}$ is the number of $R^{31}$s binding to $M^{31}$, and is the oxidation number of $M^{31}$ minus 1 or the oxidation number of $M^{31}$ minus 3; and $R^{32}$-$R^{34}$ each independently are $C_{1-11}$-alkyl, $C_{2-11}$-alkenyl, $C_{1-11}$-alkyloxy or $C_{6-11}$-aryl.

Examples of $M^{31}$ include Mg, B, Al, Si, P, P=O, Sc, Ti, V, Cr, Mn, Fe, Co, Ni, Cu, Zn, Ge, Sn, Y, Zr, and Nb. Preferred is Al, B, P, P=O, Ti, or Zr, more preferred is B, P, or P=O.

Examples of $R^{31}$ include methoxy, ethoxy, propoxy, isopropoxy, n-butoxy, sec-butoxy, tert-butoxy, pentoxy, hexyloxy, phenoxy, trimethylsilyloxy, triethylsilyloxy, trimethoxysilyloxy, and triethoxysilyloxy groups. Preferred are methoxy, ethoxy, propoxy, isopropoxy, n-butoxy, and trimethylsilyloxy.

Examples of $R^{32}$-$R^{34}$ include methyl, ethyl, vinyl, propyl, isopropyl, 1-propenyl, 2-propenyl, 1-propynyl, 2-propynyl, n-butyl, isobutyl, sec-butyl, t-butyl, 1-butenyl, 2-butenyl, 3-butenyl, 2-methyl-2-propenyl, 1-methylenepropyl, 1-methyl-2-propenyl, 1,2-dimethylvinyl, 1-butynyl, 2-butynyl, 3-butynyl, pentyl, 1-methylbutyl, 2-methylbutyl, 3-methylbutyl, 1-methyl-2-methylpropyl, 2,2-dimethylpropyl, phenyl, methylphenyl, ethylphenyl, pentamethylphenyl, methoxy, ethoxy, propoxy, isopropoxy, n-butoxy, isobutoxy, sec-butoxy, tert-butoxy, pentoxy, hexyloxy, and phenoxy.

To achieve good solubility, $R^{32}$-$R^{34}$ are each preferably $C_{\leq 4}$-alkyl or $C_{\leq 4}$-oxyalkyl, specifically preferably methyl, ethyl, propyl, isopropyl, n-butyl, isobutyl, sec-butyl, methoxy, ethoxy, propoxy, isopropoxy, n-butoxy, isobutoxy, or sec-butoxy group, more preferably methyl.

Examples of the compound of formula (3) include the following compounds:

magnesium bis(trimethylsiloxide), tris(trimethylsilyl) borate, tris(trimethoxysilyl) borate, tris(triethylsilyl) borate, tris(triethoxysilyl) borate, tris(dimethylvinylsilyl) borate, tris(diethylvinylsilyl) borate, aluminum tris(trimethylsiloxide), dimethoxyaluminoxytrimethylsilane, dimethoxyaluminoxytrimethoxysilane,
diethoxyaluminoxytrimethylsilane,
diethoxyaluminoxytriethoxysilane,
dipropyloxyaluminoxytrimethylsilane,
dibutoxyaluminoxytrimethylsilane,
dibutoxyaluminoxytrimethoxysilane,
dibutoxyaluminoxytriethylsilane,
dibutoxyaluminoxytriethoxysilane,
dipropoxyaluminoxytriethoxysilane,
dibutoxyaluminoxytripropylsilane,
dibutoxyaluminoxytrimethoxysilane,
dibutoxyaluminoxytriethoxysilane,
dibutoxyaluminoxytripropyloxysilane,
dibutoxyaluminoxytriphenoxysilane, tris(trimethylsilyl) phosphate, tris(triethylsilyl) phosphate,
tris(tripropylsilyl) phosphate, tris(triphenylsilyl) phosphate, tris(trimethoxysilyl) phosphate,
tris(triethoxysilyl) phosphate, tris(triphenoxysilyl) phosphate, tris(dimethylvinylsilyl) phosphate,
tris(diethylvinylsilyl) phosphate, scandium tris(trimethylsiloxide), titanium tetrakis(trimethylsiloxide), titanium tetrakis(triethylsiloxide), titanium tetrakis(trimethoxysiloxide), titanium oxybis(trimethylsiloxide), vanadium oxytris(trimethylsiloxide), zinc bis(trimethylsiloxide), germanium tetrakis(trimethylsiloxide), tin tetrakis(trimethylsiloxide), yttrium tris(trimethylsiloxide), zirconium tetrakis(trimethylsiloxide), niobium pentakis(trimethylsiloxide), tris(trimethylsilyl) phosphite, tris(triethylsilyl) phosphite, tris(tripropylsilyl) phosphate, tris(triphenylsilyl) phosphite, tris(trimethoxysilyl) phosphite, tris(triethoxysilyl) phosphite,
tris(triphenoxysilyl) phosphite, tris(dimethylvinylsilyl) phosphite, and tris(diethylvinylsilyl) phosphite.

Preferred are tris(trimethylsilyl) borate, tris(trimethoxysilyl) borate, tris(trimethylsilyl) phosphate, tris(trimethoxysilyl) phosphate,

dimethoxyaluminoxytrimethoxysilane,
diethoxyaluminoxytriethoxysilane,
dipropoxyaluminoxytriethoxysilane,
dibutoxyaluminoxytrimethoxysilane,
dibutoxyaluminoxytriethoxysilane, titanium
tetrakis(trimethylsiloxide), titanium
tetrakis(triethylsiloxide), tris(trimethylsilyl) phosphite, and tris(triethylsilyl) phosphite.

In the compound of formula (3), preferably, $M^{31}$ is P=O or P, $R^{31}$ is $C_{1-4}$-alkylsilyloxy, $_{n}{}^{31}$ is 2, and $R^{32}$-$R^{34}$ are

each $C_{1-4}$-alkyl.

The electrolyte solution may contain one compound of formula (3) or two or more compounds of formula (3).

The following describes the compound of formula (4):

$$R^{41}R^{42}R^{43}\text{-Si-F} \qquad (4)$$

wherein $R^{41}$-$R^{43}$ $R^{41}$-$R^{43}$ each independently are $C_{1-11}$-alkyl, $C_{2-11}$-alkenyl, $C_{1-11}$-alkyloxy or $C_{6-11}$-aryl.

Examples of $R^{41}$-$R^{43}$ include methyl, ethyl, vinyl, propyl, isopropyl, 1-propenyl, 2-propenyl, 1-propynyl, 2-propynyl, n-butyl, isobutyl, sec-butyl, t-butyl, 1-butenyl, 2-butenyl, 3-butenyl, 2-methyl-2-propenyl, 1-methylenepropyl, 1-methyl-2-propenyl, 1,2-dimethylvinyl, 1-butynyl, 2-butynyl, 3-butynyl, pentyl, 1-methylbutyl, 2-methylbutyl, 3-methylbutyl, 1-methyl-2-methylpropyl, 2,2-dimethylpropyl, phenyl, methylphenyl, ethylphenyl, pentamethylphenyl, methoxy, ethoxy, propoxy, isopropoxy, n-butoxy, isobutoxy, sec-butoxy, tert-butoxy, pentoxy, hexyloxy, and phenoxy.

To achieve good solubility, $R^{41}$-$R^{43}$ are each preferably $C_{\leq 4}$-alkyl or $C_{\leq 4}$-alkyloxy, specifically preferably methyl, ethyl, propyl, isopropyl, n-butyl, isobutyl, sec-butyl, methoxy, ethoxy, propoxy, isopropoxy, n-butoxy, isobutoxy, or sec-butoxy, more preferably methyl.

Examples of the compound of formula (4) include the following compounds:
trimethylsilyl fluoride, triethylsilyl fluoride, tripropylsilyl fluoride, tributylsilyl fluoride, tri-tert-butylsilyl fluoride, dimethylethylsilyl fluoride, dimethylpropylsilyl fluoride, dimethylbutylsilyl fluoride, methyl diethylsilyl fluoride, methyl dipropylsilyl fluoride, methyl dibutylsilyl fluoride, methyl di-tert-butylsilyl fluoride, diethylpropylsilyl fluoride, diethylbutylsilyl fluoride, diethyl tert-butylsilyl fluoride, ethyldipropylsilyl fluoride, ethyldibutylsilyl fluoride, ethyl di-tert-butylsilyl fluoride, propyldibutylsilyl fluoride, and propyl di-tert-butylsilyl fluoride.

Preferred are trimethylsilyl fluoride, triethylsilyl fluoride, dimethyl ethylsilyl fluoride, and methyl diethylsilyl fluoride.

The electrolyte solution may contain one compound of formula (4) or two or more compounds of formula (4).

To provide an electrochemical device having a much smaller IV resistance value and much better cycle performance, the electrolyte solution preferably contains 0.001-5 mass% of the organosilicon compound relative to the solvent. The amount of the organosilicon compound is more preferably $\geq$ 0.01 mass%, still more preferably $\geq$ 0.3 mass%, particularly preferably $\geq$ 0.5 mass%, while more preferably $\leq$ 2 mass%.

The electrolyte solution of the invention contains a solvent. The solvent is preferably a non-aqueous solvent and the electrolyte solution of the invention is preferably a non-aqueous electrolyte solution.

The solvent preferably contains a carbonate.

The solvent preferably contains a cyclic carbonate and an acyclic carbonate.

The cyclic carbonate may be a non-fluorinated cyclic carbonate or may be a fluorinated cyclic carbonate.

The acyclic carbonate may be a non-fluorinated acyclic carbonate or may be a fluorinated acyclic carbonate.

The solvent preferably contains at least one selected from the group consisting of a non-fluorinated saturated cyclic carbonate, a fluorinated saturated cyclic carbonate, a fluorinated acyclic carbonate, and a non-fluorinated acyclic carbonate. In particular, the solvent more preferably contains at least one selected from the group consisting of a fluorinated saturated cyclic carbonate and a fluorinated acyclic carbonate.

Examples of the non-fluorinated saturated cyclic carbonate include ethylene carbonate (EC), propylene carbonate (PC), and butylene carbonate.

To achieve a high permittivity and a suitable viscosity, the non-fluorinated saturated cyclic carbonate is preferably at least one compound selected from the group consisting of ethylene carbonate, propylene carbonate, and butylene carbonate.

The non-fluorinated saturated cyclic carbonate may include one of the above compounds or two or more thereof in combination.

The amount of the non-fluorinated saturated cyclic carbonate is preferably 0-99 vol%, more preferably 1-90 vol%, relative to the solvent.

The fluorinated saturated cyclic carbonate is a saturated cyclic carbonate with a fluorine atom attached thereto. A specific example thereof is a compound of formula (A) :

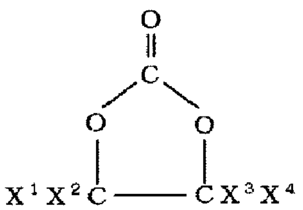

(A)

wherein $X^1$-$X^4$ each independently are -H, $-CH_3$, -F, fluoroalkyl which optionally has an ether bond, or fluoroalkoxy which optionally has an ether bond; at least one of $X^1$-$X^4$ is -F, fluoroalkyl optionally having an ether bond, or fluoroalkoxy optionally having an ether bond.

The presence of a fluorinated saturated cyclic carbonate in the electrolyte solution of the invention which is applied to a lithium ion secondary battery enables formation of a stable film on the negative electrode, sufficiently reducing side reactions of the electrolyte solution on the negative electrode. This can provide significantly stable, excellent charge and discharge performance.

The term "ether bond" herein means a bond represented by -O-.

To achieve a good permittivity and oxidation resistance, one or two of $X^1$ to $X^4$ is/are each preferably -F, fluoroalkyl optionally having an ether bond, or fluoroalkoxy optionally having an ether bond.

In anticipation of a decrease in the viscosity at low temperatures, an increase in the flash point, and improvement in the solubility of an electrolyte salt, $X^1$-$X^4$ are each preferably -H, -F, fluoroalkyl (a), fluoroalkyl (b) having an ether bond, or fluoroalkoxy (c).

The fluoroalkyl group (a) is an alkyl group in which at least one H is replaced by F. The fluoroalkyl group (a) preferably has a carbon number of 1-20, more preferably 2-17, still more preferably 2-7, particularly preferably 2-5.

Too large a carbon number may cause poor low-temperature performance and low solubility of the electrolyte salt. Too small a carbon number may cause low solubility of the electrolyte salt, low discharge efficiency, and a high viscosity, for example.

Examples of the fluoroalkyl group (a) having one carbon atom include $CFH_2$-, $CF_2H$-, and $CF_3$-.

To achieve good solubility of the electrolyte salt, a preferred example of the fluoroalkyl group (a) having two or more carbon atoms is a fluoroalkyl group of formula (a-1):

$R^1$-$R^2$- (a-1)

wherein $R^1$ is $C_{\geq 1}$-alkyl which optionally has a fluorine atom; $R^2$ is $C_{1-3}$-alkylene which optionally has a fluorine atom; and at least one selected from $R^1$ and $R^2$ has a fluorine atom.

$R^1$ and $R^2$ each may further contain an atom other than C, H and F.

$R^1$ is $C_{\geq 1}$-alkyl which optionally has a fluorine atom. $R^1$ is preferably linear or branched $C_{1-16}$-alkyl group. $R^1$ has more preferably 1-6, still more preferably 1-3, carbon atoms.

Specifically, for example, $CH_3$-, $CH_3CH_2$-, $CH_3CH_2CH_2$-, $CH_3CH_2CH_2CH_2$-, and groups of the following formulae may be mentioned as linear or branched alkyl groups for $R^1$:

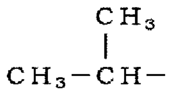 、 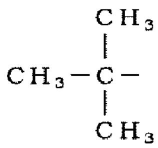

Examples of $R^1$ which is linear fluoroalkyl include $CF_3$-, $CF_3CH_2$-, $CF_3CF_2$-, $CF_3CH_2CH_2$-, $CF_3CF_2CH_2$-, $CF_3CF_2CF_2$-, $CF_3CH_2CF_2$-, $CF_3CH_2CH_2CH_2$-, $CF_3CF_2CH_2CH_2$-, $CF_3CH_2CF_2CH_2$-, $CF_3CF_2CF_2CH_2$-, $CF_3CF_2CF_2CF_2$-, $CF_3CF_2CH_2CF_2$-, $CF_3CH_2CH_2CH_2CH_2$-, $CF_3CF_2CH_2CH_2CH_2$-, $CF_3CH_2CF_2CH_2CH_2$-, $CF_3CF_2CF_2CH_2CH_2$-, $CF_3CF_2CF_2CF_2CH_2$-, $CF_3CF_2CH_2CF_2CH_2$-, $CF_3CF_2CH_2CH_2CH_2CH_2$-, $CF_3CF_2CF_2CF_2CH_2CH_2$-, $CF_3CF_2CH_2CF_2CH_2CH_2$-, $HCF_2$-, $HCF_2CH_2$-, $HCF_2CF_2$-, $HCF_2CH_2CH_2$-, $HCF_2CF_2CH_2$-, $HCF_2CH_2CF_2$-, $HCF_2CF_2CH_2CH_2$-, $HCF_2CH_2CF_2CH_2$-, $HCF_2CF_2CF_2CF_2$-, $HCF_2CF_2CH_2CH_2CH_2$-, $HCF_2CH_2CF_2CH_2CH_2$-, $HCF_2CF_2CF_2CF_2CH_2$-, $HCF_2CF_2CF_2CF_2CH_2CH_2$-, $FCH_2$-, $FCH_2CH_2$-, $FCH_2CF_2$-, $FCH_2CF_2CH_2$-, $FCH_2CF_2CF_2$-, $CH_3CF_2CH_2$-, $CH_3CF_2CF_2$-, $CH_3CF_2CH_2CF_2$-, $CH_3CF_2CF_2CF_2$-, $CH_3CH_2CF_2CF_2$-, $CH_3CF_2CH_2CF_2CH_2$-, $CH_3CF_2CF_2CF_2CH_2$-, $CH_3CF_2CF_2CH_2CH_2$-, $CH_3CH_2CF_2CF_2CH_2$-, $CH_3CF_2CH_2CF_2CH_2CH_2$-, $CH_3CF_2CH_2CF_2CH_2CH_2$-,$HCFClCF_2CH_2$-, $HCF_2CFClCH_2$-, $HCF_2CFClCF_2CFClCH_2$-, and $HCFClCF_2CFClCF_2CH_2$- .

Examples of $R^1$ which is branched fluoroalkyl include those of the following formulae.

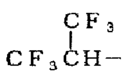 、 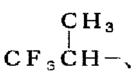 、 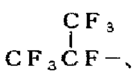 、 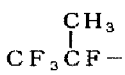 、

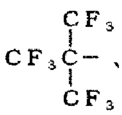 、 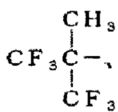 、 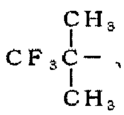 、

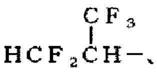 、 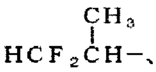 、 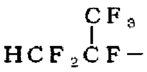 、 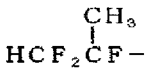 、

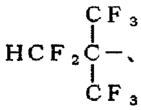 、 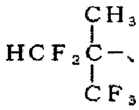 、 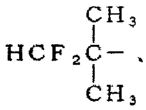 、

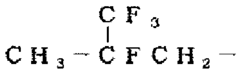 、 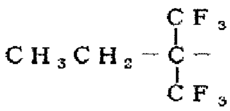 、

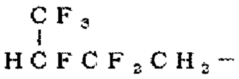 、 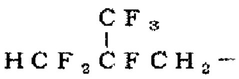 、 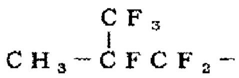 、

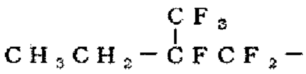 、 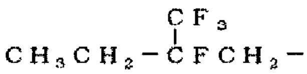 、

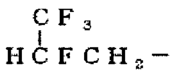 、 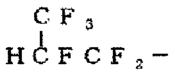 、 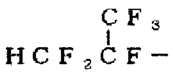 、

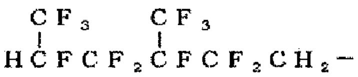 、 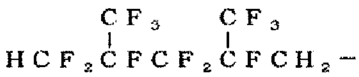 、

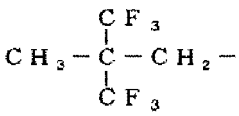

A group having a branch such as $CH_3$- or $CF_3$- is likely to cause high viscosity. Thus, the number of such branches is more preferably small (one) or zero.

$R^2$ is $C_{1-3}$-alkylene which optionally has a fluorine atom. $R^2$ may be linear or branched. Examples of a minimum structural unit constituting such a linear or branched alkylene group are shown below. $R^2$ is constituted by one or combination of these units.

(i) Linear minimum structural units
$-CH_2-$, $-CHF-$, $-CF_2-$, $-CHCl-$, $-CFCl-$, $-CCl_2-$

(ii) Branched minimum structural units

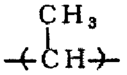 、 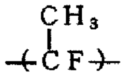 、 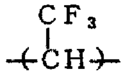 、 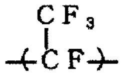 、

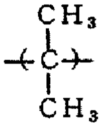 、 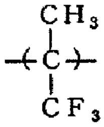 、 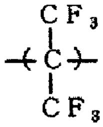 ,

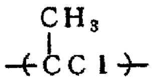 、 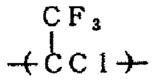

Preferred among these exemplified units are Cl-free structural units because such units are not dehydrochlorinated by a base, and thus are more stable.

$R^2$ which is a linear group consists only of any of the above linear minimum structural units, preferably $-CH_2-$, $-CH_2CH_2-$, or $-CF_2-$. To further improve the solubility of the electrolyte salt, $-CH_2-$ or $-CH_2CH_2-$ is more preferred.

$R^2$ which is a branched group includes at least one of the above branched minimum structural units. A preferred example thereof is a group represented by $-(CX^aX^b)-$ (wherein $X^a$ is H, F, $CH_3$, or $CF_3$; $X^b$ is $CH_3$ or $CF_3$; if $X^b$ is $CF_3$, $X^a$ is H or $CH_3$). Such a group can much further improve the solubility of the electrolyte salt.

For example, $CF_3CF_2-$, $HCF_2CF_2-$, $H_2CFCF_2-$, $CH_3CF_2-$, $CF_3CHF-$, $CF_3CF_2CF_2-$, $HCF_2CF_2CF_2-$, $H_2CFCF_2CF_2-$, $CH_3CF_2CF_2-$, and those of the following formulae may be mentioned as preferred examples of the fluoroalkyl group (a):

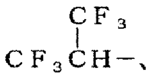 、 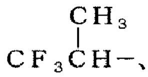 、 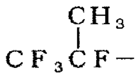 、

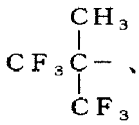 、 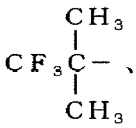 、

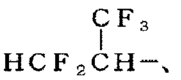 、 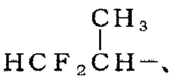 、 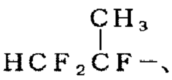 、

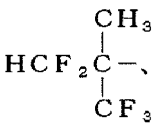 、 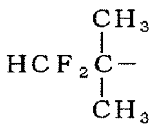 、

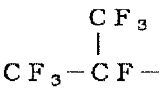 、 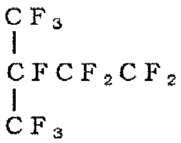 、

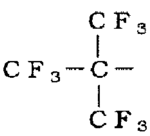 、

The fluoroalkyl group (b) having an ether bond is an alkyl group having an ether bond in which at least one H is replaced by F. The fluoroalkyl group (b) preferably has 2-17 carbon atoms. Too large a carbon number may cause high viscosity of the fluorinated saturated cyclic carbonate.

This may also cause the presence of many fluorine-containing groups, resulting in poor solubility of the electrolyte salt due to reduction in the permittivity, and poor compatibility with other solvents. Accordingly, the carbon number of the fluoroalkyl group (b) is preferably 2-10, more preferably 2-7.

The alkylene group which constitutes the ether moiety of the fluoroalkyl group (b) may be linear or branched alkylene. Examples of a minimum structural unit constituting such a linear or branched alkylene group are shown below.

(i) Linear minimum structural units

$-CH_2-$, $-CHF-$, $-CF_2-$, $-CHCl-$, $-CFCl-$, $-CCl_2-$

(ii) Branched minimum structural units

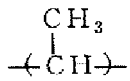, 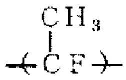, 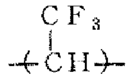, 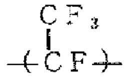,

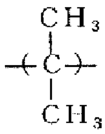, 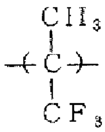, 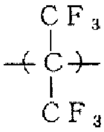,

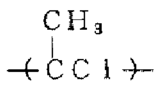, 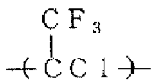

The alkylene group may be constituted by one of these minimum structural units, or may be constituted by multiple linear units (i), by multiple branched units (ii), or by a combination of a linear unit (i) and a branched unit (ii). Preferred examples will be mentioned in detail later.

Preferred among these exemplified units are Cl-free structural units because such units are not dehydrochlorinated by a base, and thus are more stable.

A still more preferred example of the fluoroalkyl group (b) having an ether bond is a group offormula (b-1): $R^3$-$(OR^4)_{n1}$- (b-1)
wherein $R^3$ is preferably $C_{1-6}$-alkyl which optionally has a fluorine atom; $R^4$ is preferably $C_{1-4}$-alkylene which optionally has a fluorine atom; n1 is an integer of 1-3; and at least one of $R^3$ and $R^4$ has a fluorine atom.

Examples of $R^3$ and $R^4$ include the following groups, and any appropriate combination of these groups can provide the fluoroalkyl group (b) of formula (b-1). Still, the groups are not limited thereto.

(1) $R^3$ is preferably represented by $X^c_3C$-$(R^5)_{n2}$-, wherein $X^c$ each independently is H or F; $R^5$ is $C_{1-5}$-alkylene which optionally has a fluorine atom; and n2 is 0 or 1.

If n2 is 0, $R^3$ may be $CH_3$-, $CF_3$-, $HCF_2$-, or $H_2CF$-, for example.

If n2 is 1, specific examples of $R^3$ which is a linear group include $CF_3CH_2$-, $CF_3CF_2$-, $CF_3CH_2CH_2$-, $CF_3CF_2CH_2$-, $CF_3CF_2CF_2$-, $CF_3CH_2CF_2$-, $CF_3CH_2CH_2CH_2$-, $CF_3CF_2CH_2CH_2$-, $CF_3CH_2CF_2CH_2$-, $CF_3CF_2CF_2CH_2$-, $CF_3CF_2CF_2CF_2$-, $CF_3CF_2CH_2CF_2$-, $CF_3CH_2CH_2CH_2CH_2$-, $CF_3CF_2CH_2CH_2CH_2$-, $CF_3CH_2CF_2CH_2CH_2$-, $CF_3CF_2CF_2CH_2CH_2$-, $CF_3CF_2CF_2CF_2CH_2$-, $CF_3CF_2CH_2CF_2CH_2$-, $CF_3CF_2CH_2CH_2CH_2CH_2$-, $CF_3CF_2CF_2CF_2CH_2CH_2$-, $CF_3CF_2CH_2CF_2CH_2CH_2$-, $HCF_2CH_2$-, $HCF_2CF_2$-, $HCF_2CH_2CH_2$-, $HCF_2CF_2CH_2$-, $HCF_2CH_2CF_2$-, $HCF_2CF_2CH_2CH_2$-, $HCF_2CH_2CF_2CH_2$-, $HCF_2CF_2CF_2CF_2$-, $HCF_2CF_2CH_2CH_2CH_2$-, $HCF_2CH_2CF_2CH_2CH_2$-, $HCF_2CF_2CF_2CF_2CH_2$-, $HCF_2CF_2CF_2CF_2CH_2CH_2$-, $FCH_2CH_2$-, $FCH_2CF_2$-, $FCH_2CF_2CH_2$-, $CH_3CF_2$-, $CH_3CH_2$-, $CH_3CF_2CH_2$-, $CH_3CF_2CF_2$-, $CH_3CH_2CH_2$-, $CH_3CF_2CH_2CF_2$-, $CH_3CF_2CF_2CF_2$-, $CH_3CH_2CF_2CF_2$-, $CH_3CH_2CH_2CH_2$-, $CH_3CF_2CH_2CF_2CH_2$-, $CH_3CF_2CF_2CF_2CH_2$-, $CH_3CF_2CF_2CH_2CH_2$-, $CH_3CH_2CF_2CF_2CH_2$-, $CH_3CF_2CH_2CF_2CH_2CH_2$-, $CH_3CH_2CF_2CF_2CH_2CH_2$-, and $CH_3CF_2CH_2CF_2CH_2CH_2$- .

If n2 is 1, those represented by the following formulae may be mentioned as examples of $R^3$ which is a branched group:

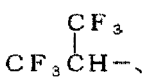, 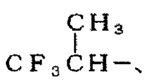, 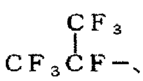, 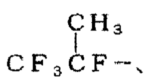,

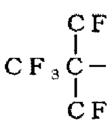, 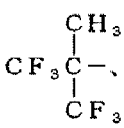, 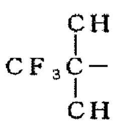, 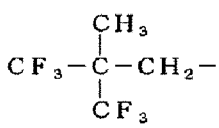,

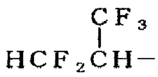, 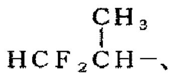, 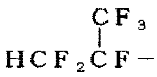, 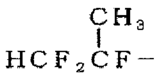,

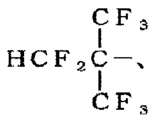、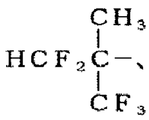、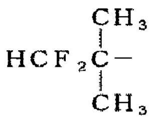

A group having a branch such as $CH_3$- or $CF_3$- is likely to cause high viscosity. Thus, $R^3$ is more preferably a linear group.

(2) In -$(OR^4)_{n1}$- of formula (b-1), n1 is an integer of 1-3, preferably 1 or 2. If n1 is 2 or 3, $R^4$s may be the same as or different from each other.

Preferred specific examples of $R^4$ include the following linear or branched groups.

Examples of the linear groups include $-CH_2-$, -CHF-, $-CF_2-$, $-CH_2CH_2-$, $-CF_2CH_2-$, $-CF_2CF_2-$, $-CH_2CF_2-$, $-CH_2CH_2CH_2-$, $-CH_2CH_2CF_2-$, $-CH_2CF_2CH_2-$, $-CH_2CF_2CF_2-$, $-CF_2CH_2CH_2-$, $-CF_2CF_2CH_2-$, $-CF_2CH_2CF_2-$, and $-CF_2CF_2CF_2-$.

Those represented by the following formulae may be mentioned as examples of the branched groups:

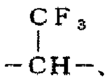、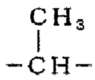、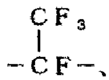、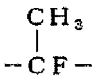、

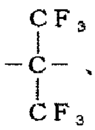、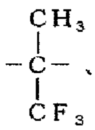、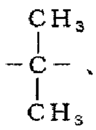、

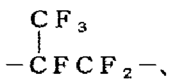、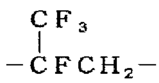、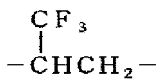、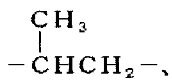、

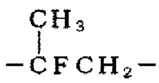、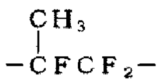、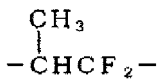、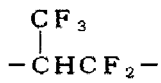

The fluoroalkoxy group (c) is an alkoxy group in which at least one H is replaced by F. The fluoroalkoxy group (c) preferably has a carbon number of 1-17, more preferably 1-6.

The fluoroalkoxy group (c) is particularly preferably represented by $X^d{}_3C-(R^6)_{n3}-O-$, wherein $X^d$ each independently is H or F; $R^6$ is preferably $C_{1-5}$-alkylene which optionally has a fluorine atom; n3 is 0 or 1; and any of the three $X^d$s contain a fluorine atom.

Specific examples of the fluoroalkoxy group (c) include fluoroalkoxy groups in which an oxygen atom binds to an end of an alkyl group mentioned as an example for $R^1$ in formula (a-1) .

The fluoroalkyl group (a), the fluoroalkyl group (b) having an ether bond, and the fluoroalkoxy group (c) in the fluorinated saturated cyclic carbonate each preferably have a fluorine content of ≥ 10 mass%. Too low a fluorine content may cause a failure in sufficiently achieving an effect of decreasing the viscosity at low temperature and an effect of increasing the flash point. Thus, the fluorine content is more preferably ≥ 12 mass%, still more preferably ≥ 15 mass%. The upper limit thereof is usually 76 mass%.

The fluorine content of each of the groups (a), (b) and (c) is a value calculated based on the corresponding structural formula by the following formula:

$$\{(\text{Number of fluorine atoms} \times 19)/(\text{formula weight of the group})\} \times 100\ (\%).$$

To achieve a good permittivity and oxidation resistance, the fluorine content in the whole fluorinated saturated cyclic carbonate is preferably ≥ 10 mass%, more preferably ≥ 15 mass%. The upper limit thereof is usually 76 mass%.

The fluorine content in the fluorinated saturated cyclic carbonate is a value calculated based on the structural formula of the fluorinated saturated cyclic carbonate by the following formula:

{(Number of fluorine atoms × 19)/(molecular weight of fluorinated saturated cyclic carbonate} × 100 (%).

Specific examples of the fluorinated saturated cyclic carbonate include the following.

Specific examples of the fluorinated saturated cyclic carbonate in which at least one of $X^1$-$X^4$ is -F include those of the following formulae:

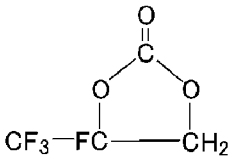 , 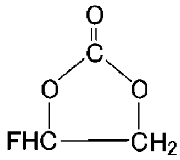 ,

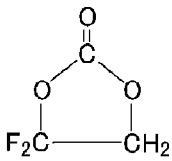 , 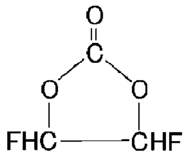 ,

These compounds have a high withstand voltage and give good solubility of the electrolyte salt.

Alternatively, those of the following formulae may also be used:

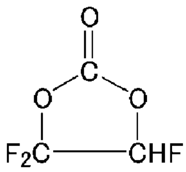 , 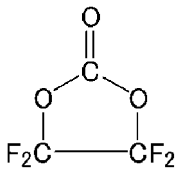 , 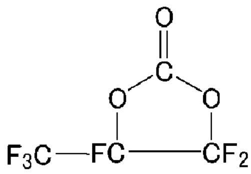 ,

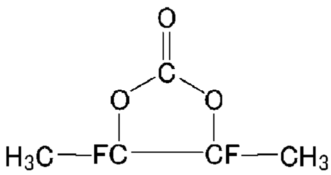 , 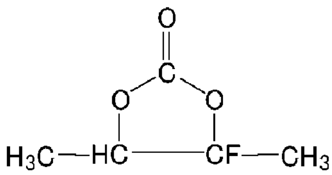

Those represented by the following formulae may be mentioned as specific examples of the fluorinated saturated cyclic carbonate in which at least one of $X^1$ to $X^4$ is a fluorinated alkyl group (a) and the others thereof are -H:

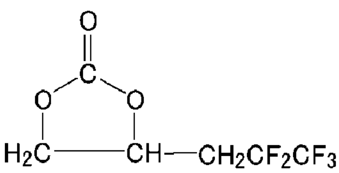 , 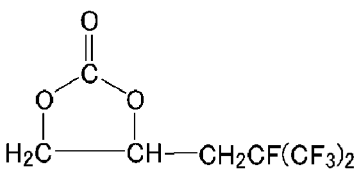 ,

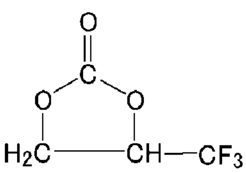 , 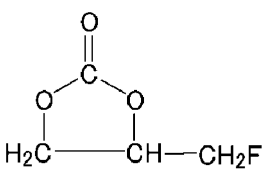 ,

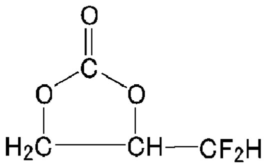 , 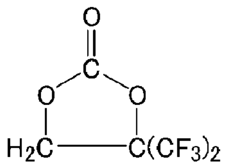 ,

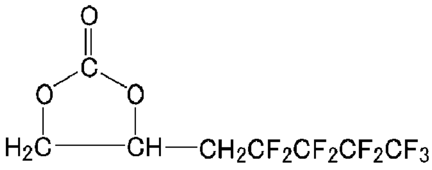 , 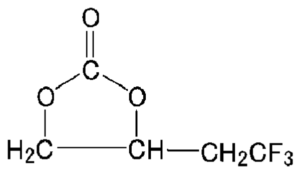

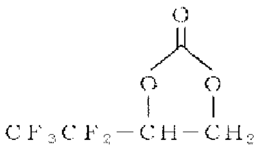 、

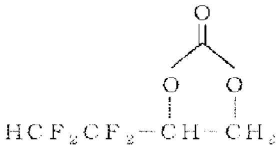 、 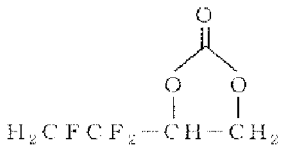 、

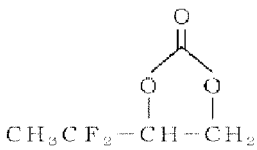 、

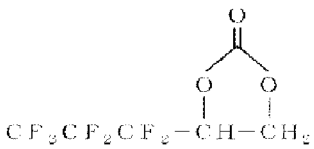 、

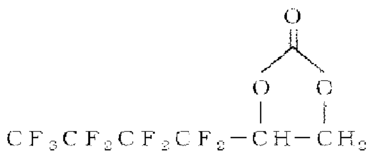 、

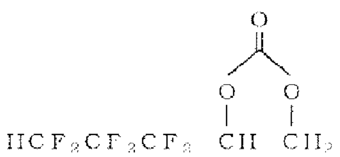 、

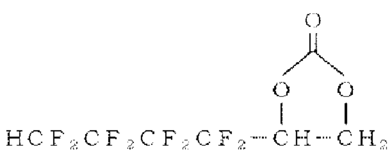 、

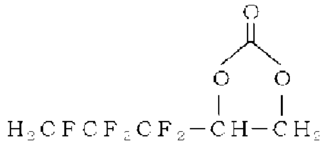 、

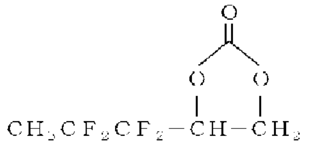 、

Those of the following formulae may be mentioned as specific examples of the fluorinated saturated cyclic carbonate in which at least one of $X^1$ to $X^4$ is a fluorinated alkyl group (b) having an ether bond or a fluorinated alkoxy group (c) and the others thereof are -H:

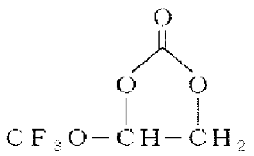 、 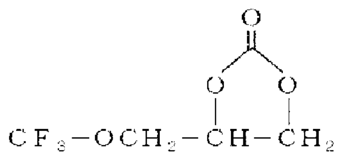 、

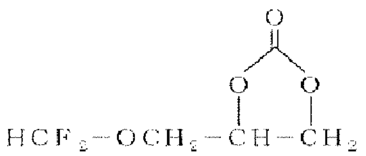 、 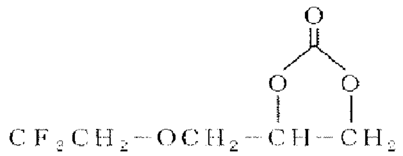 、

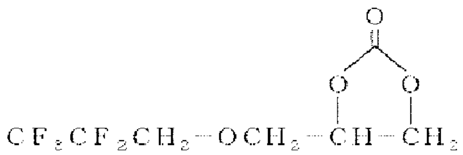 、

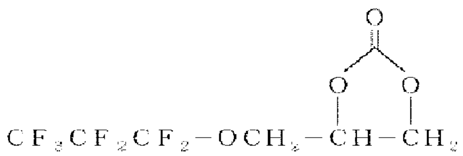 、

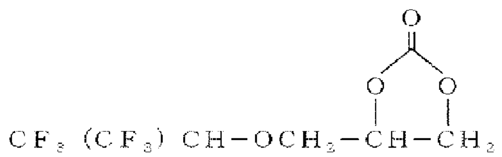 、

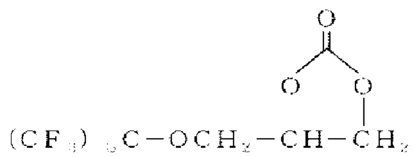 、

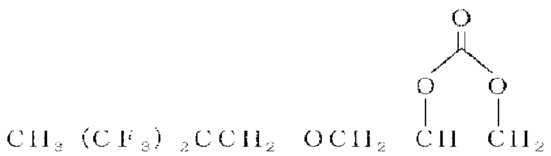 、

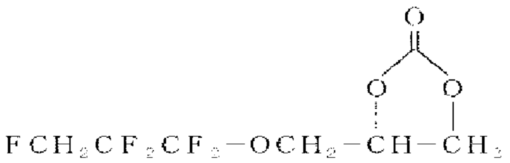 、

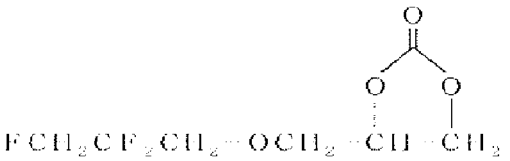 、

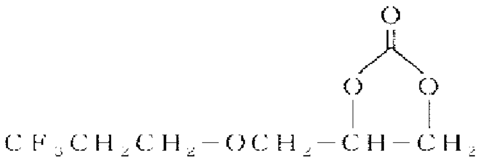 、

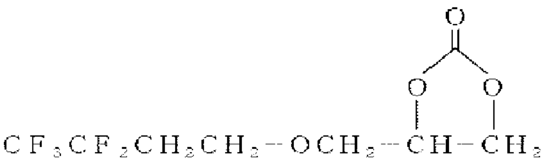 、

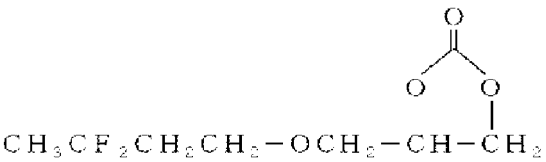 、

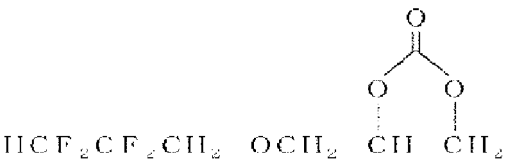 、

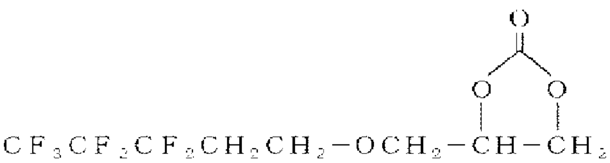 、

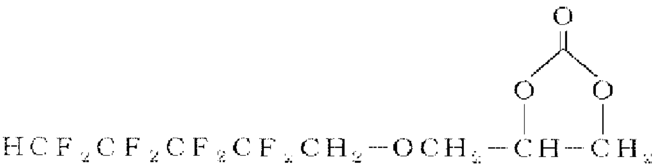 、

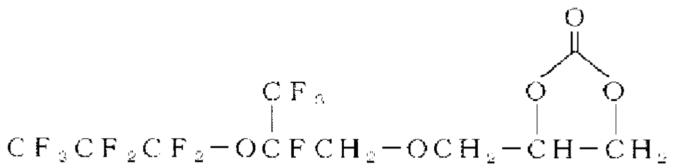
、

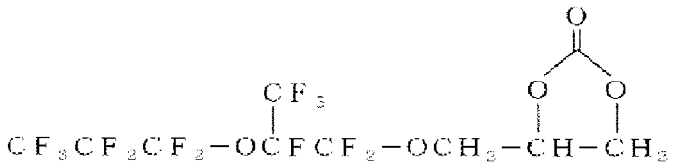
、

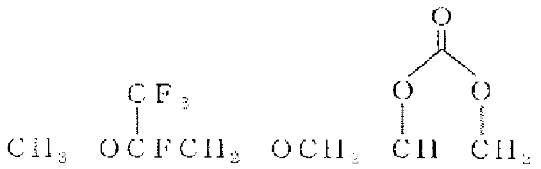
、

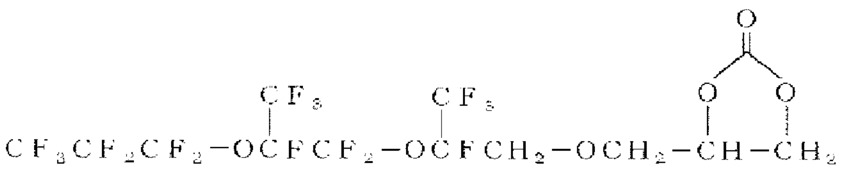
、

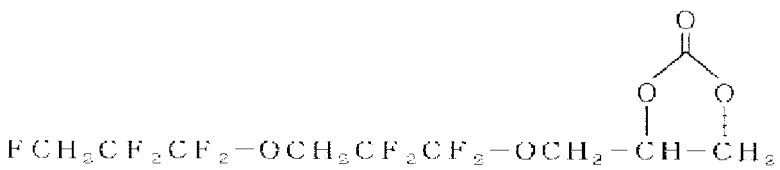
、

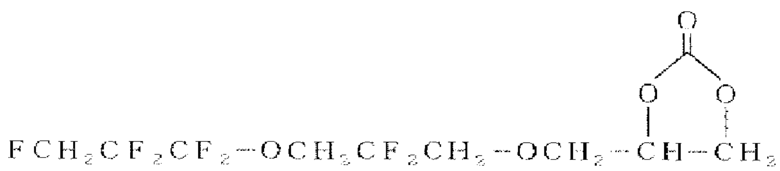
、

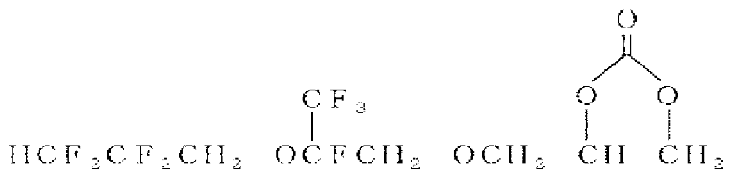
、

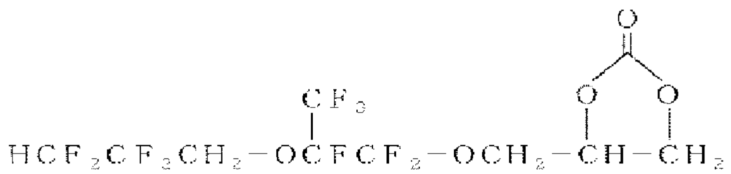
、

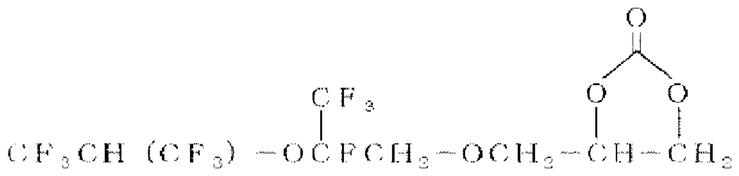 、

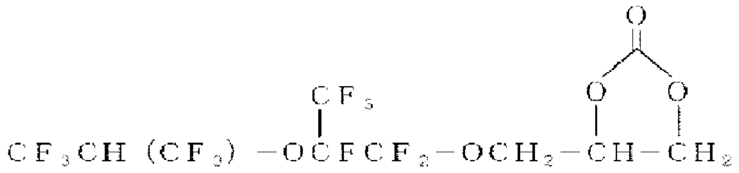 、

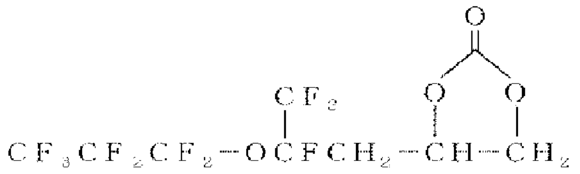 、

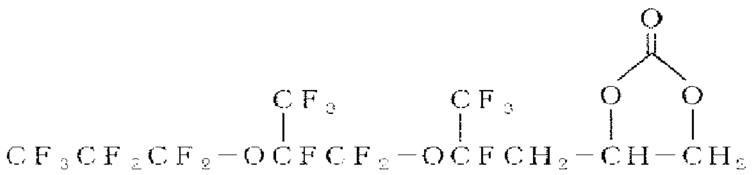 、

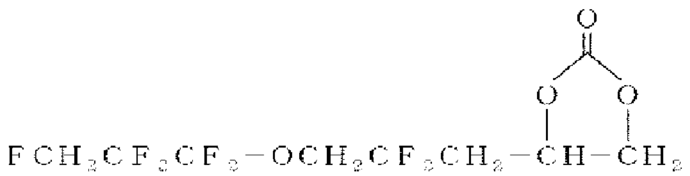 、

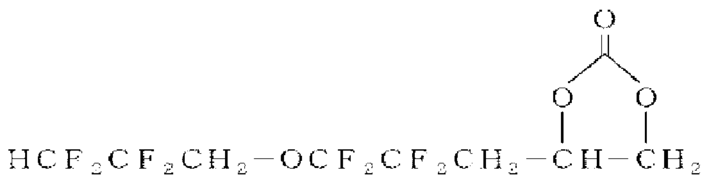 、

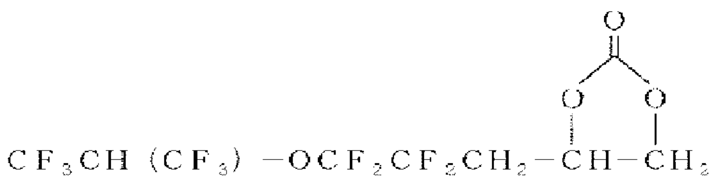 、

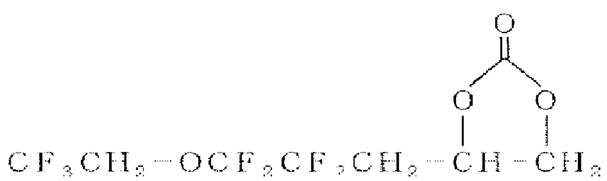 、

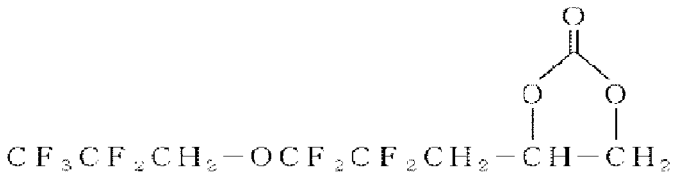
、

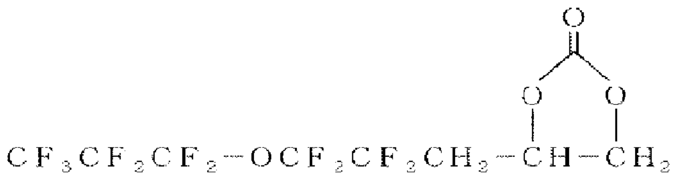
、

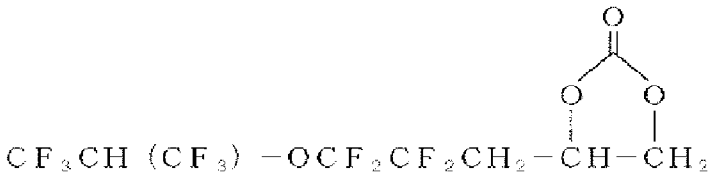
、

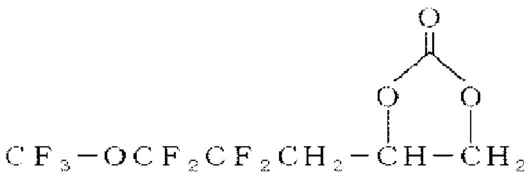
、

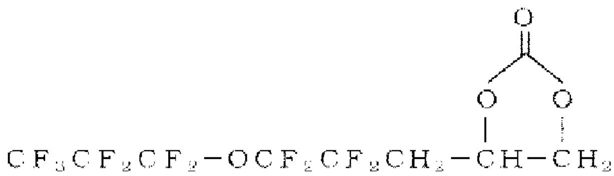
、

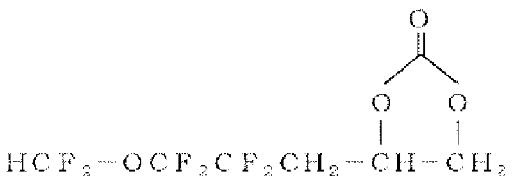
、

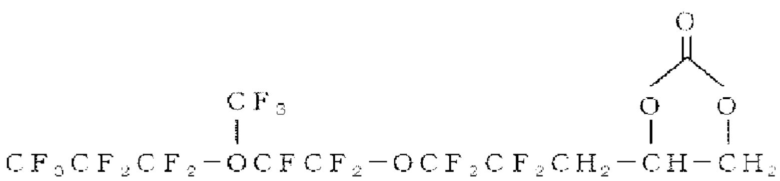
、

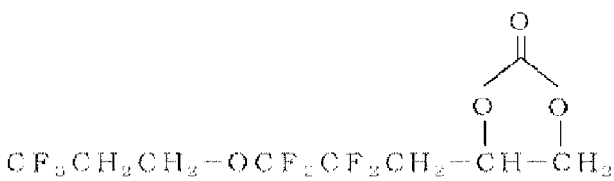
、

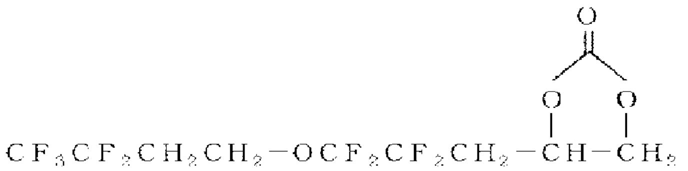

、

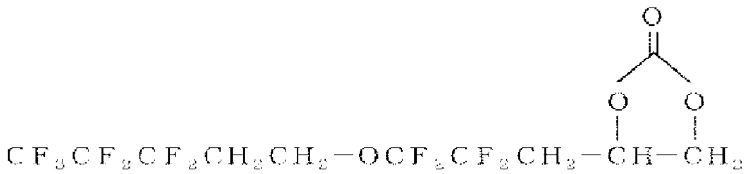

、

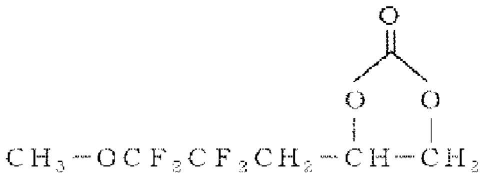

In particular, the fluorinated saturated cyclic carbonate is preferably any of the following compounds:

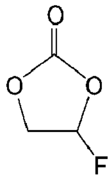
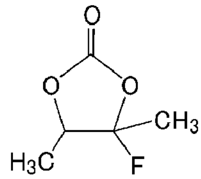
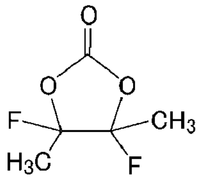
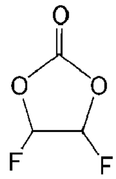

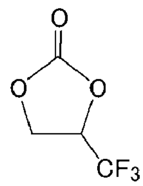
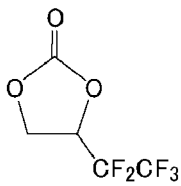
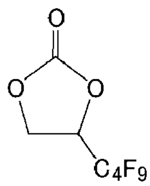
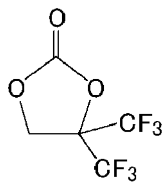

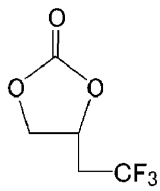
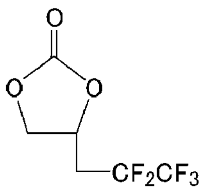
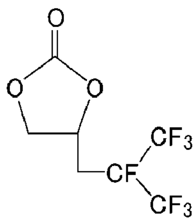
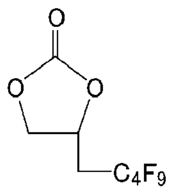

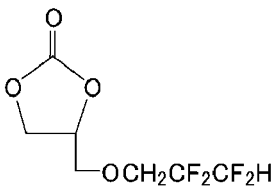
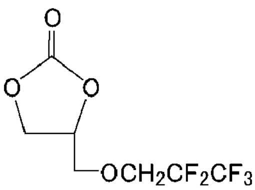
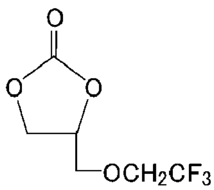

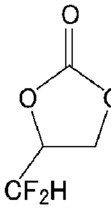
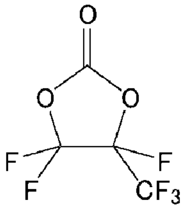
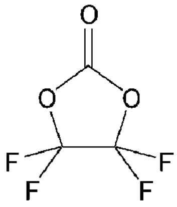
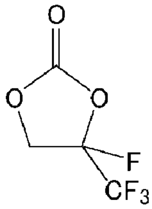

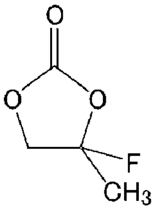
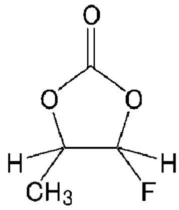
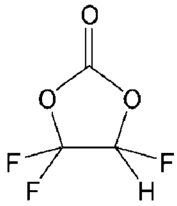
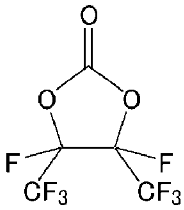

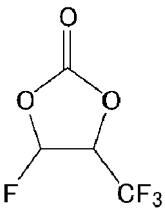

The fluorinated saturated cyclic carbonate is more preferably fluoroethylene carbonate or difluoroethylene carbonate.

The fluorinated saturated cyclic carbonate is not limited to the above specific examples. One of the above fluorinated saturated cyclic carbonates may be used alone, or two or more thereof may be used in any combination at any ratio.

The amount of the fluorinated saturated cyclic carbonate in the solvent is preferably 0-99 vol%, more preferably ≥ 1 vol%, still more preferably ≥ 5 vol%, while more preferably ≤ 95 vol%, still more preferably ≤ 90 vol%.

Examples of the fluorinated acyclic carbonate include compounds of formula (B): $Rf^2OCOOR^6$ (B)
wherein $Rf^2$ is $C_{1-7}$-fluoroalkyl; and $R^6$ is $C_{1-7}$-alkyl optionally having a fluorine atom.

To achieve suitable use under high voltage, the electrolyte solution of the invention preferably contains the fluorinated acyclic carbonate.

The fluoroalkyl group refers to an alkyl group in which at least one H is replaced by F. If $R^6$ is alkyl having a fluorine atom, it is a fluoroalkyl group.

To achieve low viscosity, $Rf^2$ and $R^6$ each preferably have 2-7 , more preferably 2-4 carbon atoms.

Too large a carbon number may cause poor low-temperature performance and low solubility of the electrolyte salt. Too small a carbon number may cause low solubility of the electrolyte salt, low discharge efficiency, and high viscosity, for example.

Examples of fluoroalkyl having one carbon atom include $CFH_2$-, $CF_2H$-, and $CF_3$-.

To achieve good solubility of the electrolyte salt, a preferred example of fluoroalkyl having two or more carbon atoms is a fluoroalkyl group of formula (d-1):

$R^1$-$R^2$- (d-1)
wherein $R^1$ is $C_{\geq 1}$-alkyl optionally having a fluorine atom; $R^2$ is $C_{1-3}$-alkylene optionally having a fluorine atom; and at least one of $R^1$ and $R^2$ has a fluorine atom.
$R^1$ and $R^2$ each may further contain an atom other than C, H and F.

$R^1$ preferably is linear or branched $C_{1-6}$-alkyl. The carbon number of $R^1$ is more preferably 1-6, still more preferably 1-3.

Specifically, for example, $CH_3$-, $CH_3CH_2$-, $CH_3CH_2CH_2$-, $CH_3CH_2CH_2CH_2$-, and groups of the following formulae may be mentioned as linear or branched alkyl groups for $R^1$:

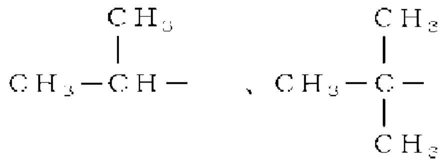

Examples of $R^1$ which is linear alkyl having a fluorine atom include $CF_3$-, $CF_3CH_2$-, $CF_3CF_2$-, $CF_3CH_2CH_2$-, $CF_3CF_2CH_2$-, $CF_3CF_2CF_2$-, $CF_3CH_2CF_2$-, $CF_3CH_2CH_2CH_2$-, $CF_3CF_2CH_2CH_2$-, $CF_3CH_2CF_2CH_2$-, $CF_3CF_2CF_2CH_2$-, $CF_3CF_2CF_2CF_2$-, $CF_3CF_2CH_2CF_2$-, $CF_3CH_2CH_2CH_2CH_2$-, $CF_3CF_2CH_2CH_2CH_2$-, $CF_3CH_2CF_2CH_2CH_2$-, $CF_3CF_2CF_2CH_2CH_2$-, $CF_3CF_2CF_2CF_2CH_2$-, $CF_3CF_2CH_2CF_2CH_2$-, $CF_3CF_2CH_2CH_2CH_2CH_2$-, $CF_3CF_2CF_2CF_2CH_2CH_2$-, $CF_3CF_2CH_2CF_2CH_2CH_2$-, $HCF_2$-, $HCF_2CH_2$-, $HCF_2CF_2$-, $HCF_2CH_2CH_2$-, $HCF_2CF_2CH_2$-, $HCF_2CH_2CF_2$-, $HCF_2CF_2CH_2CH_2$-, $HCF_2CH_2CF_2CH_2$-, $HCF_2CF_2CF_2CF_2$-, $HCF_2CF_2CH_2CH_2CH_2$-, $HCF_2CH_2CF_2CH_2CH_2$-, $HCF_2CF_2CF_2CF_2CH_2$-, $HCF_2CF_2CF_2CF_2CH_2CH_2$-, $FCH_2$-, $FCH_2CH_2$-, $FCH_2CF_2$-, $FCH_2CF_2CH_2$-, $FCH_2CF_2CF_2$-, $CH_3CF_2CH_2$-, $CH_3CF_2CF_2$-, $CH_3CF_2CH_2CF_2$-, $CH_3CF_2CF_2CF_2$-, $CH_3CH_2CF_2CF_2$-, $CH_3CF_2CH_2CF_2CH_2$-, $CH_3CF_2CF_2CF_2CH_2$-, $CH_3CF_2CF_2CH_2CH_2$-, $CH_3CH_2CF_2CF_2CH_2$-, $CH_3CF_2CH_2CF_2CH_2CH_2$-, $CH_3CF_2CH_2CF_2CH_2CH_2$-, $HCFClCF_2CH_2$-, $HCF_2CFClCH_2$-, $HCF_2CFClCF_2CFClCH_2$-, and $HCFClCF_2CFClCF_2CH_2$-.

Examples of $R^1$ which is branched alkyl having a fluorine atom include those of the following formulae.

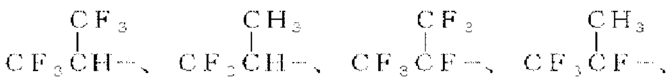

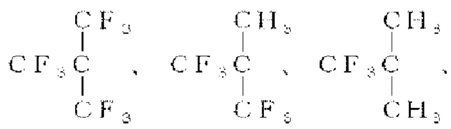

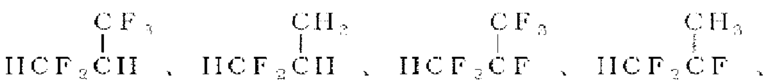

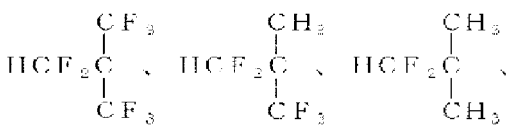

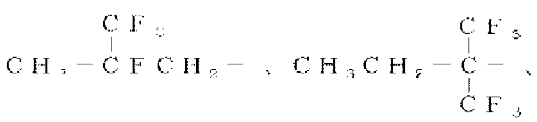

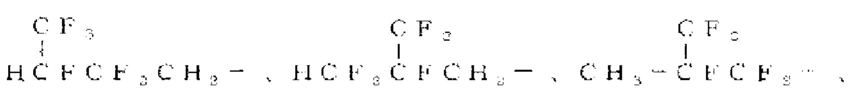

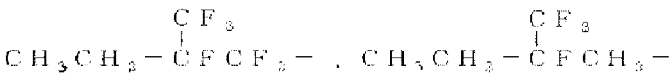

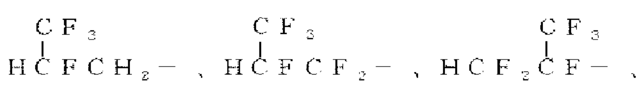

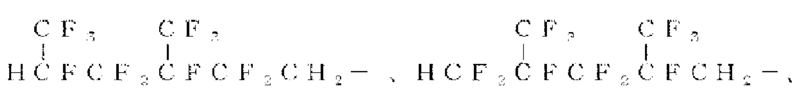

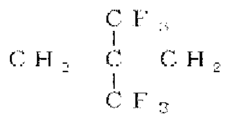

A group having a branch such as $CH_3$- or $CF_3$- is likely to cause high viscosity. Thus, the number of such branches is more preferably small (one) or zero.

$R^2$ is $C_{1-3}$-alkylene optionally having a fluorine atom. $R^2$ may be linear or branched. Examples of a minimum structural unit constituting such a linear or branched alkylene group are shown below. $R^2$ is constituted by one or combination of these units.

(i) Linear minimum structural units
$-CH_2-$, $-CHF-$, $-CF_2-$, $-CHCl-$, $-CFCl-$, $-CCl_2-$

(ii) Branched minimum structural units

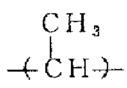 、 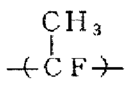 、 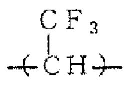 、 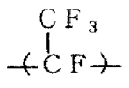 、

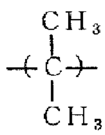 、 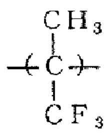 、 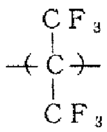 、

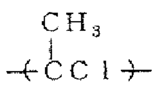 、 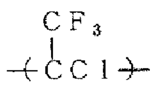

Preferred among these exemplified units are Cl-free structural units because such units are not dehydrochlorinated by a base, and thus are more stable.

$R^2$ which is a linear group consists only of any of the above linear minimum structural units, preferably $-CH_2-$, $-CH_2CH_2-$, or $-CF_2-$. To further improve the solubility of the electrolyte salt, $-CH_2-$ or $-CH_2CH_2-$ is more preferred.

$R^2$ which is a branched group includes at least one of the above branched minimum structural units. A preferred example thereof is a group represented by $-(CX^aX^b)-$ (wherein $X^a$ is H, F, $CH_3$, or $CF_3$; $X^b$ is $CH_3$ or $CF_3$; if $X^b$ is $CF_3$, $X^a$ is H or $CH_3$). Such a group can much further improve the solubility of the electrolyte salt.

For example, $CF_3CF_2-$, $HCF_2CF_2-$, $H_2CFCF_2-$, $CH_3CF_2-$, $CF_3CF_2CF_2-$, $HCF_2CF_2CF_2-$, $H_2CFCF_2CF_2-$, $CH_3CF_2CF_2-$, and those of the following formulae may be specifically mentioned as preferred examples of the fluorinated alkyl group:

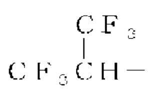 、 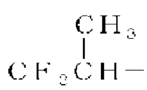 、 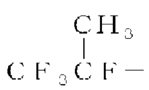 、

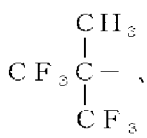 、 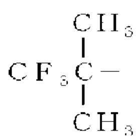 、

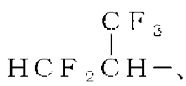 、 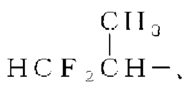 、 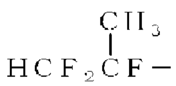 、

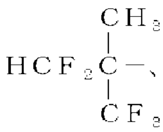、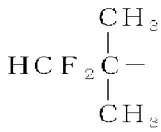、

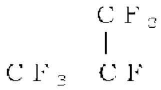、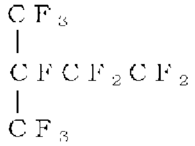、

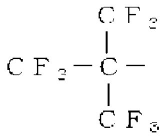、

In particular, the fluoroalkyl for each of $Rf^2$ and $R^6$ is preferably $CF_3$-, $CF_3CF_2$-, $(CF_3)_2CH$-, $CF_3CH_2$-, $C_2F_5CH_2$-, $HCF_2CF_2CH_2$-, or $CF_3CFHCF_2CH_2$-. To achieve high incombustibility and good rate performance and oxidation resistance, the fluoroalkyl for each of $Rf^2$ and $R^6$ is more preferably $CF_3CH_2$-, $CF_3CF_2CH_2$-, or $HCF_2CF_2CH_2$-.

$R^6$ which is alkyl free from fluorine is $C_{1-7}$-alkyl. To achieve low viscosity, $R^6$ preferably has a carbon number of 1-4, more preferably 1-3.

Examples of the alkyl free from fluorine include $CH_3$-, $CH_3CH_2$-, $(CH_3)_2CH$-, and $C_3H_7$-. To achieve low viscosity and good rate performance, $CH_3$- or $CH_3CH_2$- is preferred.

The fluorinated acyclic carbonate preferably has a fluorine content of 20-70 mass%. The fluorinated acyclic carbonate having a fluorine content within the above range can maintain the compatibility with a solvent and the solubility of the salt. The fluorine content is more preferably ≥ 30 mass%, still more preferably ≥ 35 mass%, while more preferably ≤ 60 mass%, still more preferably ≤ 50 mass%.

The fluorine content in the invention is a value calculated based on the structural formula of the fluorinated acyclic carbonate by the following formula: {(Number of fluorine atoms × 19)/(molecular weight of the fluorinated acyclic carbonate)} × 100 (%).

The fluorinated acyclic carbonate is preferably any of the following compounds because they have low viscosity:

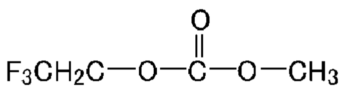 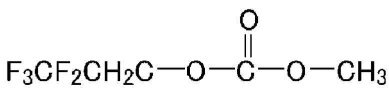

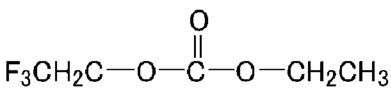 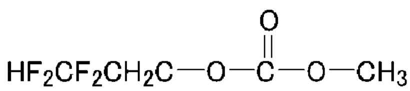

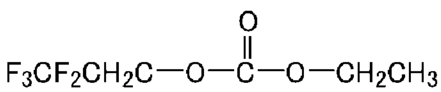 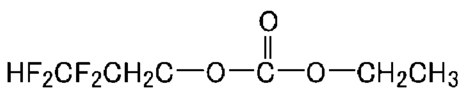

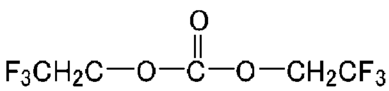 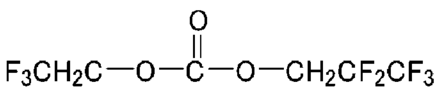

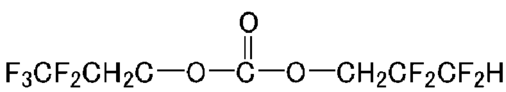

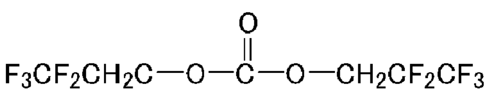

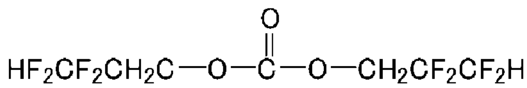

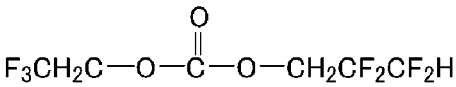

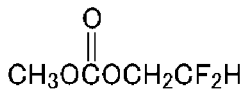

The amount of the fluorinated acyclic carbonate is preferably 1-90 vol% in the solvent. The fluorinated acyclic carbonate in an amount within the above range can maintain the compatibility.

To maintain the solubility of the salt, the amount of the fluorinated acyclic carbonate is more preferably $\geq$ 30 vol%, still more preferably $\geq$ 40 vol%, while more preferably $\leq$ 85 vol%, still more preferably $\leq$ 80 vol%, in the electrolyte solution.

Examples of the non-fluorinated acyclic carbonate include hydrocarbon-type acyclic carbonates such as $CH_3OCOOCH_3$ (dimethyl carbonate, DMC), $CH_3CH_2OCOOCH_2CH_3$ (diethyl carbonate, DEC), $CH_3CH_2OCOOCH_3$ (ethyl methyl carbonate, EMC), $CH_3OCOOCH_2CH_2CH_3$ (methyl propyl carbonate), methyl butyl carbonate, ethyl propyl carbonate, and ethyl butyl carbonate. In particular, the non-fluorinated acyclic carbonate is preferably at least one selected from the group consisting of ethyl methyl carbonate, diethyl carbonate, and dimethyl carbonate.

The amount of the non-fluorinated acyclic carbonate is preferably 0-99 vol%, more preferably 1-90 vol%, in the solvent.

The electrolyte solution of the invention preferably contains 10-99.99 mass%, more preferably 10-95 mass%, still more preferably 15-90 mass%, of the solvent relative to the electrolyte solution.

The solvent preferably contains 40-100 vol%, more preferably 60-100 vol%, still more preferably 90-100 vol%, particularly preferably 100 vol%, in total of at least one of the non-fluorinated saturated cyclic carbonate, the fluorinated saturated cyclic carbonate, the non-fluorinated acyclic carbonate, and the fluorinated acyclic carbonate.

The solvent preferably contains at least one saturated cyclic carbonate selected from the non-fluorinated saturated cyclic carbonate and the fluorinated saturated cyclic carbonate and at least one acyclic carbonate selected from the non-fluorinated acyclic carbonate and the fluorinated acyclic carbonate.

The volume ratio of the saturated cyclic carbonate and the acyclic carbonate is preferably 10/90 to 90/10, more preferably 20/80 to 80/20, still more preferably 30/70 to 70/30, particularly preferably 50/50 or lower.

The solvent preferably contains the non-fluorinated acyclic carbonate and the non-fluorinated cyclic carbonate. An electrolyte solution containing a solvent with such a composition can be suitably used for electrochemical devices used at relatively low voltages.

The solvent preferably contains 70-100 vol%, more preferably 80-100 vol%, still more preferably 90-100 vol%, particularly preferably 100 vol%, in total of the non-fluorinated acyclic carbonate and the non-fluorinated cyclic carbonate.

The volume ratio of the non-fluorinated acyclic carbonate and the non-fluorinated cyclic carbonate is preferably 10/90 to 95/5, more preferably 20/80 or higher, still more preferably 50/50 or higher, particularly preferably 60 /40 or higher, while more preferably 90/10 or lower, still more preferably 80/20 or lower.

Alternatively, the solvent also preferably contains at least one acyclic carbonate selected from the non-fluorinated acyclic carbonate and the fluorinated acyclic carbonate, and the fluorinated cyclic carbonate. An electrolyte solution containing a solvent with such a composition can be suitably used for electrochemical devices used at relatively high voltages.

The solvent preferably contains 70-100 vol%, more preferably 80-100 vol%, still more preferably 90-100 vol%, particularly preferably 100 vol%, in total of the acyclic carbonate and the fluorinated cyclic carbonate.

The volume ratio of the acyclic carbonate and the fluorinated cyclic carbonate is preferably 10/90 to 95/5, more preferably 20/80 or higher, still more preferably 50/50 or higher, particularly preferably 60/40 or higher, while more preferably 90/10 or lower, still more preferably 80/20 or lower.

The electrolyte solution of the invention contains an electrolyte salt.

The electrolyte salt may be any of those usable for electrolyte solutions for electrochemical devices such as secondary batteries and electric double-layer capacitors. Preferred is a lithium salt.

The lithium salt may be any lithium salt that is known to be suitable for such applications, and specific examples thereof include the following:

inorganic lithium salts such as $LiPF_6$, $LiBF_4$, $LiClO_4$, $LiAlF_4$, $LiSbF_6$, $LiTaF_6$, and $LiWF_7$;
lithium fluorophosphates such as $LiPO_3F$ and $LiPO_2F_2$;
lithium tungstates such as $LiWOF_5$;
lithium carboxylates such as $HCO_2Li$, $CH_3CO_2Li$, $CH_2FCO_2Li$, $CHF_2CO_2Li$, $CF_3CO_2Li$, $CF_3CH_2CO_2Li$, $CF_3CF_2CO_2Li$, $CF_3CF_2CF_2CO_2Li$, and $CF_3CF_2CF_2CF_2CO_2Li$;

lithium sulfonates such as $FSO_3Li$, $CH_3SO_3Li$, $CH_2FSO_3Li$, $CHF_2SO_3Li$, $CF_3SO_3Li$, $CF_3CF_2SO_3Li$, $CF_3CF_2CF_2SO_3Li$, and $CF_3CF_2CF_2CF_2SO_3Li$;
lithium imide salts such as $LiN(FCO)_2$, $LiN(FCO)(FSO_2)$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonyl imide, lithium cyclic 1,3-perfluoropropanedisulfonyl imide, and $LiN(CF_3SO_2)(C_4F_9SO_2)$;
lithium methide salts such as $LiC(FSO_2)_3$, $LiC(CF_3SO_2)_3$, and $LiC(C_2F_5SO_2)_3$;
lithium oxalatoborates such as lithium difluorooxalatoborate and lithium bis(oxalato)borate;
lithium oxalatophosphates such as lithium tetrafluorooxalatophosphate, lithium difluorobis(oxalato)phosphate, and lithium tris(oxalato)phosphate; and
fluorine-containing organic lithium salts such as $LiPF_4(CF_3)_2$, $LiPF_4(C_2F_5)_2$, $LiPF_4(CF_3SO_2)_2$, $LiPF_4(C_2F_5SO_2)_2$, $LiBF_{3C}F_3$, $LiBF_3C_2F_5$, $LiBF_3C_3F_7$, $LiBF_2(CF_3)_2$, $LiBF_2(C_2F_5)_2$, $LiBF_2(CF_3SO_2)_2$, and $LiBF_2(C_2F_5SO_2)_2$.

To provide an electrochemical device having a much smaller IV resistance value and much better cycle performance, particularly preferred is at least one selected from $LiPF_6$, $LiBF_4$, $LiSbF_6$, $LiTaF_6$, $LiPO_2F_2$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethanedisulfonyl imide, lithium cyclic 1,3-perfluoropropanedisulfonyl imide, $LiC(FSO_2)_3$, $LiC(CF_3SO_2)_3$, $LiC(C_2F_5SO_2)_3$, lithium bisoxalatoborate, lithium difluorooxalatoborate, lithium tetrafluorooxalatophosphate, lithium difluorobisoxalatophosphate, $LiBF_3CF_3$, $LiBF_3C_2F_5$, $LiPF_3(CF_3)_3$, and $LiPF_3(C_2F_5)_3$.

These lithium salts may be used alone or in combination of two or more. Examples of preferred combination of two or more lithium salts include combination of $LiPF_6$ and $LiBF_4$, combination of $LiPF_6$ and $FSO_3Li$, and combination of $LiPF_6$ and $LiPO_2F_2$. Such combination use has an effect of improving the load performance and cycle performance. To achieve this effect significantly, preferred are combination of $LiPF_6$ and $FSO_3Li$ and combination of $LiPF_6$ and $LiPO_2F_2$. To achieve this effect significantly with trace amounts of the salts, particularly preferred is combination of $LiPF_6$ and $LiPO_2F_2$.

In the case of combination of $LiPF_6$ and $LiBF_4$ or combination of $LiPF_6$ and $FSO_3Li$, $LiBF_4$ or $FSO_3Li$ may be used at any concentration relative to 100 mass% of the whole electrolyte solution as long as it does not significantly impair the effects of the invention. This concentration is usually $\geq$ 0.01 mass%, preferably $\geq$ 0.1 mass%, relative to the electrolyte solution, while the upper limit thereof is usually $\leq$ 30 mass%, preferably $\leq$ 20 mass%. Also, in the case of combination of $LiPF_6$ and $LiPO_2F_2$, $LiPO_2F_2$ may be used at any concentration relative to 100 mass% of the whole electrolyte solution as long as it does not significantly impair the effects of the invention. This concentration is usually $\geq$ 0.001 mass%, preferably $\geq$ 0.01 mass%, relative to the electrolyte solution, while the upper limit thereof is usually $\leq$ 10 mass%, preferably $\leq$ 5 mass%. The lithium salt at a concentration within this range can improve the effects such as output performance, load performance, low-temperature performance, cycle performance, and high-temperature performance. Too large an amount of the lithium salt may precipitate at low temperature, impairing the battery performance. Too small an amount of the lithium salt may impair the effect of improving the low-temperature performance, cycle performance, and high-temperature storage performance.

These lithium salts may be used at any concentration in the electrolyte solution as long as they do not impair the effects of the invention. To make the electric conductivity of the electrolyte solution within a favorable range and to ensure good battery performance, the total mole concentration of lithium in the electrolyte solution is preferably $\geq$ 0.3 mol/L, more preferably $\geq$ 0.4 mol/L, still more preferably $\geq$ 0.5 mol/L, while preferably $\leq$ 3 mol/L, more preferably $\leq$ 2.5 mol/L, still more preferably $\leq$ 2.0 mol/L. Lithium at a concentration within this range can lead to an electrochemical device having a much smaller IV resistance value and much better cycle performance. Lithium at too low a total mole concentration may cause an insufficient electric conductivity of the electrolyte solution. Lithium at too high a concentration may increase the viscosity and thus reduce the electric conductivity, impairing the battery performance.

The electrolyte salt in the electrolyte solution for an electric double layer capacitor is preferably an ammonium salt.

Examples of the ammonium salt include the following salts (IIa) to (IIe).

(IIa) Tetraalkyl quaternary ammonium salts

Preferred examples thereof include tetraalkyl quaternary ammonium salts of formula (IIa):

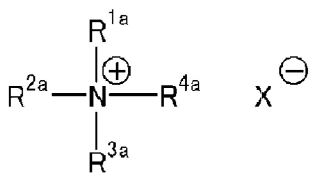

(IIa)

wherein $R^{1a}$-$R^{4a}$ each independently are $C_{1-6}$-alkyl optionally having an ether bond; and $X^-$ is an anion. To improve the oxidation resistance, any or all of the hydrogen atoms in the ammonium salt are also preferably replaced by F and/or $C_{1-4}$-fluoroalkyl.

Preferred specific examples of the tetraalkyl quaternary ammonium salts include tetraalkyl quaternary ammonium salts of formula (IIa-1) :

$$(R^{1a})_x(R^{2a})_yN^{\oplus} \quad X^{\ominus} \qquad (IIa-1)$$

wherein $R^{1a}$, $R^{2a}$, and $X^-$ are defined in the same manner as mentioned above; and x and y each are an integer of 0-4 with x + y = 4, and
alkyl ether group-containing trialkyl ammonium salts of formula (IIa-2):

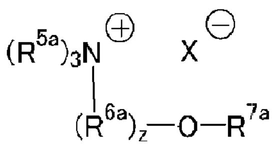

(IIa - 2)

wherein $R^{5a}$ is $C_{1-6}$-alkyl; $R^{6a}$ is a divalent $C_{1-6}$-hydrocarbon group; $R^{7a}$ is $C_{1-4}$-alkyl; z is 1 or 2; and $X^-$ is an anion.

Introduction of an alkyl ether group may reduce the viscosity.

The anion $X^-$ may be either an inorganic anion or an organic anion. Examples of the inorganic anion include $AlCl_4^-$, $BF_4^-$, $PF_6^-$, $AsF_6^-$, $TaF_6^-$, $I^-$, and $SbF_6^-$. Examples of the organic anion include $CF_3COO^-$, $CF_3SO_3^-$, $(CF_3SO_2)_2N^-$, and $(C_2F_5SO_2)_2N^-$.

To achieve good oxidation resistance and ionic dissociation, $BF_4^-$, $PF_6^-$, $AsF_6^-$, and $SbF_6^-$ are preferred.

Preferred specific examples of the tetraalkyl quaternary ammonium salts include $Et_4NBF_4$, $Et_4NClO_4$, $Et_4NPF_6$, $Et_4NAsF_6$, $Et_4NSbF_6$, $Et_4NCF_3SO_3$, $Et_4N(CF_3SO_2)_2N$, $Et_4NC_4F_9SO_3$, $Et_3MeNBF_4$, $Et_3MeNClO_4$, $Et_3MeNPF_6$, $Et_3MeNAsF_6$, $Et_3MeNSbF_6$, $Et_3MeNCF_3SO_3$, $Et_3MeN(CF_3SO_2)_2N$, $Et_3MeNC_4F_9SO_3$, and an N,N-diethyl-N-methyl-N-(2-methoxyethyl)ammonium salt. In particular, $Et_4NBF_4$, $Et_4NPF_6$, $Et_4NSbF_6$, $Et_4NAsF_6$, $Et_3MeNBF_4$, and an N,N-diethyl-N-methyl-N-(2-methoxyethyl)ammonium salt are preferred.

(IIb) Spirocyclic bipyrrolidinium salts

Preferred examples thereof include

spirocyclic bipyrrolidinium salts of formula (IIb-1):

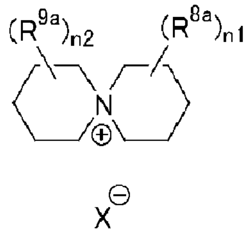

(IIb-1)

wherein $R^{8a}$ and $R^{9a}$ each independently are $C_{1-4}$-alkyl; $X^-$ is an anion; n1 is an integer of 0-5; and n2 is an integer of 0-5,
spirocyclic bipyrrolidinium salts of formula (IIb-2):

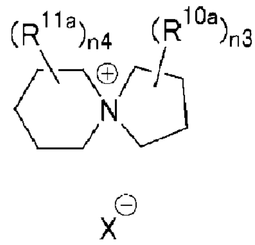

(IIb-2)

wherein $R^{10a}$ and $R^{11a}$ each independently are $C_{1-4}$-alkyl; $X^-$ is an anion; n3 is an integer of 0-5; and n4 is an integer of 0-5, and
spirocyclic bipyrrolidinium salts of formula (IIb-3):

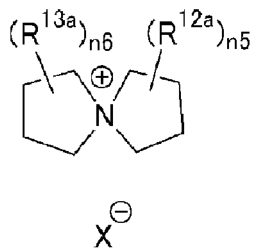

(IIb-3)

wherein $R^{12a}$ and $R^{13a}$ each independently are $C_{1-4}$-alkyl; $X^-$ is an anion; n5 is an integer of 0-5; and n6 is an integer of 0-5.

To improve the oxidation resistance, any or all of the hydrogen atoms in the spirocyclic bipyrrolidinium salt are also preferably replaced by F and/or $C_{1-4}$-fluoroalkyl.

Preferred specific examples of the anion $X^-$ are the same as those mentioned for the salts (IIa). To achieve good dissociation and a low internal resistance under high voltage, $BF_4^-$, $PF_6^-$, $(CF_3SO_2)_2N^-$, or $(C_2F_5SO_2)_2N^-$ is particularly preferred.

For example, those of the following formulae may be mentioned as preferred specific examples of the spirocyclic bipyrrolidinium salts:

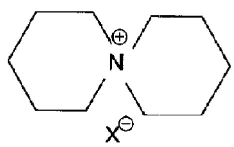

,

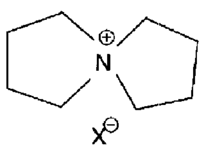

,

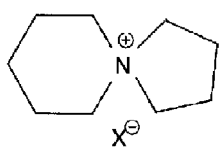

These spirocyclic bipyrrolidinium salts are excellent in solubility in a solvent, oxidation resistance, and ion conductivity.

(IIc) Imidazolium salts

Preferred examples thereof include imidazolium salts of formula (IIc):

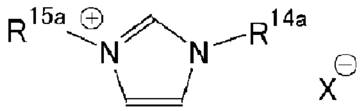 (IIc)

wherein $R^{14a}$ and $R^{15a}$ each independently are $C_{1-6}$-alkyl; and $X^-$ is an anion.

To improve the oxidation resistance, any or all of the hydrogen atoms in the imidazolium salt are also preferably replaced by F and/or $C_{1-4}$-fluoroalkyl.

Preferred specific examples of the anion $X^-$ are the same as those mentioned for the salts (IIa).

For example, one of the following formula may be mentioned as a preferred specific example of the imidazolium salt:

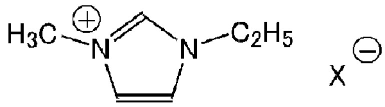

This imidazolium salt is excellent in that it has low viscosity and good solubility.

(IId): N-alkylpyridinium salts

Preferred examples thereof include N-alkylpyridinium salts of formula (IId):

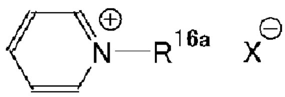 (IId)

wherein $R^{16a}$ is $C_{1-6}$-alkyl; and $X^-$ is an anion.

To improve the oxidation resistance, any or all of the hydrogen atoms in the N-alkylpyridinium salt are also preferably replaced by F and/or $C_{1-4}$-fluoroalkyl.

Preferred specific examples of the anion $X^-$ are the same as those mentioned for the salts (IIa).

For example, those of the following formulae may be mentioned as preferred specific examples of the N-alkylpyridinium salts:

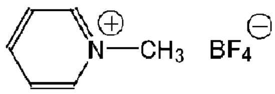, 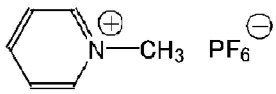,

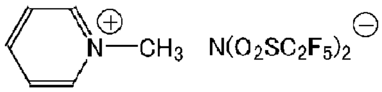,

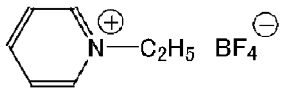, 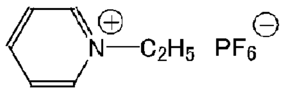,

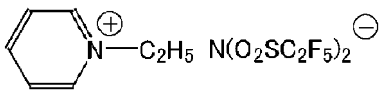,

These N-alkylpyridinium salts are excellent in that they have low viscosity and good solubility.

(IIe) N,N-dialkylpyrrolidinium salts

Preferred examples thereof include N,N-dialkylpyrrolidinium salts of formula (IIe):

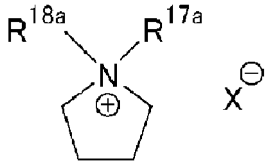

(IIe)

wherein $R^{17a}$ and $R^{18a}$ each independently are $C_{1-6}$-alkyl; and $X^-$ is an anion.

To improve the oxidation resistance, any or all of the hydrogen atoms in the N,N-dialkylpyrrolidinium salt are also preferably replaced by F and/or $C_{1-4}$-fluoroalkyl.

Preferred specific examples of the anion $X^-$ are the same as those mentioned for the salts (IIa).

For example, those of the following formulae may be mentioned as preferred specific examples of the N,N-dialkylpyrrolidinium salts:

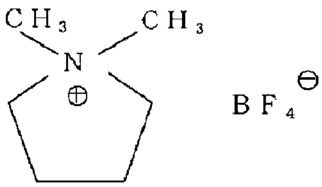 , 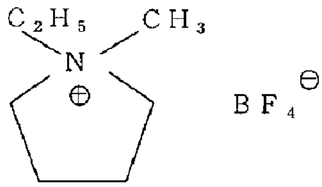 ,

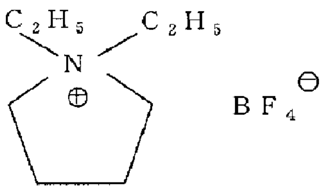 , 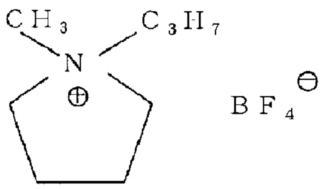 ,

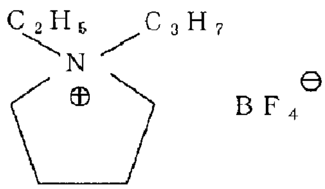 ,

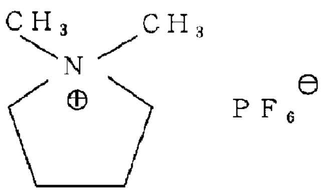 , 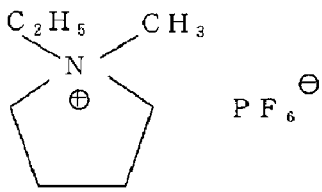 ,

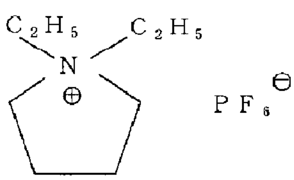 , 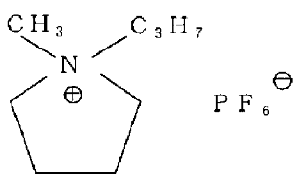 ,

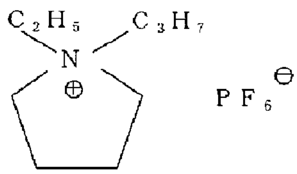

,

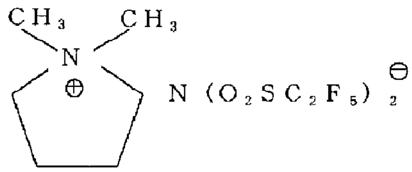

,

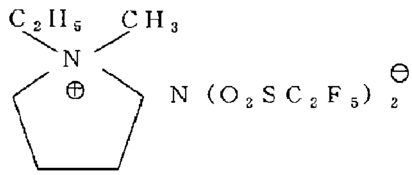

,

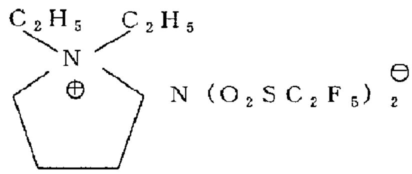

,

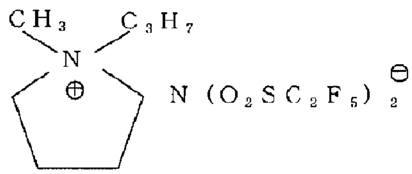

,

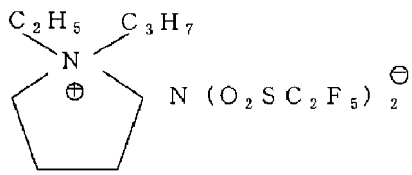

These N,N-dialkylpyrrolidinium salts are excellent in that they have low viscosity and good solubility.

Preferred among these ammonium salts are those of formula (IIa), (IIb), or (IIc) because they have good solubility, oxidation resistance, and ion conductivity. More preferred are those of the following formulae:

$$(Mc)_x(Et)_yN^{\oplus}X^{\ominus}$$ ,

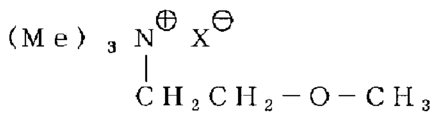

,

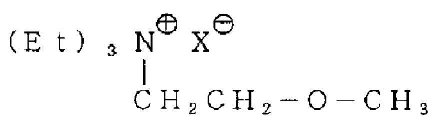

,

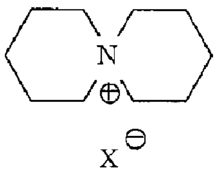

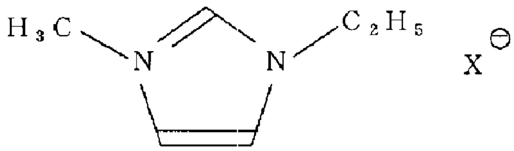

wherein Me is methyl; Et is ethyl; and $X^-$, x, and y are defined in the same manner as in formula (IIa-1).

A lithium salt may be used as an electrolyte salt for electric double layer capacitors. Preferred examples thereof include $LiPF_6$, $LiBF_4$, $LiAsF_6$, $LiSbF_6$, and LiN $(SO_2C_2H_5)_2$.

To further increase the capacity, a magnesium salt may be used. Preferred examples of the magnesium salt include $Mg(ClO_4)_2$ and $Mg(OOC_2H_5)_2$.

The ammonium salt serving as an electrolyte salt is preferably used at a concentration of ≥ 0.6 mol/L. The ammonium salt at a concentration < 0.6 mol/L may cause not only poor low-temperature performance but also a high initial internal resistance. The concentration of the electrolyte salt is more preferably ≥ 0.9 mol/L.

To achieve good low-temperature performance, the upper limit of the concentration is preferably ≤ 3.0 mol/L, more preferably ≤ 2.0 mol/L.

To achieve excellent low-temperature performance, the ammonium salt which is triethyl methyl ammonium tetrafluoroborate ($TEMABF_4$) is preferably used at a concentration of 0.8-1.9 mol/L.

Spirobipyrrolidinium tetrafluoroborate ($SBPBF_4$) is preferably used at a concentration of 0.7-2.0 mol/L.

The electrolyte solution of the invention preferably further includes polyethylene oxide that has a weight average molecular weight of 2000-4000 and has -OH, -OCOOH, or -COOH at an end.

The presence of such a compound can improve the stability at the interfaces with the respective electrodes, improving the battery performance.

Examples of the polyethylene oxide include polyethylene oxide monool, polyethylene oxide carboxylate, polyethylene oxide diol, polyethylene oxide dicarboxylate, polyethylene oxide triol, and polyethylene oxide tricarboxylate. These may be used alone or in combination of two or more.

To achieve good battery performance, preferred are a mixture of polyethylene oxide monool and polyethylene oxide diol and a mixture of polyethylene oxide carboxylate and polyethylene oxide dicarboxylate are preferred.

The polyethylene oxide having too small a weight average molecular weight may be easily oxidatively decomposed. The weight average molecular weight is more preferably 3000-4000.

The weight average molecular weight can be determined by gel permeation chromatography (GPC) in terms of polystyrene equivalent.

The amount of the polyethylene oxide is preferably $1 \times 10^{-6}$ to $1 \times 10^{-2}$ mol/kg in the electrolyte solution. Too large an amount of the polyethylene oxide may cause poor battery performance.

The amount of the polyethylene oxide is more preferably $5 \times 10^{-6}$ mol/kg or more.

The electrolyte solution of the invention preferably further contains, as an additive, at least one selected from an unsaturated cyclic carbonate, a fluorinated saturated cyclic carbonate, and a cyclic sulfonate compound. The presence of such a compound can reduce impairment of the battery performance.

The unsaturated cyclic carbonate is a cyclic carbonate having an unsaturated bond, i.e., a cyclic carbonate having at least one carbon-carbon unsaturated bond in the molecule. Specific examples thereof include vinylene carbonate compounds such as vinylene carbonate, methyl vinylene carbonate, ethyl vinylene carbonate, 4,5-dimethyl vinylene carbonate, and 4,5-diethyl vinylene carbonate; and vinyl ethylene carbonate compounds such as 4-vinyl ethylene carbonate (VEC), 4-methyl-4-vinyl ethylene carbonate, 4-ethyl-4-vinyl ethylene carbonate, 4-n-propyl-4-vinylene ethylene carbonate, 5-methyl-4-vinyl ethylene carbonate, 4,4-divinyl ethylene carbonate, 4,5-divinyl ethylene carbonate, 4,4-dimethyl-5-methylene ethylene carbonate, and 4,4-diethyl-5-methylene ethylene carbonate. Preferred among these is vinylene carbonate, 4-vinyl ethylene carbonate, 4-methyl-4-vinyl ethylene carbonate, or 4,5-divinyl ethylene carbonate, and particularly preferred is vinylene carbonate or 4-vinyl ethylene carbonate.

The unsaturated cyclic carbonate may have any molecular weight that does not significantly impair the effects of the invention. The molecular weight is preferably 50-250. The unsaturated cyclic carbonate having a molecular weight within this range is likely to ensure its solubility in the electrolyte solution and to enable sufficient achievement of the effects of the invention. The molecular weight of the unsaturated cyclic carbonate is more preferably 80-150.

The unsaturated cyclic carbonate may also be preferably a fluorinated unsaturated cyclic carbonate.

The number of fluorine atoms in the fluorinated unsaturated cyclic carbonate may be any number that is ≥ 1. The number of fluorine atoms is usually ≤ 6, preferably ≤ 4, most preferably 1 or 2.

Examples of the fluorinated unsaturated cyclic carbonate include fluorinated vinylene carbonate derivatives and fluorinated ethylene carbonate derivatives substituted with a substituent having an aromatic ring or a carbon-carbon double bond.

Examples of the fluorinated vinylene carbonate derivatives include 4-fluorovinylene carbonate, 4-fluoro-5-methyl vinylene carbonate, 4-fluoro-5-phenyl vinylene carbonate, 4-allyl-5-fluorovinylene carbonate, and 4-fluoro-5-vinyl vinylene carbonate.

Examples of the fluorinated ethylene carbonate derivatives substituted with a substituent having an aromatic ring or a carbon-carbon double bond include 4-fluoro-4-vinyl ethylene carbonate, 4-fluoro-4-allyl ethylene carbonate, 4-fluoro-5-vinyl ethylene carbonate, 4-fluoro-5-allyl ethylene carbonate, 4,4-difluoro-4-vinyl ethylene carbonate, 4,4-difluoro-4-allyl ethylene carbonate, 4,5-difluoro-4-vinyl ethylene carbonate, 4,5-difluoro-4-allyl ethylene carbonate, 4-fluoro-4,5-divinyl ethylene carbonate, 4-fluoro-4,5-diallyl ethylene carbonate, 4,5-difluoro-4,5-divinyl ethylene carbonate, 4,5-difluoro-4,5-diallyl ethylene carbonate, 4-fluoro-4-phenyl ethylene carbonate, 4-fluoro-5-phenyl ethylene carbonate, 4,4-difluoro-5-phenyl ethylene carbonate, and 4,5-difluoro-4-phenyl ethylene carbonate.

The fluorinated unsaturated cyclic carbonate may have any molecular weight that does not significantly impair the effects of the invention. The molecular weight is preferably 50-500. The fluorinated unsaturated cyclic carbonate having a molecular weight within this range is likely to ensure the solubility of the fluorinated unsaturated cyclic carbonate in the electrolyte solution and to enable sufficient achievement of the effects of the invention.

The unsaturated cyclic carbonates may be used alone or in any combination of two or more at any ratio.

Examples of the fluorinated saturated cyclic carbonate include the compounds mentioned as examples of the fluorinated saturated cyclic carbonate to be used in the solvent.

Examples of the cyclic sulfonate compound include 1,3-propanesultone, 1,4-butanesultone, 1-fluoro-1,3-propanesultone, 2-fluoro-1,3-propanesultone, and 3-fluoro-1,3-propanesultone.

To improve the high-temperature performance, the electrolyte solution of the invention preferably contains 1,3-propanesultone and/or 1,4-butanesultone.

If at least one compound selected from the unsaturated cyclic carbonate, the fluorinated saturated cyclic carbonate, and the cyclic sulfonate compound is used as an additive, the amount thereof in the electrolyte solution is preferably 0.1-10 mass%, more preferably 1-5 mass%.

The electrolyte solution of the invention may further contain any other solvent or additive such as a cyclic or acyclic carboxylate, an ether compound, a nitrogen-containing compound, a boron-containing compound, an organosilicon-containing compound, a fireproof agent (flame retardant), a surfactant, an additive for increasing the permittivity, an improver for cycle performance or rate performance, and an overcharge inhibitor, to the extent that does not impair the effects of the invention.

Examples of the cyclic carboxylate include those having 3-12 carbon atoms in total in the structural formula. Specific examples thereof include gamma-butyrolactone, gamma-valerolactone, gamma-caprolactone, and epsilon-caprolactone. To improve the battery performance owing to improvement in the degree of dissociation of lithium ions, gamma-butyrolactone is particularly preferred.

In general, the amount of the cyclic carboxylate is preferably ≥ 0.1 mass%, more preferably ≥ 1 mass%, in 100 mass% of the solvent. The cyclic carboxylate in an amount within this range is likely to improve the electric conductivity of the electrolyte solution, improving the large-current discharge performance of an electrolyte battery. The amount of the cyclic carboxylate is also preferably ≤ 10 mass%, more preferably ≤ 5 mass%. Such an upper limit may allow the electrolyte solution to have a viscosity within an appropriate range, may make it possible to avoid a reduction in the electric conductivity, may reduce an increase in the resistance of the negative electrode, and may allow the electrolyte battery to have large-current discharge performance within a favorable range.

The cyclic carboxylate to be suitably used may also be a fluorinated cyclic carboxylate (fluorolactone). Examples of the fluorolactone include fluorolactones of formula (C):

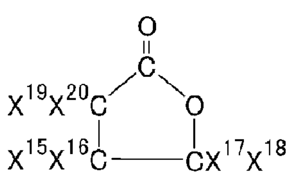

(C)

wherein $X^{15}$-$X^{20}$ each independently are are -H, -F, -Cl, $-CH_3$, or fluoroalkyl; and at least one of $X^{15}$-$X^{20}$ is fluoroalkyl.

Examples of the fluoroalkyl for $X^{15}$-$X^{20}$ include $-CFH_2$, - $CF_2H$, $—CF_3$, $—CH_2CF_3$, $—CF_2CF_3$, $—CH_2CF_2CF_3$,

and —$CF(CF_3)_2$. To achieve high oxidation resistance and an effect of improving the safety, —$CH_2CF_3$ and —$CH_2CF_2CF_3$ are preferred.

One of $X^{15}$-$X^{20}$ or a plurality thereof may be replaced by -H, -F, -Cl, -$CH_3$, or fluoroalkyl only when at least one of $X^{15}$-$X^{20}$ is fluoroalkyl. To achieve good solubility of the electrolyte salt, the number of substituents is preferably 1-3, more preferably 1 or 2.

The substitution may be at any of the above sites in the fluoroalkyl group. To achieve a good synthesizing yield, the substitution site is preferably $X^{17}$ and/or $X^{18}$. In particular, $X^{17}$ or $X^{18}$ is preferably fluoroalkyl, especially, —$CH_2CF_3$ or —$CH_2CF_2CF_3$. The substituent for $X^{15}$-$X^{20}$ other than fluoroalkyl is -H, -F, -Cl, or $CH_3$. To achieve good solubility of the electrolyte salt, -H is preferred.

In addition to those of the above formula, the fluorolactone may also be a fluorolactone of formula (D):

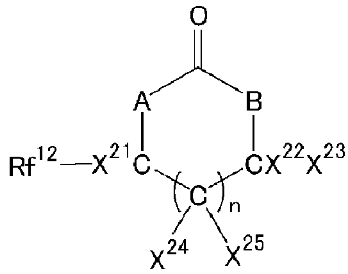

(D)

wherein one of A and B is $CX^{26}X^{27}$ (where $X^{26}$ and $X^{27}$ each independently are -H, -F, -Cl, —$CF_3$, -$CH_3$, or alkylene in which a hydrogen atom is optionally replaced by halogen and which optionally has a hetero atom in the chain) and the other is an oxygen atom; $Rf^{12}$ is fluoroalkyl or fluoroalkoxy optionally having an ether bond; $X^{21}$ and $X^{22}$ each independently are -H, -F, -Cl, —$CF_3$, or $CH_3$; $X^{23}$-$X^{25}$ each independently are -H, -F, -Cl, or alkyl in which a hydrogen atom is optionally replaced by halogen and which optionally contains a hetero atom in the chain; and n = 0 or 1.

A preferred example of the fluorolactone of formula (D) is a 5-membered ring structure of formula (E):

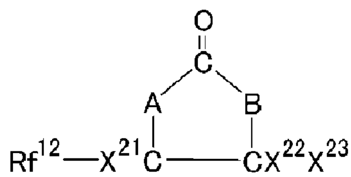

(E)

wherein A, B, $Rf^{12}$, $X^{21}$, $X^{22}$, and $X^{23}$ are defined in the same manner as in formula (D)) because it is easy to synthesize and has good chemical stability. Further, in relation to the combination of A and B, fluorolactones of the formulae (F) and (G):

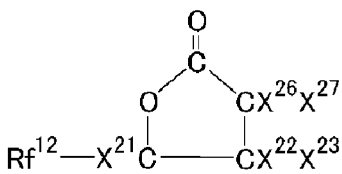

(F)

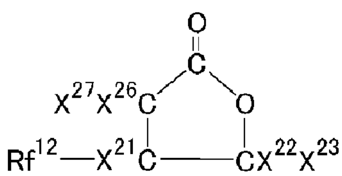

(G)

wherein $Rf^{12}$, $X^{21}$, $X^{22}$, $X^{23}$, $X^{26}$, and $X^{27}$ are defined in the same manner as in the formula (D)) may be mentioned.

To particularly achieve excellent characteristics such as a high permittivity and a high withstand voltage, and to improve the characteristics of the electrolyte solution in the invention, for example, to achieve good solubility of the electrolyte salt and to reduce the internal resistance well, those of the following formulae may be mentioned:

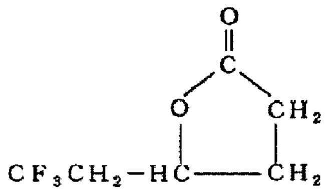,
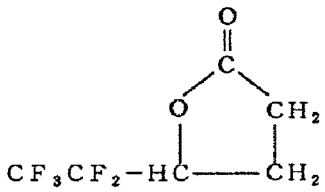,

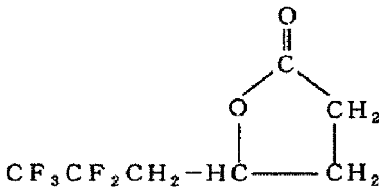,
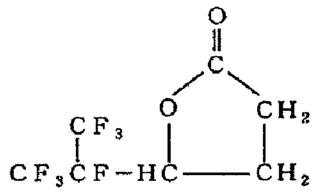

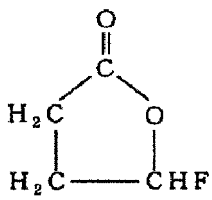,
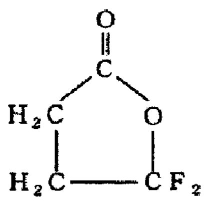,
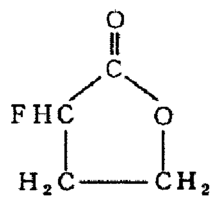,

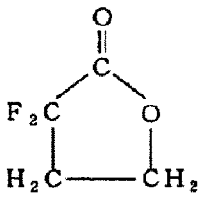,
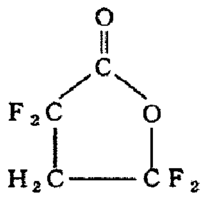

The presence of a fluorinated cyclic carboxylate can lead to, for example, effects of improving the ion conductivity, improving the safety, and improving the stability at high temperature.

Examples of the acyclic carboxylate include those having 3-7 carbon atoms in total in the structural formula. Specific examples thereof include methyl acetate, ethyl acetate, n-propyl acetate, isopropyl acetate, n-butyl acetate, isobutyl acetate, t-butyl acetate, methyl propionate, ethyl propionate, n-propyl propionate, isopropyl propionate, n-butyl propionate, isobutyl propionate, t-butyl propionate, methyl butyrate, ethyl butyrate, n-propyl butyrate, n-propyl butyrate, isopropyl butyrate, methyl isobutyrate, ethyl isobutyrate, n-propyl isobutyrate, and isopropyl isobutyrate.

To improve the ion conductivity owing to reduction in viscosity, preferred are methyl acetate, ethyl acetate, n-propyl acetate, n-butyl acetate, methyl propionate, ethyl propionate, n-propyl propionate, isopropyl propionate, methyl butyrate, and ethyl butyrate, for example.

Also, a fluorinated acyclic carboxylate (fluorine-containing ester) may also suitably be used. The fluorine-containing ester is preferably a fluorinated acyclic carboxylate of formula (H):

$$Rf^{10}COORf^{11} \qquad (H)$$

wherein $Rf^{10}$ is $C_{1\text{-}2}$-fluoroalkyl; and $Rf^{11}$ is $C_{1\text{-}4}$-fluoroalkyl, because it has high flame retardance, good compatibility with other solvents, and good oxidation resistance.

Examples of $Rf^{10}$ include $CF_3$—, $CF_3CF_2$—, $HCF_2CF_2$—, $HCF_2$—, $CH_3CF_2$—, and $CF_3CH_2$—. To achieve good rate performance, $CF_3$— and $CF_3CF_2$— are particularly preferred.

Examples of $Rf^{11}$ include —$CF_3$, —$CF_2CF_3$, —$CH(CF_3)_2$, —$CH_2CF_3$, —$CH_2CH_2CF_3$, —$CH_2CF_2CFHCF_3$, —$CH_2C_2F_5$, —$CH_2CF_2CF_2H$, —$CH_2CH_2C_2F_5$, - $CH_2CF_2CF_3$, and —$CH_2CF_2CF_2CF_3$. To achieve good compatibility with other solvents, —$CH_2CF_3$, —$CH(CF_3)_2$, —$CH_2C_2F_5$, and - $CH_2CF_2CF_2H$ are particularly preferred.

Specifically, for example, the fluorinated acyclic carboxylate may include one or two or more of $CF_3C(=O)OCH_2CF_3$, $CF_3C(=O)OCH_2CH_2CF_3$, $CF_3C(=O)OCH_2C_2F_5$, $CF_3C(=O)OCH_2CF_2CF_2H$, and $CF_3C(=O)OCH(CF_3)_2$. To achieve good compatibility with other solvents and good rate performance, $CF_3C(=O)OCH_2C_2F_5$, $CF_3C(=O)OCH_2CF_2CF_2H$, $CF_3C(=O)OCH_2CF_3$, and $CF_3C(=O)OCH(CF_3)_2$ are particularly pre-

ferred.

The ether compound is preferably an acyclic $C_{3-10}$-ether or a cyclic $C_{3-6}$-ether.

Examples of the acyclic $C_{3-10}$-ether include diethyl ether, di-n-butyl ether, dimethoxy methane, methoxy ethoxy methane, diethoxy methane, dimethoxy ethane, methoxy ethoxy ethane, diethoxy ethane, ethylene glycol di-n-propyl ether, ethylene glycol di-n-butyl ether, and diethylene glycol dimethyl ether.

Further, the ether compound may also suitably be a fluorinated ether.

An example of the fluorinated ether is a fluorinated ether (I) of formula (I):

$$Rf^{13}—O—Rf^{14} \qquad (I)$$

wherein $Rf^{13}$ and $Rf^{14}$ each independently $C_{1-10}$-alkyl or $C_{1-10}$-fluoroalkyl and at least one of $Rf^{13}$ and $Rf^{14}$ is $C_{1-10}$-fluoroalkyl. The presence of the fluorinated ether (I) can improve the incombustibility of the electrolyte solution, as well as improve the stability and safety at high temperature under high voltage.

In formula (I), at least one of $Rf^{13}$ and $Rf^{14}$ has only to be $C_{1-10}$-fluoroalkyl. To further improve the incombustibility and the stability and safety at high temperature under high voltage of the electrolyte solution, both $Rf^{13}$ and $Rf^{14}$ each independently are preferably $C_{1-10}$fluoroalkyl.

Particular preferably, $Rf^{13}$ and $Rf^{14}$ $Rf^{13}$ is $C_{3-6}$fluoroalkyl and $Rf^{14}$ is $C_{2-6}$-fluoroalkyl.

If the sum of the carbon numbers of $Rf^{13}$ and $Rf^{14}$ is too small, the fluorinated ether may have too low a boiling point. Too large a carbon number of $Rf^{13}$ or $Rf^{14}$ may cause low solubility of the electrolyte salt, may start to adversely affect the compatibility with other solvents, and may cause high viscosity, resulting in poor rate performance (viscousness). To achieve an excellent boiling point and rate performance, advantageously, the carbon number of $Rf^{13}$ is 3 or 4 and the carbon number of $Rf^{14}$ is 2 or 3.

The fluorinated ether (I) preferably has a fluorine content of 40-75 mass%. The fluorinated ether (I) having a fluorine content within this range may lead to particularly excellent balance between the incombustibility and the compatibility. The above range is also preferred for good oxidation resistance and safety.

The lower limit of the fluorine content is more preferably 45 mass%, still more preferably 50 mass%, particularly preferably 55 mass%. The upper limit thereof is more preferably 70 mass%, still more preferably 66 mass%.

The fluorine content of the fluorinated ether (I) is a value calculated based on the structural formula of the fluorinated ether (I) by the following formula: {(number of fluorine atoms × 19)/(molecular weight of fluorinated ether (I))} × 100 (%).

Examples of $Rf^{13}$ include $CF_3CF_2CH_2—$, $CF_3CFHCF_2—$, $HCF_2CF_2CF_2—$, $HCF_2CF_2CH_2—$, $CF_3CF_2CH_2CH_2—$, $CF_3CFHCF_2CH_2—$, $HCF_2CF_2CF_2CF_2—$, $HCF_2CF_2CF_2CH_2—$, $HCF_2CF_2CH_2CH_2—$, and $HCF_2CF(CF_3)CH_2—$. Examples of $Rf^{14}$ include $—CH_2CF_2CF_3$, - $CF_2CFHCF_3$, $CF_2CF_2CF_2H$, $CH_2CF_2CF_2H$, $—CH_2CH_2CF_2CF_3$, $—CH_2CF_2CFHCF_3$, $—CF_2CF_2CF_2CF_2H$, $—CH_2CF_2CF_2CF_2H$, $—CH_2CH_2CF_2CF_2H$, $—CH_2CF(CF_3)CF_2H$, - $CF_2CF_2H$, $—CH_2CF_2H$, and $—CF_2CH_3$.

Specific examples of the fluorinated ether (I) include $HCF_2CF_2CH_2OCF_2CF_2H$, $CF_3CF_2CH_20CF_2CF_2H$, $HCF_2CF_2CH_20CF_2CFHCF_3$, $CF_3CF_2CH_20CF_2CFHCF_3$, $C_6F_{13}OCH_3$, $C_6F_{13}OC_2H_5$, $C_8F_{17}OCH_3$, $C_8F_{17}OC_2H_5$, $CF_3CFHCF_2CH(CH_3)OCF_2CFHCF_3$, $HCF_2CF_2OCH(C_2H_5)_2$, $HCF_2CF_2OC_4H_9$, $HCF_2CF_2OCH_2CH$ $(C_2H_5)_2$, and $HCF_2CF_2OCH_2CH$ $(CH_3)_2$.

In particular, those having $HCF_2$- or $CF_3CFH$- at one end or both ends can provide a fluorinated ether (I) having excellent polarizability and a high boiling point. The boiling point of the fluorinated ether (I) is preferably 67-120°C, more preferably ≥ 80°C, still more preferably ≥ 90°C.

Such a fluorinated ether (I) may include, for example, one or two or more of $CF_3CH_2OCF_2CFHCF_3$, $CF_3CF_2CH_2OCF_2CFHCF_3$, $HCF_2CF_2CH_2OCF_2CFHCF_3$, $HCF_2CF_2CH_2OCH_2CF_2CF_2H$, $CF_3CFHCF_2CH_2OCF_2CFHCF_3$, $HCF_2CF_2CH_2OCF_2CF_2H$ and $CF_3CF_2CH_2OCF_2CF_2H$.

The fluorinated ether (I) is preferably at least one of $HCF_2CF_2CH_2OCF_2CFHCF_3$ (boiling point: 106°C) , $CF_3CF_2CH_2OCF_2CFHCF_3$ (boiling point: 82°C), $HCF_2CF_2CH_2OCF_2CF_2H$ (boiling point: 92°C) , and $CF_3CF_2CH_2OCF_2CF_2H$ (boiling point: 68°C), more preferably at least one of $HCF_2CF_2CH_2OCF_2CFHCF_3$ (boiling point: 106°C), and $HCF_2CF_2CH_2OCF_2CF_2H$ (boiling point: 92°C), because they advantageously have a high boiling point and good compatibility with other solvents, and lead to good solubility of the electrolyte salt.

Examples of the cyclic $C_{3-6}$-ether include 1,3-dioxane, 2-methyl-1,3-dioxane, 4-methyl-1,3-dioxane, 1,4-dioxane, and fluorinated compounds thereof. Preferred are dimethoxy methane, diethoxy methane, ethoxy methoxy methane, ethylene glycol n-propyl ether, ethylene glycol di-n-butyl ether, and diethylene glycol dimethyl ether because they have a high ability to solvate with lithium ions and improve the degree of ion dissociation. Particularly preferred are dimethoxy methane, diethoxy methane, and ethoxy methoxy methane because they have low viscosity and give a high ion conductivity.

Examples of the nitrogen-containing compound include nitrile, fluorine-containing nitrile, carboxylic acid amide, fluorine-containing carboxylic acid amide, sulfonic acid amide, and fluorine-containing sulfonic acid amide. Also, 1-methyl-2-pyrrolidinone, 1-methyl-2-piperidone, 3-methyl-2-oxazilidinone, 1,3-dimethyl-2-imidazolidinone, and N-methylsuccinimide may be used.

Examples of the boron-containing compound include borates such as trimethyl borate and triethyl borate, boric acid ethers, and alkyl borates.

Examples of the organosilicon-containing compound include $(CH_3)_4$—Si and $(CH_3)_3$—Si—Si$(CH_3)_3$.

Examples of the fireproof agent (flame retardant) include organophosphates and phosphazene-based compounds. Examples of the organophosphates include fluoroalkyl phosphates, non-fluoroalkyl phosphates, and aryl phosphates. To achieve a flame retardant effect even at a small amount, fluoroalkyl phosphates are particularly preferred.

Specific examples of the fluoroalkyl phosphates include fluorodialkyl phosphates disclosed in JP-A-1999-233141, alkyl phosphates disclosed in JP-A-1999-283669, and fluorotrialkyl phosphates.

Preferred examples of the fireproof agent (flame retardant) include $(CH_3O)$ $_3P$=0 and $(CF_3CH_2O)_3P$=O.

The surfactant may be any of cationic surfactants, anionic surfactants, nonionic surfactants, and amphoteric surfactants. To achieve good cycle performance and rate performance, the surfactant preferably contains a fluorine atom.

Preferred examples of such a surfactant containing a fluorine atom include fluorine-containing carboxylic acid salts of formula (J):

$$Rf^{15}COO^{-}M^{+} \qquad (J)$$

wherein $Rf^{15}$ is $C_{3-10}$-fluoroalkyl optionally having an ether bond; $M^+$ is $Li^+$, $Na^+$, $K^+$, or $NHR'_3{}^+$, wherein R' each independently are H or $C_{1-3}$-alkyl, and fluorine-containing sulfonic acid salts of formula (K):

$$Rf^{16}SO_3^{-}M^{+} \qquad (K)$$

wherein $Rf^{16}$ is $C_{3-10}$-fluoroalkyl optionally having an ether bond; $M^+$ is $Li^+$, $Na^+$, $K^+$, or $NHR'_3{}^+$, wherein R' each independently are H or $C_{1-3}$-alkyl.

To reduce the surface tension of the electrolyte solution without impairing the charge and discharge cycle performance, the amount of the surfactant is preferably 0.01-2 mass% in the electrolyte solution.

Examples of the additive for increasing the permittivity include sulfolane, methyl sulfolane, γ-butyrolactone, γ-valerolactone, acetonitrile, and propionitrile.

Examples of the improver for cycle performance and rate performance include methyl acetate, ethyl acetate, tetrahydrofuran, and 1,4-dioxane.

To reduce burst or combustion of batteries in case of overcharge, for example, the overcharge inhibitor is preferably an overcharge inhibitor having an aromatic ring. Examples of the overcharge inhibitor having an aromatic ring include aromatic compounds such as cyclohexyl benzene, biphenyl, alkyl biphenyl, terphenyl, partially hydrogenated terphenyl, t-butyl benzene, t-amyl benzene, diphenyl ether, benzofuran, dibenzofuran, dichloroaniline, and toluene; fluorinated aromatic compounds such as hexafluorobenzene, fluorobenzene, 2-fluorobiphenyl, o-cyclohexyl fluorobenzene, and p-cyclohexyl fluorobenzene; and fluoroanisole compounds such as 2,4-difluoroanisole, 2,5-difluoroanisole, 2,6-difluoroanisole, and 3,5-difluoroanisole. Preferred are aromatic compounds such as biphenyl, alkyl biphenyl, terphenyl, partially hydrogenated terphenyl, cyclohexyl benzene, t-butyl benzene, t-amyl benzene, diphenyl ether, and dibenzofuran. These compounds may be used alone or in combination of two or more. For combination use of two or more compounds, to achieve good balance between the overcharge inhibiting performance and the high-temperature storage performance, preferred examples are a combination of cyclohexyl benzene and t-butyl benzene or t-amyl benzene, or a combination of at least one oxygen-free aromatic compound selected from biphenyl, alkyl biphenyl, terphenyl, partially hydrogenated terphenyl, cyclohexyl benzene, t-butyl benzeneand t-amyl benzene and at least one oxygen-containing aromatic compound selected from diphenyl ether and dibenzofuran.

To prevent burst and combustion of batteries in case of overcharge, for example, the amount of the overcharge inhibitor is preferably 0.1-5 mass% in the electrolyte solution.

The electrolyte solution of the invention may further contain other known assistants to the extent that does not impair the effects of the invention. Examples of such known assistants include carbonate compounds such as erythritan carbonate, spiro-bis-dimethylene carbonate, and methoxy ethyl-methyl carbonate; carboxylic anhydrides such as succinic anhydride, glutanic anhydride, maleic anhydride, citraconic anhydride, glutaconic anhydride, itaconic anhydride, diglycolic anhydride, cyclohexanedicarboxylic anhydride, cyclopentanetetracarboxylic dianhydride, and phenylsuccinic anhydride; spiro compounds such as 2,4,8,10-tetraoxaspiro[5.5]undecane and 3,9-divinyl-2,4,8,10-tetraoxaspiro[5.5]undecane; sulfur-containing compounds such as acyclic sulfones, fluorine-containing acyclic sulfones, acyclic sulfonic acid esters, fluorine-containing acyclic sulfonic acid esters, cyclic sulfones, fluorine-containing cyclic sulfones, sulfonic halides, and fluorine-containing sulfonic halides, including ethylene sulfite, methyl fluorosulfonate, ethyl fluorosulfonate, methyl methanesulfonate, ethyl methanesulfonate, busulfan, sulfolene, diphenyl sulfone, N,N-dimethylmethanesulfonamide, and N,N-diethylmethanesulfonamide; and fluorine-containing aromatic compounds of hydrocarbon compounds

such as heptane, octane, nonane, decane, and cycloheptane. These compounds may be used alone or in combination of two or more. These assistants can improve the capacity retention performance and the cycle performance after high-temperature storage.

The electrolyte solution of the invention may be combined with a polymer material and thereby formed into a gel-like (plasticized), gel electrolyte solution.

Examples of such a polymer material include conventionally known polyethylene oxide and polypropylene oxide, and modified products thereof (see JP-A-1996-222270 and JP-A-2002-100405); polyacrylate-based polymers, polyacrylonitrile, and fluororesins such as polyvinylidene fluoride and vinylidene fluoride-hexafluoropropylene copolymers (see JP-T-1992-506726, JP-T-1996-507407 and JP-A-1998-294131); and composites of any of these fluororesins and any hydrocarbon resin (see JP-A-1999-035765 and JP-A-1999-086630). In particular, polyvinylidene fluoride or a vinylidene fluoride-hexafluoropropylene copolymer is preferably used as a polymer material for gel electrolytes.

The electrolyte solution of the invention may also contain an ion conductive compound disclosed in JP-A-2004-301934.

This ion conductive compound is an amorphous fluoropolyether compound of formula (1-1 having a fluorine-containing group at a side:

A-(D)-B (1-1)

wherein D is represented by formula (2-1):

$$-(D1)_n-(FAE)_m-(AE)_p-(Y)_q- \quad (2\text{-}1)$$

wherein D1 is an ether unit having a fluoroether group at a side chain and is represented by formula (2a):

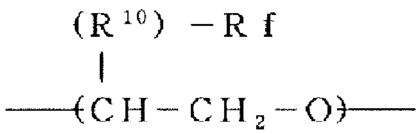

(2 a)

wherein Rf is a fluoroether group which optionally has a crosslinkable functional group; and $R^{10}$ is a group or a bond that links Rf and the main chain);

FAE is an ether unit having a fluoroalkyl group at a side chain and is represented by formula (2b):

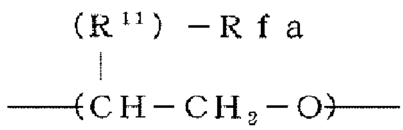

(2 b)

wherein Rfa is H or fluoroalkyl optionally having a crosslinkable functional group; and $R^{11}$ is a group or a bond that links Rfa and the main chain);

AE is an ether unit of formula (2c):

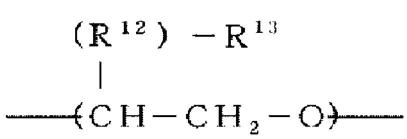

(2 c)

wherein $R^{13}$ is, alkyl optionally having a crosslinkable functional group, an aliphatic cyclic hydrocarbon group optionally having a crosslinkable functional group, or an aromatic hydrocarbon group optionally having a crosslinkable functional group; and $R^{12}$ is a group or a bond that links $R^{13}$ and the main chain);

Y is a unit of at least one of formulae (2d-1) to (2d-3) :

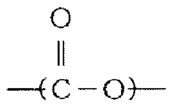

(2d-1)、

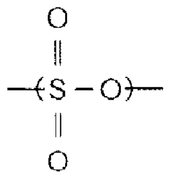

(2d-2)、

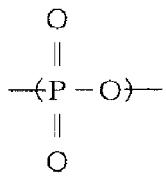

(2d-3)

n is an integer of 0-200;
m is an integer of 0-200;
p is an integer of 0-10000;
q is an integer of 1-100;
n + m is not 0; and
the bonding order of D1, FAE, AE, and Y is not specified; and
A and B each independently are H, alkyl optionally having a fluorine atom and/or a crosslinkable functional group, phenyl optionally having a fluorine atom and/or a crosslinkable functional group, -COOH, -OR (where R is H or alkyl optionally having a fluorine atom and/or a crosslinkable functional group), an ester group, or a carbonate group (if an end of D is an oxygen atom, A and B each are none of -COOH, -OR, an ester group, and a carbonate group).

The electrolyte solution of the invention may further contain other additives, if necessary. Examples of such other additives include metal oxides and glass.
The electrolyte solution of the invention may be prepared by any method using the aforementioned components.
The electrolyte solution of the invention can be suitably applied to electrochemical devices such as secondary batteries. Such an electrochemical device including the electrolyte solution of the invention is also one aspect of the invention.
Examples of the electrochemical devices include lithium ion secondary batteries, capacitors (electric double-layer capacitors), radical batteries, solar cells (in particular, dye-sensitized solar cells), fuel cells, various electrochemical sensors, electrochromic elements, electrochemical switching elements, aluminum electrolytic capacitors, and tantalum electrolytic capacitors. Preferred are lithium ion secondary batteries and electric double-layer capacitors.
In the following, a lithium ion secondary battery is described as an example of the electrochemical device or secondary battery of the invention.
The lithium ion secondary battery includes a positive electrode, a negative electrode, and the aforementioned electrolyte solution.

<Positive electrode>

The positive electrode includes a positive electrode active material layer containing a positive electrode active material which is a material of the positive electrode and a current collector.
The positive electrode active material may be any material that can electrochemically occlude and release lithium ions. For example, a substance containing lithium and at least one transition metal is preferred. Specific examples thereof include lithium-containing transition metal complex oxides and lithium-containing transition metal phosphoric acid compounds. In particular, the positive electrode active material is preferably a lithium-containing transition metal complex oxide that generates a high voltage.
Examples of the lithium-containing transition metal complex oxide include
lithium-manganese spinel complex oxides of formula (L): $Li_aMn_{2-b}M^1_bO_4$ (wherein $0.9 \leq a$; $0 \leq b \leq 1.5$; and $M^1$ is at least one metal selected from Fe, Co, Ni, Cu, Zn, Al, Sn, Cr, V, Ti, Mg, Ca, Sr, B, Ga, In, Si, and Ge),

lithium-nickel complex oxides offormula (M) : $LiNi_{1-c}M^2{}_cO_2$ (wherein $0 \leq c \leq 0.5$; and $M^2$ is at least one metal selected from Fe, Co, Mn, Cu, Zn, Al, Sn, Cr, V, Ti, Mg, Ca, Sr, B, Ga, In, Si, and Ge), and

lithium-cobalt complex oxides of formula (N): $LiCo_{1d}M^3{}_dO_2$ (wherein $0 \leq d \leq 0.5$; and $M^3$ is at least one metal selected from Fe, Ni, Mn, Cu, Zn, Al, Sn, Cr, V, Ti, Mg, Ca, Sr, B, Ga, In, Si, and Ge).

To provide a high-power lithium ion secondary battery having a high energy density, preferred is $LiCoO_2$, $LiMnO_2$, $LiNiO_2$, $LiMn_2O_4$, $LiNi_{0.8}Co_{0.15}Al_{0.05}O_2$, $LiNi_{0.5}Mn_{1.5}O_4$, or $LiNi_{1/3}Co_{1/3}Mn_{1/3}O_2$.

Other examples of the positive electrode active material include $LiFePO_4$, $LiNi_{0.8}Co_{0.2}O_2$, $Li_{1.2}Fe_{0.4}Mn_{0.4}O_2$, $LiNi_{0.5}Mn_{0.5}O_2$, and $LiV_3O_6$.

To improve the continuous charge performance, the positive electrode active material preferably contains lithium phosphate. Lithium phosphate may be used in any manner, and is preferably used in admixture with the positive electrode active material. The lower limit of the amount of the lithium phosphate is preferably ≥ 0.1 mass%, more preferably ≥ 0.3 mass%, still more preferably ≥ 0.5 mass%, relative to the sum of the amounts of the positive electrode active material and the lithium phosphate. The upper limit thereof is preferably ≤ 10 mass%, more preferably ≤ 8 mass%, still more preferably ≤ 5 mass%.

To the surface of the positive electrode active material may be attached a substance having a composition different from the positive electrode active material. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

Such a substance may be attached to the surface of the positive electrode active material by, for example, a method of dissolving or suspending the substance in a solvent, impregnating the solution or suspension into the positive electrode active material, and drying the impregnated material; a method of dissolving or suspending a precursor of the substance in a solvent, impregnating the solution or suspension into the positive electrode active material, and reacting the material and the precursor by heating; or a method of adding the substance to a precursor of the positive electrode active material and simultaneously sintering the materials. In the case of attaching carbon, for example, a carbonaceous material in the form of activated carbon may be mechanically attached to the surface afterward.

The lower limit of the amount (in terms of mass) of the substance attached to the surface is preferably ≥ 0.1 ppm, more preferably ≥ 1 ppm, still more preferably ≥ 10 ppm, relative to the amount of the positive electrode active material. The upper limit thereof is preferably ≤ 20%, more preferably ≤ 10%, still more preferably ≤ 5%. The substance attached to the surface can reduce oxidation of the electrolyte solution on the surface of the positive electrode active material, improving the battery life. Too small an amount of the substance may fail to sufficiently provide the effect. Too large an amount thereof may hinder the entrance and exit of lithium ions, increasing the resistance.

Particles of the positive electrode active material may have any shape conventionally used, such as an agglomerative shape, a polyhedral shape, a spherical shape, an ellipsoidal shape, a plate shape, a needle shape, or a pillar shape. The primary particles may agglomerate to form secondary particles.

The positive electrode active material has a tap density of preferably ≥ 0.5 $g/cm^3$, more preferably ≥ 0.8 $g/cm^3$, still more preferably ≥ 1.0 $g/cm^3$. The positive electrode active material having a tap density below the lower limit may cause an increased amount of a dispersion medium required, as well as increased amounts of a conductive material and a binder required in formation of the positive electrode active material layer, limiting the filling rate of the positive electrode active material into the positive electrode active material layer and limiting the battery capacity. A complex oxide powder having a high tap density enables formation of a positive electrode active material layer with a high density. The tap density is preferably as high as possible and has no upper limit, in general. Still, too high a tap density may cause diffusion of lithium ions in the positive electrode active material layer with the electrolyte solution serving as a diffusion medium to function as a rate-determining step, easily impairing the load performance. Thus, the upper limit of the tap density is preferably ≤ 4.0 $g/cm^3$, more preferably ≤ 3.7 $g/cm^3$, still more preferably ≤ 3.5 $g/cm^3$.

The tap density is determined as a powder filling density (tap density) g/cc when 5-10 g of the positive electrode active material powder is filled into a 10-ml glass graduated cylinder and the cylinder is tapped 200 times with a stroke of about 20 mm.

The particles of the positive electrode active material have a median size d50 (or a secondary particle size if the primary particles agglomerate to form secondary particles) of preferably ≥ 0.3 μm, more preferably ≥ 0.5 μm, still more preferably ≥ 0.8 μm, most preferably ≥ 1.0 μm, while preferably ≤ 30 μm, more preferably ≤ 27 μm, still more preferably ≤ 25 μm, most preferably ≤ 22 μm. The particles having a median size below the lower limit may fail to provide a product with a high tap density. The particles having a median size exceeding the upper limit may cause prolonged diffusion of lithium in the positive electrode active material layer, impairing the battery performance and generating streaks in formation of the positive electrode for a battery, i.e., when the active material and components such as a conductive material and a binder are formed into slurry by adding a solvent and the slurry is applied in the form of a film, for example. Mixing two or more positive electrode active materials having different median sizes d50 can further improve

the easiness of filling in formation of the positive electrode.

The median size d50 is determined using a known laser diffraction/scattering particle size distribution analyzer. In the case of using LA-920 (Horiba, Ltd.) as the particle size distribution analyzer, the dispersion medium used in the measurement is a 0.1 mass% sodium hexametaphosphate aqueous solution and the measurement refractive index is set to 1.24 after 5-minute ultrasonic dispersion.

If the primary particles agglomerate to form secondary particles, the average primary particle size of the positive electrode active material is preferably ≥ 0.05 μm, more preferably ≥ 0.1 μm, still more preferably ≥ 0.2 pm. The upper limit thereof is preferably 5 μm or smaller, more preferably ≤ 4 μm, still more preferably ≤ 3 μm, most preferably ≤ 2 μm. The primary particles having an average primary particle size exceeding the upper limit may have difficulty in forming spherical secondary particles, adversely affecting the powder filling. Further, such primary particles may have a greatly reduced specific surface area, highly possibly impairing the battery performance such as output performance. In contrast, the primary particles having an average primary particle size below the lower limit may usually be insufficiently grown crystals, causing poor charge and discharge reversibility, for example.

The primary particle size is measured by scanning electron microscopic (SEM) observation. Specifically, the primary particle size is determined as follows. A photograph at a magnification of 10000x is first taken. Any 50 primary particles are selected and the maximum length between the left and right boundary lines of each primary particle is measured along the horizontal line. Then, the average value of the maximum lengths is calculated, which is defined as the primary particle size.

The positive electrode active material has a BET specific surface area of preferably ≥ 0.1 $m^2/g$, more preferably ≥ 0.2 $m^2/g$, still more preferably ≥ 0.3 $m^2/g$, while preferably ≤ 50 $m^2/g$, more preferably ≤ 40 $m^2/g$, still more preferably ≤ 30 $m^2/g$. The positive electrode active material having a BET specific surface area smaller than the above range is likely to impair the battery performance. The positive electrode active material having a BET specific surface area larger than the above range is less likely to have an increased tap density, easily causing a difficulty in applying the material in formation of the positive electrode active material layer.

The BET specific surface area is defined by a value determined by single point BET nitrogen adsorption utilizing a gas flow method using a surface area analyzer (e.g., fully automatic surface area measurement device, Ohkura Riken Co., Ltd.), a sample pre-dried in nitrogen stream at 150°C for 30 minutes, and a nitrogen-helium gas mixture with the nitrogen pressure relative to the atmospheric pressure being accurately adjusted to 0.3.

When the lithium ion secondary battery is used as a large-size lithium ion secondary battery for hybrid vehicles or distributed generation, it is required to achieve a high output. Thus, the particles of the positive electrode active material preferably mainly include secondary particles.

The particles of the positive electrode active material preferably include 0.5-7.0 vol% of fine particles having an average secondary particle size of ≤ 40 μm and having an average primary particle size of ≤ 1 μm. The presence of fine particles having an average primary particle size of ≤ 1 μm enlarges the contact area with the electrolyte solution and enables more rapid diffusion of lithium ions between the electrode and the electrolyte solution, improving the output performance of the battery.

The positive electrode active material can be produced by any usual method of producing inorganic compounds. In particular, a spherical or ellipsoidal active material can be produced by various methods. For example, a material substance of transition metal is dissolved or crushed and dispersed in a solvent such as water, and the pH of the solution or dispersion is adjusted under stirring to form a spherical precursor. The precursor is recovered and, if necessary, dried. Then, a Li source such as LiOH, $Li_2CO_3$, or $LiNO_3$ is added thereto and the mixture is sintered at high temperature, thereby providing an active material.

To produce a positive electrode, the aforementioned positive electrode active materials may be used alone, or one or more thereof having different compositions may be used in combination at any ratio. Preferred examples of the combination in this case include a combination of $LiCoO_2$ and $LiMn_2O_4$ in which part of Mn may optionally be replaced by a different transition metal (e.g., $LiNi_{0.33}Co_{0.33}Mn_{0.33}O_2$) , and a combination with $LiCoO_2$ in which part of Co may optionally be replaced by a different transition metal.

To achieve a high battery capacity, the amount of the positive electrode active material is preferably 50-99 mass%, more preferably 80-99 mass%, of the positive electrode mixture. The amount of the positive electrode active material in the positive electrode active material layer is preferably ≥ 80 mass%, more preferably ≥ 82 mass%, particularly preferably ≥ 84 mass%. The amount thereof is also preferably ≤ 99 mass%, more preferably ≤ 98 mass%. Too small an amount of the positive electrode active material in the positive electrode active material layer may cause an insufficient electric capacity. In contrast, too large an amount thereof may cause insufficient strength of the resulting positive electrode.

The positive electrode mixture preferably further includes a binder, a thickening agent, and a conductive material.

The binder may be any material that is safe against a solvent to be used in production of electrodes and the electrolyte solution. Examples thereof include polyvinylidene fluoride, polytetrafluoroethylene, polyethylene, polypropylene, SBR (styrene-butadiene rubber), isoprene rubber, butadiene rubber, ethylene-acrylic acid copolymers, ethylene-methacrylic acid copolymers, polyethylene terephthalate, polymethyl methacrylate, polyimide, aromatic polyamide, cellulose, nitro cellulose, NBR (acrylonitrile-butadiene rubber), fluororubber, ethylenepropylene rubber, styrene-butadiene-styrene block copolymers and hydrogenated products thereof, EPDM (ethylene-propylenediene terpolymers), styrene-ethylene-butadiene-ethylene copolymers, styrene-isoprene-styrene block copolymers and hydrogenated products thereof, syndiotactic-1,2-polybutadiene, polyvinyl acetate, ethylene-vinyl acetate copolymers, propylene-$\alpha$-olefin copolymers, fluorinated polyvinylidene fluoride, polytetrafluoroethylene-ethylene copolymers, and polymer compositions having an ion conductivity of alkali metal ions (especially, lithium ions). These agents may be used alone or in any combination of two or more at any ratio.

The amount of the binder, which is expressed as the proportion of the binder in the positive electrode active material layer, is usually $\geq$ 0.1 mass%, preferably $\geq$ 1 mass%, more preferably $\geq$ 1.5 mass%. The proportion is also usually $\leq$ 80 mass%, preferably $\leq$ 60 mass%, still more preferably $\leq$ 40 mass%, most preferably $\leq$ 10 mass%. Too low a proportion of the binder may fail to sufficiently hold the positive electrode active material and cause insufficient mechanical strength of the positive electrode, impairing the battery performance such as cycle performance. In contrast, too high a proportion thereof may cause reduction in battery capacity and conductivity.

Examples of the thickening agent include carboxymethyl cellulose, methyl cellulose, hydroxymethyl cellulose, ethyl cellulose, polyvinyl alcohol, oxidized starch, monostarch phosphate, casein, and salts thereof. These agents may be used alone or in any combination of two or more at any ratio.

The proportion of the thickening agent is usually $\geq$ 0.1 mass%, preferably $\geq$ 0.2 mass%, more preferably $\geq$ 0.3 mass%, while usually $\leq$ 5 mass%, preferably $\leq$ 3 mass%, more preferably $\leq$ 2 mass%, relative to the active material. The thickening agent at a proportion below this range may cause significantly poor application. The thickening agent at a proportion above this range may cause a low proportion of the active material in the positive electrode active material layer, resulting in a low capacity of the battery and high resistance between the positive electrode active materials.

The conductive material may be any known conductive material. Specific examples thereof include metal materials such as copper and nickel, and carbon materials such as graphite (e.g., natural graphite, artificial graphite), carbon black (e.g., acetylene black), and amorphous carbon (e.g., needle coke). These materials may be used alone or in any combination of two or more at any ratio. The conductive material is used in an amount of usually $\geq$ 0.01 mass%, preferably $\geq$ 0.1 mass%, more preferably $\geq$ 1 mass%, while usually $\leq$ 50 mass%, preferably $\leq$ 30 mass%, more preferably $\leq$ 15 mass%, in the positive electrode active material layer. The conductive material in an amount below this range may cause insufficient conductivity. In contrast, the conductive material in an amount above this range may cause a low battery capacity.

The solvent for forming slurry may be any solvent that can dissolve or disperse therein the positive electrode active material, the conductive material, and the binder, as well as a thickening agent used if necessary. The solvent may be either of an aqueous solvent or an organic solvent. Examples of the aqueous medium include water and solvent mixtures of an alcohol and water. Examples of the organic medium include aliphatic hydrocarbons such as hexane; aromatic hydrocarbons such as benzene, toluene, xylene, and methyl naphthalene; heterocyclic compounds such as quinoline and pyridine; ketones such as acetone, methyl ethyl ketone, and cyclohexanone; esters such as methyl acetate and methyl acrylate; amines such as diethylene triamine and N,N-dimethylaminopropylamine; ethers such as diethyl ether, propylene oxide, and tetrahydrofuran (THF); amides such as N-methylpyrrolidone (NMP), dimethyl formamide, and dimethyl acetamide; and aprotic polar solvents such as hexamethyl phospharamide and dimethyl sulfoxide.

Examples of the material of the current collector for positive electrodes include metal materials such as aluminum, titanium, tantalum, stainless steel, and nickel, and alloys thereof; and carbon materials such as carbon cloth and carbon paper. Preferred is any metal material, especially aluminum or an alloy thereof.

In the case of a metal material, the current collector may be in the form of e.g. metal foil, metal cylinder, metal coil, metal plate, metal film, expanded metal, punched metal or metal foam. In the case of a carbon material, it may be in the form of e.g. carbon plate, carbon film or carbon cylinder. Preferred among these is a metal film. The film may be in the form of mesh, as appropriate. The film may have any thickness, and the thickness is usually $\geq$ 1 $\mu$m, preferably $\geq$ 3 $\mu$m, more preferably $\geq$ 5 $\mu$m, while usually $\leq$ 1 mm, preferably $\leq$ 100 $\mu$m, more preferably $\leq$ 50 $\mu$m. The film having a thickness smaller than this range may have insufficient strength as a current collector. In contrast, the film having a thickness greater than this range may have poor handleability.

To reduce the electronic contact resistance between the current collector and the positive electrode active material layer, the current collector also preferably has a conductive auxiliary agent applied on the surface thereof. Examples of the conductive auxiliary agent include carbon and noble metals such as gold, platinum, and silver.

The ratio between the thicknesses of the current collector and the positive electrode active material layer may be any value, and the ratio {(thickness of positive electrode active material layer on one side immediately before injection of electrolyte solution)/(thickness of current collector)} is preferably $\leq$ 20, more preferably $\leq$ 15, most preferably $\leq$ 10. The ratio is also preferably $\geq$ 0.5, more preferably $\geq$ 0.8, most preferably $\geq$ 1. The current collector and the positive electrode active material layer showing a ratio exceeding this range may cause the current collector to generate heat due to Joule heating during high-current-density charge and discharge. The current collector and the positive electrode active material layer showing a ratio below this range may cause an increased ratio by volume of the current collector

to the positive electrode active material, reducing the battery capacity.

The positive electrode may be produced by a usual method. One example of the production method is a method in which the positive electrode active material is mixed with the aforementioned binder, thickening agent, conductive material, solvent, and other components to form a slurry-like positive electrode mixture, and then this mixture is applied to a current collector, dried, and pressed so as to be densified.

The densification may be achieved using a manual press or a roll press, for example. The density of the positive electrode active material layer is preferably ≥ 1.5 g/cm$^3$, more preferably ≥ 2 g/cm$^3$, still more preferably ≥ 2.2 g/cm$^3$, while preferably ≤ 5 g/cm$^3$, more preferably ≤ 4.5 g/cm$^3$, still more preferably ≤ 4 g/cm$^3$. The positive electrode active material layer having a density above this range may cause low permeability of the electrolyte solution toward the vicinity of the interface between the current collector and the active material, and poor charge and discharge performance particularly at a high current density, failing to provide a high output. The positive electrode active material layer having a density below this range may cause poor conductivity between the active materials and increase the battery resistance, failing to provide a high output.

In the case of using the electrolyte solution of the invention, to improve the stability at high output and high temperature, the area of the positive electrode active material layer is preferably large relative to the outer surface area of an external case of the battery. Specifically, the total area of the positive electrode is preferably 15 times or more, more preferably 40 times or more, greater than the surface area of the external case of the secondary battery. For closed, square-shaped cases, the outer surface area of an external case of the battery herein refers to the total area calculated from the dimensions of length, width, and thickness of the case portion into which a power-generating element is filled except for a protruding portion of a terminal. For closed, cylinder-like cases, the outer surface area of an external case of the battery herein refers to a geometric surface area of an approximated cylinder of the case portion into which a power-generating element is filled except for a protruding portion of a terminal. The total area of the positive electrode herein refers to the geometric surface area of the positive electrode mixture layer opposite to a mixture layer including the negative electrode active material. For structures including a current collector foil and positive electrode mixture layers on both sides of the current collector, the total area of the positive electrode is the sum of the areas calculated on the respective sides.

The positive electrode plate may have any thickness. To achieve a high capacity and a high output, the lower limit of the thickness of the mixture layer on one side of the current collector excluding the thickness of the base metal foil is preferably ≥ 10 μm, more preferably ≥ 20 μm, while preferably ≤ 500 μm, more preferably ≤ 450 μm.

To the surface of the positive electrode plate may be attached a substance having a different composition. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; carbonates such as lithium carbonate, calcium carbonate, and magnesium carbonate; and carbon.

<Negative electrode>

The negative electrode includes a negative electrode active material layer containing a negative electrode active material and a current collector.

Examples of the negative electrode active material include carbonaceous materials that can occlude and release lithium such as pyrolysates of organic matter under various pyrolysis conditions, artificial graphite, and natural graphite; metal oxide materials that can occlude and release lithium such as tin oxide and silicon oxide; lithium metals; various lithium alloys; and lithium-containing metal complex oxide materials. Two or more of these negative electrode active materials may be used in admixture with each other.

The carbonaceous material that can occlude and release lithium is preferably artificial graphite produced by high-temperature treatment of easily graphitizable pitch from various materials, purified natural graphite, or a material obtained by surface-treating such graphite with pitch or other organic matter and then carbonizing the surface-treated graphite. To achieve a good balance between the initial irreversible capacity and the high-current-density charge and discharge performance, the carbonaceous material is more preferably selected from carbonaceous materials obtained by one or more heat treatments at 400-3200°C on natural graphite, artificial graphite, artificial carbonaceous substances, or artificial graphite substances; carbonaceous materials which allow the negative electrode active material layer to include at least two or more carbonaceous matters having different crystallinities and/or have an interface between the carbonaceous matters having the different crystallinities; and carbonaceous materials which allow the negative electrode active material layer to have an interface between at least two or more carbonaceous matters having different orientations. These carbonaceous materials may be used alone or in any combination of two or more at any ratio.

Examples of the carbonaceous materials obtained by one or more heat treatments at 400-3200°C on artificial carbonaceous substances or artificial graphite substances include natural graphite, coal-based coke, petroleum-based coke, coal-based pitch, petroleum-based pitch, and those prepared by oxidizing these pitches; needle coke, pitch coke,

and carbon materials prepared by partially graphitizing these cokes; pyrolysates of organic matter such as furnace black, acetylene black, and pitch-based carbon fibers; carbonizable organic matter and carbides thereof; and solutions prepared by dissolving carbonizable organic matter in a low-molecularweight organic solvent such as benzene, toluene, xylene, quinoline, or n-hexane, and carbides thereof.

The metal material (excluding lithium-titanium complex oxides) to be used as the negative electrode active material may be any compound that can occlude and release lithium, and examples thereof include simple lithium, simple metals and alloys that constitute lithium alloys, and oxides, carbides, nitrides, silicides, sulfides, and phosphides thereof. The simple metals and alloys constituting lithium alloys are preferably materials containing any of metal and semi-metal elements in Groups 13 and 14, more preferably simple metal of aluminum, silicon, and tin (hereinafter, referred to as "specific metal elements"), and alloys and compounds containing any of these atoms. These materials may be used alone or in combination of two or more at any ratio.

Examples of the negative electrode active material having at least one atom selected from the specific metal elements include simple metal of any one specific metal element, alloys of two or more specific metal elements, alloys of one or two or more specific metal elements and one or two or more other metal elements, compounds containing one or two or more specific metal elements, and composite compounds such as oxides, carbides, nitrides, silicides, sulfides, and phosphides of the compounds. The use of such a simple metal, alloy, or metal compound as the negative electrode active material can provide a high-capacity battery.

Examples thereof further include compounds in which any of the above composite compounds are complexly bonded with several elements such as simple metals, alloys, and nonmetal elements. Specifically, in the case of silicon or tin, for example, an alloy of this element and a metal that does not serve as a negative electrode can be used. In the case of tin, for example, a composite compound including a combination of 5 or 6 elements, including tin, a metal (excluding silicon) that serves as a negative electrode, a metal that does not serve as a negative electrode, and a nonmetal element, can be used.

Specific examples thereof include simple Si, $SiB_4$, $SiB_6$, $Mg_2Si$, $Ni_2Si$, $TiSi_2$, $MoSi_2$, $CoSi_2$, $NiSi_2$, $CaSi_2$, $CrSi_2$, $Cu_6Si$, $FeSi_2$, $MnSi_2$, $NbSi_2$, $TaSi_2$, $VSi_2$, $WSi_2$, $ZnSi_2$, SiC, $Si_3N_4$, $Si_2N_2O$, SiOv ($0 < v \leq 2$), LiSiO, simple tin, $SnSiO_3$, LiSnO, $Mg_2Sn$, and SnOw ($0 < w \leq 2$) .

Examples thereof further include composite materials of Si or Sn used as a first constitutional element, and second and third constitutional elements. The second constitutional element is at least one selected from cobalt, iron, magnesium, titanium, vanadium, chromium, manganese, nickel, copper, zinc, gallium, and zirconium, for example. The third constitutional element is at least one selected from boron, carbon, aluminum, and phosphorus, for example.

To achieve a high battery capacity and excellent battery performance, the metal material is preferably simple silicon or tin (which may contain trace impurities), SiOv ($0 < v \leq 2$), SnOw ($0 \leq w \leq 2$), a Si-Co-C composite material, a Si-Ni-C composite material, a Sn-Co-C composite material, or a Sn-Ni-C composite material.

The lithium-containing metal complex oxide material to be used as the negative electrode active material may be any material that can occlude and release lithium. To achieve good high-current-density charge and discharge performance, materials containing titanium and lithium are preferred, lithium-containing metal complex oxide materials containing titanium are more preferred, and complex oxides of lithium and titanium (hereinafter, abbreviated as "lithium titanium complex oxides") are still more preferred. In other words, use of a spinel-structured lithium titanium complex oxide contained in the negative electrode active material for electrolyte batteries is particularly preferred because such a compound can markedly reduce the output resistance.

Preferred examples of the lithium titanium complex oxides include compounds of formula (O):

$$Li_xTi_yM_zO_4 \qquad (O)$$

wherein M is at least one element selected from Na, K, Co, Al, Fe, Ti, Mg, Cr, Ga, Cu, Zn, and Nb.

To achieve a good balance of the battery performance, particularly preferred compositions of formula (O) are those satisfying one of the following:

$$\text{(i) } 1.2 \leq x \leq 1.4,\ 1.5 \leq y \leq 1.7,\ z = 0$$

$$\text{(ii) } 0.9 \leq x \leq 1.1,\ 1.9 \leq y \leq 2.1,\ z = 0$$

$$\text{(iii) } 0.7 \leq x \leq 0.9,\ 2.1 \leq y \leq 2.3,\ z = 0.$$

Particularly preferred representative composition of the compound is $Li_{4/3}Ti_{5/3}O_4$ corresponding to the compo-

sition (i), $Li_1Ti_2O_4$ corresponding to the composition (ii), and $Li_{4/5}Ti_{n/5}O_4$ corresponding to the composition (iii) . Preferred examples of the structure satisfying Z ≠ 0 include $Li_{4/3}Ti_{4/3}Al_{1/3}O_4$.

The negative electrode mixture preferably further contains a binder, a thickening agent, and a conductive material.

Examples of the binder include the same binders as those mentioned for the positive electrode. The proportion of the binder is preferably ≥ 0.1 mass%, more preferably ≥ 0.5 mass%, particularly preferably ≥ 0.6 mass%, while preferably ≤ 20 mass%, more preferably ≤ 15 mass%, still more preferably ≤ 10 mass%, particularly preferably ≤ 8 mass%, relative to the negative electrode active material. The binder at a proportion relative to the negative electrode active material exceeding the above range may contain an increased proportion of the binder which fails to contribute to the battery capacity, causing a low battery capacity. The binder at a proportion lower than the above range may cause lowered strength of the negative electrode.

In particular, in the case of using a rubbery polymer typified by SBR as a main component, the proportion of the binder is usually ≥ 0.1 mass%, preferably ≥ 0.5 mass%, more preferably ≥ 0.6 mass%, while usually ≤ 5 mass%, preferably ≤ 3 mass%, more preferably ≤ 2 mass%, relative to the negative electrode active material. In the case of using a fluoropolymer typified by polyvinylidene fluoride as a main component, the proportion of the binder is usually ≥ 1 mass%, preferably ≥ 2 mass%, more preferably ≥ 3 mass%, while usually ≤ 15 mass%, preferably ≤ 10 mass%, more preferably ≤ 8 mass%, relative to the negative electrode active material.

Examples of the thickening agent include the same thickening agents as those mentioned for the positive electrode. The proportion of the thickening agent is usually ≥ 0.1 mass%, preferably ≥ 0.5 mass%, still more preferably ≥ 0.6 mass%, while usually ≤ 5 mass%, preferably ≤ 3 mass%, still more preferably ≤ 2 mass%, relative to the negative electrode active material. The thickening agent at a proportion relative to the negative electrode active material below the range may cause significantly impaired easiness of application. The thickening agent at a proportion above the range may cause a small proportion of the negative electrode active material in the negative electrode active material layer, resulting in a low capacity of the battery and high resistance between the negative electrode active materials.

Examples of the conductive material of the negative electrode include metal materials such as copper and nickel; and carbon materials such as graphite and carbon black.

The solvent for forming slurry may be any solvent that can dissolve or disperse the negative electrode active material and the binder, and a thickening agent and a conductive material that are used as necessary. The slurryforming solvent may be an aqueous solvent or an organic solvent.

Examples of the aqueous solvent include water and alcohols. Examples of the organic solvent include N-methylpyrrolidone (NMP), dimethyl formamide, dimethyl acetamide, methyl ethyl ketone, cyclohexanone, methyl acetate, methyl acrylate, diethyl triamine, N,N-dimethyl aminopropyl amine, tetrahydrofuran (THF), toluene, acetone, diethyl ether, dimethyl acetamide, hexamethyl phospharamide, dimethyl sulfoxide, benzene, xylene, quinoline, pyridine, methyl naphthalene, and hexane.

Examples of the material of the current collector for negative electrodes include copper, nickel, and stainless steel. To easily process the material into a film and to minimize the cost, copper is preferred.

The current collector usually has a thickness of ≥ 1 μm, preferably ≥ 5 μm, while usually ≤ 100 μm, preferably ≤ 50 μm. Too thick a negative electrode current collector may cause an excessive reduction in capacity of the whole battery, whereas too thin a current collector may be difficult to handle.

The negative electrode may be produced by a usual method. An example of the production method is a method in which the negative electrode material is mixed with the aforementioned binder, thickening agent, conductive material, solvent, and other components to form a slurry-like mixture, and then this mixture is applied to a current collector, dried, and pressed so as to be densified. In the case of using an alloyed material, a thin film layer containing the above negative electrode active material (negative electrode active material layer) can be produced by e.g. vapor deposition, sputtering or plating.

The electrode formed from the negative electrode active material may have any structure. The negative electrode active material existing on the current collector preferably has a density of ≥ 1 $g·cm^{-3}$, more preferably ≥ 1.2 $g·cm^{-3}$, particularly preferably ≥ 1.3 $g·cm^{-3}$, while preferably ≤ 2.2 $g·cm^{-3}$, more preferably ≤ 2.1 $g·cm^{-3}$, still more preferably ≤ 2.0 $g·cm^{-3}$, particularly preferably ≤ 1.9 $g.cm^{-3}$. The negative electrode active material existing on the current collector having a density exceeding the above range may cause destruction of the negative electrode active material particles, resulting in a high initial irreversible capacity and poor high-current-density charge and discharge performance due to reduction in permeability of the electrolyte solution toward the vicinity of the interface between the current collector and the negative electrode active material. The negative electrode active material having a density below the above range may cause poor conductivity between the negative electrode active materials, a high battery resistance, and a low capacity per unit volume.

The thickness of the negative electrode plate is a design matter in accordance with the positive electrode plate to be used, and may be any value. The thickness of the mixture layer excluding the thickness of the base metal foil is usually ≥ 15 μm, preferably ≥ 20 μm, more preferably ≥ 30 μm, while usually ≤ 300 μm, preferably ≤ 280 μm, more

preferably ≤ 250 μm.

To the surface of the negative electrode plate may be attached a substance having a composition different from the negative electrode plate. Examples of the substance attached to the surface include oxides such as aluminum oxide, silicon oxide, titanium oxide, zirconium oxide, magnesium oxide, calcium oxide, boron oxide, antimony oxide, and bismuth oxide; sulfates such as lithium sulfate, sodium sulfate, potassium sulfate, magnesium sulfate, calcium sulfate, and aluminum sulfate; and carbonates such as lithium carbonate, calcium carbonate, and magnesium carbonate.

<Separator>

The lithium ion secondary battery preferably further includes a separator.

The separator may be formed from any known material and may have any known shape as long as the resulting separator is stable to the electrolyte solution and is excellent in a liquid-retaining ability. The separator is preferably in the form of a porous sheet or a nonwoven fabric which is formed from a material stable to the electrolyte solution of the invention, such as resin, glass fiber, or inorganic matter, and which has an excellent liquid-retaining ability.

Examples of the material of a resin or glass-fiber separator include polyolefins such as polyethylene and polypropylene, aromatic polyamide, polytetrafluoroethylene, polyether sulfone, and glass filters. These materials may be used alone or in any combination of two or more at any ratio, for example, in the form of a polypropylene/polyethylene bilayer film or a polypropylene/polyethylene/polypropylene trilayer film. To achieve good permeability of the electrolyte solution and a good shut-down effect, the separator is particularly preferably a porous sheet or a nonwoven fabric formed from a polyolefin such as polyethylene or polypropylene.

The separator may have any thickness, and the thickness is usually ≥ 1 μm, preferably ≥ 5 μm, more preferably ≥ 8 μm, while usually ≤ 50 μm, preferably ≤ 40 μm, more preferably ≤ 30 μm. The separator thinner than the above range may have poor insulation and mechanical strength. The separator thicker than the above range may not only have poor battery performance such as poor rate performance but also cause a low energy density of the whole electrolyte battery.

The separator which is a porous one such as a porous sheet or a nonwoven fabric may have any porosity. The porosity is usually ≥ 20%, preferably ≥ 35%, more preferably ≥ 45%, while usually ≤ 90%, preferably ≤ 85%, more preferably ≤ 75%. The separator having a porosity lower than the range tends to have high film resistance and cause poor rate performance. The separator having a porosity higher than the range tends to have low mechanical strength and poor insulation.

The separator may also have any average pore size. The average pore size is usually ≤ 0.5 μm, preferably ≤ 0.2 μm, while usually ≥ 0.05 μm. The separator having an average pore size exceeding the range may easily cause short circuits. The separator having an average pore size lower than the range may have high film resistance and poor rate performance.

Examples of the inorganic material include oxides such as alumina and silicon dioxide, nitrides such as aluminum nitride and silicon nitride, and sulfates such as barium sulfate and calcium sulfate. The inorganic material is in the form of particles or fibers.

The separator is in the form of a thin film such as a nonwoven fabric, a woven fabric, or a microporous film. The thin film favorably has a pore size of 0.01-1 μm and a thickness of 5-50 μm. Instead of the above separate thin film, the separator may have a structure in which a composite porous layer containing particles of the above inorganic material is formed on the surface of one or both of the positive and negative electrodes using a resin binder. For example, alumina particles having a 90% particle size of smaller than 1 μm are applied to the respective surfaces of the positive electrode with fluororesin used as a binder to form a porous layer.

<Battery design>

The electrode group may be either a laminated structure including the above positive and negative electrode plates with the above separator in between, or a wound structure including the above positive and negative electrode plates in spiral with the above separator in between. The proportion of the volume of the electrode group in the battery internal volume (hereinafter, referred to as an electrode group proportion) is usually ≥ 40%, preferably ≥ 50%, while usually ≤ 90%, preferably ≤ 80%.

The electrode group proportion lower than the above range may cause a low battery capacity. The electrode group proportion exceeding the above range may cause the battery to have small space for voids. Thus, if the battery temperature rises to high temperature, the components may swell and the liquid fraction of the electrolyte solution exhibits a high vapor pressure, so that the internal pressure rises. This may impair the battery performance such as charge and discharge repeatability and high-temperature storageability and actuate a gas-releasing valve for releasing the internal pressure toward the outside.

The current collecting structure may be any structure. To more effectively improve the high-current-density

charge and discharge performance by the electrolyte solution of the invention, the current collecting structure is preferably a structure which reduces the resistances at wiring portions and jointing portions. Such reduction in the internal resistance can particularly favorably lead to the effects of using the electrolyte solution of the invention.

In an electrode group having the layered structure, the metal core portions of the respective electrode layers are preferably bundled and welded to a terminal. If an electrode has a large area, the internal resistance is high. Thus, multiple terminals may preferably be formed in the electrode to reduce the resistance. In an electrode group having the wound structure, multiple lead structures may be disposed on each of the positive electrode and the negative electrode and bundled to a terminal. Thereby, the internal resistance can be reduced.

The external case may be made of any material that is stable to an electrolyte solution to be used. Specific examples thereof include metals such as nickel-plated steel plates, stainless steel, aluminum and aluminum alloys, and magnesium alloys, and a layered film (laminate film) of resin and aluminum foil. To reduce the weight, a metal such as aluminum or an aluminum alloy or a laminate film is favorably used.

External cases made of metal may have a sealed up structure formed by welding the metal by laser welding, resistance welding, or ultrasonic welding or a caulking structure using the metal via a resin gasket. External cases made of a laminate film may have a sealed up structure formed by hot melting the resin layers. To improve the sealability, a resin which is different from the resin of the laminate film may be disposed between the resin layers. Especially, in the case of forming a sealed up structure by hot melting the resin layers via current collecting terminals, metal and resin are to be bonded. Thus, the resin to be disposed between the resin layers is favorably a resin having a polar group or a modified resin having a polar group introduced thereinto.

The lithium ion secondary battery may have any shape, and examples thereof include cylindrical batteries, square batteries, laminated batteries, coin batteries, and large-size batteries. The shapes and the configurations of the positive electrode, the negative electrode, and the separator may be changed in accordance with the shape of the battery.

A module including the electrochemical device or secondary battery that includes the electrolyte solution of the invention is also one aspect of the invention.

The invention also relates to a secondary battery including the above electrolyte solution, wherein a positive electrode current collector and a portion in contact with the electrolyte solution among portions electrically coupled with the positive electrode current collector are formed from a valve metal or an alloy thereof. The secondary battery is preferably a lithium ion secondary battery. The structure of the secondary battery may be the same as the structure of the above lithium ion secondary battery, except that a valve metal or an alloy thereof is partially used.

Examples of the valve metal include aluminum, titanium, tantalum, and chromium. The positive electrode current collector is more preferably formed from aluminum or an alloy of aluminum.

For the secondary battery, a portion in contact with the electrolyte solution among portions electrically coupled with the positive electrode current collector is also preferably formed from a valve metal or an alloy thereof. In particular, a portion electrically coupled with the positive electrode current collector and in contact with the electrolyte solution of the external case of the battery and components such as leads and a safety valve accommodated in the external case of the battery is preferably formed from a valve metal or an alloy thereof. Stainless steel coated with a valve metal or an alloy thereof may also be used.

An example of the electrochemical device using the electrolyte solution of the invention is an electric double-layer capacitor.

In the electric double-layer capacitor, at least one of the positive electrode and the negative electrode is a polarizable electrode. Examples of the polarizable electrode and a non-polarizable electrode include the following electrodes specifically disclosed in JP-A-1997-007896.

The polarizable electrode mainly containing activated carbon preferably contains inactivated carbon having a large specific surface area and a conductive material, such as carbon black, providing electronic conductivity. The polarizable electrode can be formed by any of various methods. For example, a polarizable electrode including activated carbon and carbon black can be produced by mixing activated carbon powder, carbon black, and phenolic resin, pressmolding the mixture, and then sintering and activating the mixture in an inert gas atmosphere and water vapor atmosphere. Preferably, this polarizable electrode is bonded to a current collector using a conductive adhesive, for example.

Alternatively, a polarizable electrode can also be formed by kneading activated carbon powder, carbon black, and a binder in the presence of alcohol and forming the mixture into a sheet shape, and then drying the sheet. This binder may be polytetrafluoroethylene, for example. Alternatively, a polarizable electrode integrated with a current collector can be produced by mixing activated carbon powder, carbon black, a binder, and a solvent to form slurry, applying this slurry to metal foil of a current collector, and then drying the slurry.

The electric double-layer capacitor may have polarizable electrodes mainly containing activated carbon as the respective electrodes. Still, the electric double-layer capacitor may have a structure in which a non-polarizable electrode is used on one side. Examples of such a structure include a structure in which a positive electrode mainly containing an electrode active material such as a metal oxide is combined with a polarizable negative electrode mainly containing activated carbon; or a structure in which a negative electrode mainly containing a carbon material that can reversibly

occlude and release lithium ions or a negative electrode of lithium metal or lithium alloy is combined with a polarizable electrode mainly containing activated carbon.

In place of or in combination with activated carbon, any carbonaceous material such as carbon black, graphite, expanded graphite, porous carbon, carbon nanotube, carbon nanohorn, and Kethenblack may be used.

The non-polarizable electrode is preferably an electrode mainly containing a carbon material that can reversibly occlude and release lithium ions, with this carbon material made to occlude lithium ions in advance. In this case, the electrolyte used is a lithium salt. The electric double-layer capacitor having such a structure can achieve a much higher withstand voltage exceeding 4 V.

The solvent used in preparation of the slurry in the production of electrodes is preferably one that dissolves a binder. In accordance with the type of a binder, the solvent is appropriately selected from N-methylpyrrolidone, dimethyl formamide, toluene, xylene, isophorone, methyl ethyl ketone, ethyl acetate, methyl acetate, dimethyl phthalate, ethanol, methanol, butanol, and water.

Examples of the activated carbon used for the polarizable electrode include phenol resin-type activated carbon, coconut shell-type activated carbon, and petroleum coke-type activated carbon. To achieve a large capacity, petroleum coke-type activated carbon or phenol resin-type activated carbon is preferably used. Examples of methods of activating the activated carbon include steam activation and molten KOH activation. To achieve a larger capacity, activated carbon prepared by molten KOH activation is preferably used.

Preferred examples of the conductive agent used for the polarizable electrode include carbon black, Ketjenblack, acetylene black, natural graphite, artificial graphite, metal fiber, conductive titanium oxide, and ruthenium oxide. To achieve good conductivity (i.e., low internal resistance), and because too large an amount thereof may lead to a decreased capacity of the product, the amount of the conductive agent such as carbon black used for the polarizable electrode is preferably 1-50 mass% in the sum of the amounts of the activated carbon and the conductive agent.

To provide an electric double-layer capacitor having a large capacity and a low internal resistance, the activated carbon used for the polarizable electrode preferably has an average particle size of $\leq 20\ \mu m$ and a specific surface area of 1500-3000 $m^2/g$. Preferred examples of the carbon material for providing an electrode mainly containing a carbon material that can reversibly occlude and release lithium ions include natural graphite, artificial graphite, graphitized mesocarbon microsphere, graphitized whisker, vapor-grown carbon fiber, sintered furfuryl alcohol resin, and sintered novolak resin.

The current collector may be any chemically and electrochemically corrosion-resistant one. Preferred examples of the current collector used for the polarizable electrode mainly containing activated carbon include stainless steel, aluminum, titanium, and tantalum. Particularly preferred materials in terms of the characteristics and cost of the resulting electric double-layer capacitor are stainless steel and aluminum. Preferred examples of the current collector used for the electrode mainly containing a carbon material that can reversibly occlude and release lithium ions include stainless steel, copper, and nickel.

Examples of methods of allowing the carbon material that can reversibly occlude and release lithium ions to occlude lithium ions in advance include: (1) a method of mixing powdery lithium to a carbon material that can reversibly occlude and release lithium ions; (2) a method of placing lithium foil on an electrode including a carbon material that can reversibly occlude and release lithium ions and a binder so as to bring the lithium foil to be in electrical contact with the electrode, immersing this electrode in an electrolyte solution containing a lithium salt dissolved therein so as to ionize the lithium, and allowing the carbon material to take in the resulting lithium ions; and (3) a method of placing an electrode including a carbon material that can reversibly occlude and release lithium ions and a binder on a minus side and placing a lithium metal on a plus side, immersing the electrodes in an electrolyte solution containing a lithium salt as an electrolyte, and supplying a current so that the carbon material is allowed to electrochemically take in the ionized lithium.

Examples of known electric double-layer capacitors include wound electric double-layer capacitors, laminated electric double-layer capacitors, and coin-type electric double-layer capacitors. The electric double-layer capacitor of the invention may also be any of these types.

For example, a wound electric double-layer capacitor is assembled by winding a positive electrode and a negative electrode each of which includes a laminate (electrode) of a current collector and an electrode layer, and a separator in between to provide a wound element, putting this wound element in a case made of aluminum, for example, filling the case with an electrolyte solution, preferably a non-aqueous electrolyte solution, and sealing the case with a rubber sealant.

A separator formed from a conventionally known material and having a conventionally known structure can be used even in the invention. Examples thereof include polyethylene porous membranes, and nonwoven fabric of polypropylene fiber, glass fiber, or cellulose fiber.

In accordance with any known method, the capacitor may be prepared in the form of a laminated electric double-layer capacitor in which sheet-like positive and negative electrodes are stacked with an electrolyte solution and a separator in between or a coin-type electric double-layer capacitor in which a positive electrode and a negative electrode are fixed by a gasket with an electrolyte solution and a separator in between.

As mentioned above, the electrolyte solution of the invention can favorably provide a secondary battery having a small IV resistance value (internal resistance) and excellent cycle performance, and a module and electric double-layer capacitor including such a secondary battery.

EXAMPLES

The invention will be described with reference to, but not limited to, examples.

Experiment 1 (Evaluation of 4.2 V grade lithium battery)

Electrolyte solutions shown in Table 1 were prepared as follows and lithium ion secondary batteries were produced using the resulting electrolyte solutions. The IV resistance of each battery was evaluated.

(Preparation of electrolyte solution)

An acyclic carbonate and a cyclic carbonate were mixed in a ratio shown in Table 1 under dry argon atmosphere. To this solution were added dried additives 1 and 2 in amounts shown in Table 1, and dried $LiPF_6$ was further added so as to be a concentration of 1.0 mol/L. Thereby, a non-aqueous electrolyte solution was obtained. The amounts of the additives 1 and 2 blended were expressed by mass% relative to the acyclic carbonate and the cyclic carbonate.

The compounds in the table are as follows.

Acyclic carbonates

b: ethyl methyl carbonate
d: $CF_3CH_2OCOOCH_3$

Cyclic carbonates

EC: ethylene carbonate
FEC: 4-fluoro-1,3-dioxolan-2-one

Additives 1 (Compounds X)

F: $C_2H_5OSO_3Li$
J: $(CH_3)_2NSO_3Li$
K: $(C_2H_5)_2NSO_3Li$

Additives 2 (organosilicon compounds)

L: tris(trimethylsilyl) phosphate
M: tris(trimethylsilyl) phosphite
O: trimethylsilyl fluoride

(Production of negative electrode)

Powder of artificial graphite used as a negative electrode active material, an aqueous dispersion of sodium carboxymethyl cellulose (concentration of sodium carboxymethyl cellulose: 1 mass%) used as a thickening agent, and an aqueous dispersion of styrene-butadiene rubber (concentration of styrene-butadiene rubber: 50 mass%) used as a binder were mixed in an aqueous solvent to prepare a negative electrode mixture slurry. The solid content ratio of the negative electrode active material, the thickening agent, and the binder was 97.6/1.2/1.2 (mass% ratio). The slurry was

uniformly applied to 20-μm-thick copper foil, followed by drying, and then the workpiece was compression-molded with a press. Thereby, a negative electrode was prepared.

(Production of positive electrode)

$LiCoO_2$ used as a positive electrode active material, acetylene black used as a conductive material, and a dispersion of polyvinylidene fluoride (PVdF) in N-methyl-2-pyrrolidone used as a binder were mixed to prepare a positive electrode mixture slurry. The solid content ratio of the positive electrode active material, the conductive material, and the binder was 92/3/5 (mass% ratio). The positive electrode mixture slurry was uniformly applied to a 20-μm-thick current collector made of aluminum foil, followed by drying, and then the workpiece was compression-molded with a press. Thereby, a positive electrode was prepared.

(Production of lithium ion secondary battery)

The negative electrode prepared above, a polyethylene separator, and the positive electrode prepared above were stacked in the given order to provide a battery element.

A bag made of a laminate film was prepared in which an aluminum sheet (thickness: 40 μm) was coated with a resin layer on each side. The above battery element was placed in the bag in such a manner that the terminals of the positive electrode and negative electrode stuck out of the bag. One of the electrolyte solutions shown in Tables 1 and 2 was poured into the bag and the bag was vacuum sealed. Thereby, a sheet-like lithium ion secondary battery was produced.

(Charge and discharge treatment)

The battery produced was subjected to charge and discharge treatment. Specifically, the battery was subjected to constant current charge (CC charge) at a charge rate (constant current) of 0.2 C until the voltage between the positive and negative electrode terminals reached 4.2 V in an environment at 25°C, and then subjected to constant voltage charge (CV charge) until the current value reached 0.02 C. The battery continued to undergo CC discharge at a discharge rate of 0.2 C until the voltage between the positive and negative electrode terminals reached 3.0 V. All the batteries were confirmed to achieve the discharge capacity equal to the theoretical capacity.

<IV resistance>

The battery was subjected to CC charge at 25°C until the state of charge (SOC) reached 20%. Each battery adjusted to an SOC of 20% was subjected to CC discharge to 3 V at a discharge rate of 10 C, and the voltage drops during 10 seconds from the discharge were measured. The values (V) of the voltage drops measured were divided by the corresponding current value to calculate the IV resistances (Ω), and the average thereof was defined as the IV resistance.

The IV resistances in Table 1 are each expressed as a relative ratio to the IV resistance, which is taken as 100, of the battery of Comparative Example 1.

[Table 1]

| | Acrylic carbonate | | Cyclic carbonate | | Additive 1 | | Additive 2 | | IV resistance (%) |
|---|---|---|---|---|---|---|---|---|---|
| | Component | Proportion (Vol%) | Component | Proportion (Vol%) | Component | Proportion (Vol%) | Component | Proportion (Vol%) | |
| Example 1 | (b) | 70 | EC | 30 | (J) | 0.5 | (L) | 0.5 | 80 |
| Example 2 | (b) | 70 | EC | 30 | (K) | 0.5 | (L) | 0.5 | 81 |
| Example 3 | (b) | 70 | EC | 30 | (K) | 0.5 | (M) | 0.5 | 85 |
| Example 4 | (b) | 70 | EC | 30 | (J) | 0.5 | (O) | 0.5 | 82 |
| Example 5 | (b) | 70 | EC | 30 | (K) | 0.5 | (O) | 0.5 | 83 |
| Comp. Ex. 1 | (b) | 70 | EC | 30 | - | - | - | - | 100 |
| Comp. Ex. 2 | (b) | 70 | EC | 30 | (F) | 0.5 | - | - | 95 |
| Comp. Ex. 3 | (b) | 70 | EC | 30 | - | - | (L) | 0.5 | 93 |
| Comp. Ex. 4 | (b) | 70 | EC | 30 | - | - | (O) | 0.5 | 96 |

Experiment 2 (Evaluation of 4.9 V grade lithium battery)

Electrolyte solutions shown in Table 2were prepared as follows and lithium ion secondary batteries were produced using the resulting electrolyte solutions. The IV resistance of each battery was evaluated.

(Preparation of electrolyte solution)

An acyclic carbonate(s) and a cyclic carbonate were mixed in a ratio shown in Table 2under dry argon atmosphere. To this solution were added dried additives 1 and 2 in amounts shown in Table 2, and dried $LiPF_6$ was further added so as to be a concentration of 1.0 mol/L. Thereby, a non-aqueous electrolyte solution was obtained. The amounts of the additives 1 and 2 blended were expressed by mass% relative to the acyclic carbonate(s) and the cyclic carbonate.
The components in Table 2 are as mentioned above.

(Production of negative electrode)

Powder of artificial graphite used as a negative electrode active material, an aqueous dispersion of sodium carboxymethyl cellulose (concentration of sodium carboxymethyl cellulose: 1 mass%) used as a thickening agent, and an aqueous dispersion of styrene-butadiene rubber (concentration of styrene-butadiene rubber: 50 mass%) used as a binder were mixed in an aqueous solvent to prepare a negative electrode mixture slurry. The solid content ratio of the negative electrode active material, the thickening agent, and the binder was 97.6/1.2/1.2 (mass% ratio). The slurry was uniformly applied to 20-μm-thick copper foil, followed by drying, and then the workpiece was compression-molded with a press. Thereby, a negative electrode was prepared.

(Production of positive electrode)

$LiNi_{0.5}Mn_{1.5}O_4$ used as a positive electrode active material, acetylene black used as a conductive material, and a dispersion of polyvinylidene fluoride (PVdF) in N-methyl-2-pyrrolidone used as a binder were mixed to prepare a positive electrode mixture slurry. The solid content ratio of the positive electrode active material, the conductive material, and the binder was 92/3/5 (mass% ratio). The positive electrode mixture slurry was uniformly applied to a 20-μm-thick current collector made of aluminum foil, followed by drying, and then the workpiece was compression-molded with a press. Thereby, a positive electrode was prepared.

(Production of lithium ion secondary battery)

The negative electrode prepared above, a polyethylene separator, and the positive electrode prepared above were stacked in the given order to provide a battery element.
A bag made of a laminate film was prepared in which an aluminum sheet (thickness: 40 μm) was coated with a resin layer on each side. The above battery element was placed in the bag in such a manner that the terminals of the positive electrode and negative electrode stuck out of the bag. One of the electrolyte solutions shown in Tables 3 and 4 was poured into the bag and the bag was vacuum sealed. Thereby, a sheet-like lithium ion secondary battery was produced.

(Charge and discharge treatment)

The battery produced was subjected to charge and discharge treatment. Specifically, the battery was subjected to constant current charge (CC charge) at a charge rate (constant current) of 0.2 C until the voltage between the positive and negative electrode terminals reached 4.9 V in an environment at 25°C, and then subjected to constant voltage charge (CV charge) until the current value reached 0.02 C. The battery continued to undergo CC discharge at a discharge rate of 0.2 C until the voltage between the positive and negative electrode terminals reached 3.0 V. All the batteries were confirmed to achieve the discharge capacity equal to the theoretical capacity.

<IV resistance>

The battery was subjected to CC charge at 25°C until the SOC reached 20%. Each battery adjusted to an SOC of 20% was subjected to CC discharge to 3 V at a discharge rate of 10 C, and the voltage drops during 10 seconds from the discharge were measured. The values (V) of the voltage drops measured were divided by the corresponding current value to calculate the IV resistances (Ω), and the average thereof was defined as the IV resistance.
The IV resistances in Table 2 are each expressed as a relative ratio to the IV resistance, which is taken as 100, of the battery of Comparative Example 5.

[Table 2]

| | Acrylic carbonate | | Cyclic carbonate | | Additive 1 | | Additive 2 | | IV resistance (%) |
|---|---|---|---|---|---|---|---|---|---|
| | Component | Proportion (Vol%) | Component | Proportion (Vol%) | Component | Proportion (Vol%) | Component | Proportion (Vol%) | |
| Example 6 | (d) | 70 | FEC | 30 | (J) | 0.5 | (L) | 0.5 | 84 |
| Example 7 | (d) | 70 | FEC | 30 | (K) | 0.5 | (L) | 0.5 | 85 |
| Example 8 | (d) | 70 | FEC | 30 | (K) | 0.5 | (M) | 0.5 | 90 |
| Example 9 | (d) | 70 | FEC | 30 | (J) | 0.5 | (O) | 0.5 | 85 |
| Example 10 | (d) | 70 | FEC | 30 | (K) | 0.5 | (O) | 0.5 | 86 |
| Example 11 | (d) | 70 | FEC | 30 | (K) | 0.5 | (O) | 0.5 | 90 |
| Comp. Ex. 5 | (d) | 70 | FEC | 30 | - | - | - | - | 100 |
| Comp. Ex. 6 | (d) | 70 | FEC | 30 | (F) | 0.5 | - | - | 97 |
| Comp. Ex. 7 | (d) | 70 | FEC | 30 | - | - | (L) | 0.5 | 96 |
| Comp. Ex. 8 | (d) | 70 | FEC | 30 | - | - | (O) | 0.5 | 98 |

INDUSTRIAL APPLICABILITY

The electrolyte solution of the invention can be suitably used as an electrolyte solution for electrochemical devices such as lithium ion secondary batteries.

## Claims

1. An electrolyte solution comprising:

   (i) a solvent;
   (ii) an electrolyte salt;
   (iii) at least one compound (X) of formula (2):

   $$R^{21}R^{22}N\text{-}SO_3M^{21} \qquad (2)$$

   wherein

   $M^{21}$ is at least one of Li, Na, K, and Cs; and
   $R^{21}$ and $R^{22}$ each independently are $C_{1-6}$-alkyl, $C_{2-6}$-alkenyl, or $C_{2-6}$-alkynyl, each linear or branched; $C_{3-6}$-cycloalkyl; $C_{3-6}$-cycloalkenyl or $C_{3-6}$-alkylsilyl; and
   the alkyl, cycloalkyl and alkylsilyl group each optionally contain a halogen atom substituting a hydrogen atom binding to a carbon atom, and optionally have a cyclic structure; and
   $R^{21}$ and $R^{22}$ optionally bind to each other to form a cyclic structure; and

   (iv) at least one organosilicon compound of any of the formulae (3) and (4):

   $$(R^{31})_{n31}\text{-}M^{31}\text{-}O\text{-}SiR^{32}R^{33}R^{34} \qquad (3)$$

   $$R^{41}R^{42}R^{43}\text{-}Si\text{-}F \qquad (4)$$

   wherein

   $M^{31}$ is a metal atom, P, B or P=O;
   $R^{31}$ each independently is $C_{1-11}$-alkyloxy, silyloxy or $C_{1-11}$-alkylsilyloxy;
   $n^{31}$ is the number of $R^{31}$s binding to $M^{31}$, and is the oxidation number of $M^{31}$ minus 1 or the oxidation number of $M^{31}$ minus 3;
   $R^{32}$-$R^{34}$ each independently are $C_{1-11}$-alkyl, $C_{2-11}$-alkenyl, $C_{1-11}$-alkyloxy or $C_{6-11}$-aryl, and
   $R^{41}$-$R^{43}$ each independently are $C_{1-11}$-alkyl, $C_{2-11}$-alkenyl, $C_{1-11}$-alkyloxy or $C_{6-11}$-aryl.

2. The electrolyte solution of claim 1, wherein in formula (2), $R^{21}$ and $R^{22}$ each independently are linear or branched $C_{1-6}$-alkyl or $C_{3-6}$-cycloalkyl; and $M^{21}$ is Li.

3. The electrolyte solution of claim 1 or 2, which contains 0.001-5 mass% of the compound (X) relative to the solvent.

4. The electrolyte solution of any of claims 1-3, which contains 0.001-5 mass% of the organosilicon compound relative to the solvent.

5. The electrolyte solution of any of claims 1-4, wherein the solvent contains at least one of a non-fluorinated saturated cyclic carbonate, a fluorinated saturated cyclic carbonate, a non-fluorinated acyclic carbonate, and a fluorinated acyclic carbonate.

6. The electrolyte solution of any of claims 1-5, wherein the electrolyte salt is at least one of $LiPF_6$, $LiBF_4$, $LiSbF_6$, $LiTaF_6$, $LiPO_2F_2$, $FSO_3Li$, $CF_3SO_3Li$, $LiN(FSO_2)_2$, $LiN(FSO_2)(CF_3SO_2)$, $LiN(CF_3SO_2)_2$, $LiN(C_2F_5SO_2)_2$, lithium cyclic 1,2-perfluoroethane disulfonyl imide, lithium cyclic 1,3-perfluoropropane disulfonyl imide, $LiC(FSO_2)_3$, $LiC(CF_3SO_2)_3$, $LiC(C_2F_5SO_2)_3$, lithium bisoxalatoborate, lithium difluorooxalatoborate, lithium tetrafluorooxalatophosphate, lithium difluorobisoxalatophosphate, $LiBF_3CF_3$, $LiBF_3C_2F_5$, $LiPF_3(CF_3)_3$, and $LiPF_3(C_2F_5)_3$.

**7.** An electrochemical device comprising the electrolyte solution of any of claims 1-6.

**8.** A secondary battery comprising the electrolyte solution of any of claims 1-6.

**9.** The secondary battery of claim 8, wherein a positive electrode current collector and a portion in contact with the electrolyte solution among portions electrically coupled with the positive electrode current collector are formed from a valve metal or an alloy thereof.

**10.** A module comprising the electrochemical device of claim 7 or the secondary battery of claim 8 or 9.

**Patentansprüche**

**1.** Elektrolytlösung, umfassend:

(i) ein Lösungsmittel;
(ii) ein Elektrolytsalz;
(iii) mindestens eine Verbindung (X) der Formel (2):

$$R^{21}R^{22}N\text{-}SO_3M^{21} \qquad (2)$$

worin

$M^{21}$ mindestens eines von Li, Na, K und Cs ist; und
$R^{21}$ und $R^{22}$ jeweils unabhängig $C_{1-6}$-Alkyl, $C_{2-6}$-Alkenyl oder $C_{2-6}$-Alkinyl, jeweils linear oder verzweigt; $C_{3-6}$-Cycloalkyl; $C_{3-6}$-Cycloalkenyl oder $C_{3-6}$-Alkylsilyl sind; und
die Alkyl-, Cycloalkyl- und Alkylsilylgruppe jeweils optional ein Halogenatom enthält, das ein Wasserstoffatom ersetzt, das an ein Kohlenstoffatom bindet, und optional eine cyclische Struktur aufweist; und
$R^{21}$ und $R^{22}$ optional aneinander binden, um eine cyclische Struktur zu bilden; und

(iv) mindestens eine Organosiliziumverbindung gemäß irgendeiner der Formeln (3) und (4):

$$(R^{31})_{n31}\text{-}M^{31}\text{-O-SiR}^{32}R^{33}R^{34} \qquad (3)$$

$$R^{41}R^{42}R^{43}\text{-Si-F} \qquad (4)$$

worin

$M^{31}$ ein Metallatom, P, B oder P=O ist;
$R^{31}$ jeweils unabhängig $C_{1-11}$-Alkyloxy, Silyloxy oder $C_{1-11}$-Alkylsilyloxy ist;
$n^{31}$ die Zahl der $R^{31}$, die an $M^{31}$ binden, ist, und die Oxidationszahl von $M^{31}$ minus 1 oder die Oxidationszahl von $M^{31}$ minus 3 ist;
$R^{32}$-$R^{34}$ jeweils unabhängig $C_{1-11}$-Alkyl, $C_{2-11}$-Alkenyl, $C_{1-11}$-Alkyloxy oder $C_{6-11}$-Aryl sind, und
$R^{41}$-$R^{43}$ jeweils unabhängig $C_{1-11}$-Alkyl, $C_{2-11}$-Alkenyl, $C_{1-11}$-Alkyloxy oder $C_{6-11}$-Aryl sind.

**2.** Elektrolytlösung gemäß Anspruch 1, worin in der Formel (2) $R^{21}$ und $R^{22}$ jeweils unabhängig lineares oder verzweigtes $C_{1-6}$-Alkyl oder $C_{3-6}$-Cycloalkyl sind; und $M^{21}$ Li ist.

**3.** Elektrolytlösung gemäß Anspruch 1 oder 2, die 0,001-5 Masse-% der Verbindung (X) enthält, relativ zum Lösungsmittel.

**4.** Elektrolytlösung gemäß irgendeinem der Ansprüche 1-3, die 0,001-5 Masse-% der Organosiliziumverbindung enthält, relativ zum Lösungsmittel.

**5.** Elektrolytlösung gemäß irgendeinem der Ansprüche 1-4, worin das Lösungsmittel mindestens eines von einem nicht-fluorierten gesättigten cyclischen Carbonat, einem fluorierten gesättigten cyclischen Carbonat, einem nicht-fluorierten acyclischen Carbonat und einem fluorierten acyclischen Carbonat enthält.

6. Elektrolytlösung gemäß irgendeinem der Ansprüche 1-5, worin das Elektrolytsalz mindestens eines von $LiPF_6$, $LiBF_4$, $LiSbF_6$, $LiTaF_6$, $LiPO_2F_2$, $FSO_3Li$, $CF_3SO_3Li$, $LiN(FSO_2)_2$, $LiN(FSO_2)$ $(CF_3SO_2)$, $LiN(CF_3SO_2)_2$, $LiN(C_2F_5SO_2)_2$, cyclischem Lithium-1,2-perfluorethandisulfonylimid, cyclischem Lithium-1,3-perfluorpropandisulfonylimid, LiC $(FSO_2)_3$, LiC $(CF_3SO_2)_3$, $LiC(C_2F_5SO_2)_3$, Lithiumbisoxalatoborat, Lithiumdifluoroxalatoborat, Lithiumtetrafluoroxalatophosphat, Lithiumdifluorbisoxalatophosphat, $LiBF_3CF_3$, $LiBF_3C_2F_5$, $LiPF_3(CF_3)_3$ und $LiPF_3(C_2F_5)_3$ ist.

7. Elektrochemische Vorrichtung, umfassend die Elektrolytlösung gemäß irgendeinem der Ansprüche 1-6.

8. Sekundärbatterie, umfassend die Elektrolytlösung gemäß irgendeinem der Ansprüche 1-6.

9. Sekundärbatterie gemäß Anspruch 8, worin ein positiver Elektroden-Stromabnehmer und ein Teil in Kontakt mit der Elektrolytlösung unter den Teilen, die elektrisch mit dem positiven Elektroden-Stromabnehmer verbunden sind, aus einem Ventilmetall oder einer Legierung hiervon gebildet sind.

10. Modul, umfassend die elektrochemische Vorrichtung gemäß Anspruch 7 oder die Sekundärbatterie gemäß Anspruch 8 oder 9.

## Revendications

1. Solution d'électrolyte comprenant :

(i) un solvant ;
(ii) un sel d'électrolyte ;
(iii) au moins un composé (X) de formule (2) :

$$R^{21}R^{22}N\text{-}SO_3M^{21} \qquad (2)$$

dans laquelle

$M^{21}$ est au moins un de Li, Na, K et Cs ; et
$R^{21}$ et $R^{22}$ sont chacun indépendamment $C_{1-6}$-alkyle, $C_{2-6}$-alcényle ou $C_{2-6}$-alcynyle, chacun linéaire ou ramifié ; $C_{3-6}$-cycloalkyle ; $C_{3-6}$-cycloalcényle ou $C_{3-6}$-alkylsilyle ; et
les groupes alkyle, cycloalkyle et alkylsilyle contiennent chacun facultativement un atome d'halogène substituant un atome d'hydrogène se liant à un atome de carbone, et présentent facultativement une structure cyclique ; et
$R^{21}$ et $R^{22}$ se lient facultativement l'un à l'autre pour former une structure cyclique ; et

(iv) au moins un composé organosilicié de l'une quelconque des formules (3) et (4) :

$$(R^{31})_{n31}\text{-}M^{31}\text{-}O\text{-}SiR^{32}R^{33}R^{34} \qquad (3)$$

$$R^{41}R^{42}R^{43}\text{-}Si\text{-}F \qquad (4)$$

dans laquelle

$M^{31}$ est un atome de métal, P, B ou P=0;
$R^{31}$ chacun indépendamment est $C_{1-11}$-alkyloxy, silyloxy ou $C_{1-11}$-alkylsilyloxy ;
$n^{31}$ est le nombre de $R^{31}$ se liant à $M^{31}$, et est le nombre d'oxydation de $M^{31}$ moins 1ou le nombre d'oxydation de $M^{31}$ moins 3 ;
$R^{32}$-$R^{34}$ sont chacun indépendamment $C_{1-11}$-alkyle, $C_{2-11}$-alcényle, $C_{1-11}$-alkyloxy ou $C_{6-11}$-aryle, et
$R^{41}$-$R^{43}$ sont chacun indépendamment $C_{1-11}$-alkyle, $C_{2-11}$-alcényle, $C_{1-11}$-alkyloxy ou $C_{6-11}$-aryle.

2. Solution d'électrolyte selon la revendication 1, dans laquelle dans la formule (2), $R^{21}$ et $R^{22}$ sont chacun indépendamment $C_{1-6}$-alkyle ou $C_{3-6}$-cycloalkyle linéaire ou ramifié ; et $M^{21}$ est Li.

3. Solution d'électrolyte selon la revendication 1 ou 2, qui contient 0,001-5 % en masse du composé (X) par rapport

au solvant.

4. Solution d'électrolyte selon l'une quelconque des revendications 1-3, qui contient 0,001-5 % en masse du composé organosilicié par rapport au solvant.

5. Solution d'électrolyte selon l'une quelconque des revendications 1-4, dans laquelle le solvant contient au moins un d'un carbonate cyclique saturé non fluoré, d'un carbonate cyclique saturé fluoré, d'un carbonate acyclique non fluoré et d'un carbonate acyclique fluoré.

6. Solution d'électrolyte selon l'une quelconque des revendications 1-5, dans laquelle le sel d'électrolyte est au moins un de $LiPF_6$, $LiBF_4$ $LiSbF_6$, $LiTaF_6$, $LiPO_2F_2$, $FSO_3Li$, $CF_3SO_3Li$, $LiN(FSO_2)_2$, $LiN(FSO_2)(CF_3SO_2)$ , $LiN(CF_3SO_2)_2$, $LiN(C_2F_5SO_2)_2$, lithium cyclique 1,2-perfluoroéthane disulfonyl imide, lithium cyclique 1,3-perfluoropropane disulfonyl imide, $LiC(FSO_2)_3$, $LiC(CF_3SO_2)_3$, $LiC(C_2F_5SO_2)_3$, bisoxalatoborate de lithium, difluorooxalatoborate de lithium, tétrafluorooxalatophosphate de lithium, difluorobisoxalatophosphate de lithium, $LiBF_3CF_3$, $LiBF_3C_2F_5$, $LiPF_3(CF_3)_3$, et $LiPF_3(C_2F_5)_3$.

7. Dispositif électrochimique comprenant la solution d'électrolyte selon l'une quelconque des revendications 1-6.

8. Batterie secondaire comprenant la solution d'électrolyte selon l'une quelconque des revendications 1-6.

9. Batterie secondaire selon la revendication 8, dans laquelle un collecteur de courant d'électrode positive et une portion en contact avec la solution d'électrolyte parmi des portions couplées électriquement avec le collecteur de courant d'électrode positive sont formés à partir d'un métal de vanne ou d'un alliage de celui-ci.

10. Module comprenant le dispositif électrochimique selon la revendication 7 ou la batterie secondaire selon la revendication 8 ou 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2312685 A
- JP 5274563 B
- JP 4568920 B
- JP 2004087459 A
- KR 20160002313 A
- EP 2983233 A
- US 2015200423 A
- EP 1926172 A
- WO 2013191475 A
- JP 2015088492 A
- JP 2007173113 A
- CN 101867065 A
- WO 2016009923 A
- JP 2015072856 A
- JP 2016035820 A
- JP 11233141 A
- JP 11283669 A
- JP 8222270 A
- JP 2002100405 A
- JP 4506726 T
- JP 8507407 T
- JP 10294131 A
- JP 11035765 A
- JP 11086630 A
- JP 2004301934 A
- JP 9007896 A